(19) Europäisches Patentamt
European Patent Office
Office européen des brevets

(11) EP 3 879 391 B1

(12) # EUROPEAN PATENT SPECIFICATION

(45) Date of publication and mention of the grant of the patent:
**27.12.2023 Bulletin 2023/52**

(21) Application number: **18942439.3**

(22) Date of filing: **07.12.2018**

(51) International Patent Classification (IPC):
***G06F 3/04845*** *(2022.01)* ***G06F 3/04883*** *(2022.01)*
***G06F 3/0481*** *(2022.01)* ***G06T 11/20*** *(2006.01)*
***G06T 11/60*** *(2006.01)* ***G06F 3/16*** *(2006.01)*
***G06T 19/00*** *(2011.01)*

(52) Cooperative Patent Classification (CPC):
**G06F 3/04845; G06F 3/04883; G06F 3/167; G06T 11/203; G06T 11/60; G06T 19/006;**
G06F 2203/04802; G06T 2219/004

(86) International application number:
**PCT/JP2018/045174**

(87) International publication number:
**WO 2020/115909 (11.06.2020 Gazette 2020/24)**

(54) **INPUT DISPLAY CONTROL DEVICE, INPUT DISPLAY CONTROL METHOD, AND INPUT DISPLAY SYSTEM**

EINGABEANZEIGESTEUERUNGSVORRICHTUNG, EINGABEANZEIGESTEUERUNGSVERFAHREN UND EINGABEANZEIGESYSTEM

DISPOSITIF DE COMMANDE D'AFFICHAGE D'ENTRÉE, PROCÉDÉ DE COMMANDE D'AFFICHAGE D'ENTRÉE ET SYSTÈME D'AFFICHAGE D'ENTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.09.2021 Bulletin 2021/37**

(73) Proprietor: **Mitsubishi Electric Corporation**
**Tokyo 100-8310 (JP)**

(72) Inventors:
- **KITAMURA, Kenshiro**
**Tokyo 100-8310 (JP)**
- **HIRAI, Masato**
**Tokyo 100-8310 (JP)**
- **MAMADA, Daichi**
**Tokyo 100-8310 (JP)**
- **AKIYAMA, Takumi**
**Tokyo 100-8310 (JP)**
- **IMAISHI, Akiko**
**Tokyo 100-8310 (JP)**
- **TOGO, Rin**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
**EP-A1- 3 407 173** **WO-A1-2016/203792**
**WO-A1-2017/098822** **WO-A1-2017/138076**
**JP-A- 2007 133 885** **JP-A- 2009 025 420**
**JP-A- 2009 205 304** **JP-A- 2013 020 444**
**JP-A- 2015 022 377** **JP-A- 2016 184 294**
**JP-A- 2016 206 603** **JP-A- 2017 010 480**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to an input display control device, an input display control method, and an input display system for displaying arranged character objects.

### BACKGROUND ART

The following Patent Literature 1 discloses an input display control device for generating display information for displaying a character string along a line such as a curve.

It further discloses a display control unit which determines, in a case of determining that a part of a character string acquired by a character string acquiring unit cannot be displayed along a curve indicated by curve information acquired by a curve information acquiring unit because the length of the curve is short, a shape of an extended part of the curve from a shape of the curve indicated by the curve information acquired by the curve information acquiring unit, extends the curve, and generates display information for displaying the part of the character string along the curve of the extended part.

Patent Literature 2 discloses an information processing device, comprising a display control unit which carries out a first process of displaying a virtual object so as to be superimposed upon real space on a real object which is detected and treated as a reference position, or a second process of displaying a virtual object so as to be superimposed upon real space with a real object which is detected not treated as a reference position.

### CITATION LIST

### PATENT LITERATURE

Patent Literature 1: WO 2017/138076 A, EP 3 407 173 A1

Patent Literature 2: WO 2016/203792 A1

### SUMMARY OF INVENTION

### TECHNICAL PROBLEM

The input display control device disclosed in Patent Literature 1 generates display information for displaying a character string in a display area of a display. However, when the input display control device disclosed in Patent Literature 1 is applied to an input display control device for arranging character objects included in a character string in a three-dimensional space, arrangement of the character objects is limited to the display area of the display. Since the display area of the display has a size limitation, there has been a problem that all the character objects included in the character string cannot be arranged.

The present invention has been made to solve the above problem, and it is an object to obtain an input display control device, an input display control method, and an input display system capable of avoiding a situation in which all the character objects included in the character string cannot be arranged.

### SOLUTION TO PROBLEM

An input display control device according to the present invention is defined in independent claim 1. A corresponding method according to the present invention is defined in independent claim 9.

### ADVANTAGEOUS EFFECTS OF INVENTION

According to the present invention, the input display control device is configured so that when some of the character objects for the characters included in the character string acquired by the character string acquisition unit protrude out of the display area of the display since the length of the character string acquired by the character string acquisition unit is long, the display control unit generates the display information for arranging some of the character objects for the characters in the surrounding three-dimensional space of the three-dimensional space indicated by the display area along a curve obtained by extending a curve indicated by curve information acquired by the curve information acquisition unit to non-display area. Thus, the input display control device according to the present invention can avoid the situation in which all the character objects included in the character string cannot be arranged.

BRIEF DESCRIPTION OF DRAWINGS

FIG. 1 is a configuration diagram illustrating an input display system including an input display control device according to a first embodiment.
FIG. 2 is a hardware configuration diagram of the input display system according to the first embodiment.
FIG. 3 is a hardware configuration diagram of a computer when the input display system is implemented by software, firmware, or the like.
FIG. 4 is a flowchart (part 1) illustrating an input display control method that is processing of the input display system according to the first embodiment.
FIG. 5 is a flowchart (part 2) illustrating the input display control method that is the processing of the input display system according to the first embodiment.
FIG. 6 is an explanatory diagram illustrating a character attribute table stored in a character management DB 2.
FIGS. 7A to 7D are explanatory diagrams illustrating an object existing in a three-dimensional space and an image output from an image acquisition unit 71.
FIG. 8 is an explanatory diagram illustrating display processing when a curve image is output before a character string indicating a voice recognition result is output.
FIG. 9 is an explanatory diagram illustrating display processing when a character string indicating a voice recognition result is output before a curve image is output.
FIG. 10A is an explanatory diagram illustrating that if the length of the curve is longer than the length of the character string, all character objects included in the character string can be displayed superimposed on the curve image.
FIG. 10B is an explanatory diagram illustrating that if the length of the curve is shorter than the length of the character string, some character objects included in the character string cannot be displayed superimposed on the curve image.
FIG. 11A is an explanatory diagram illustrating position coordinates of the start end and the terminal end of a curve used for calculation of a length L of the curve when the shape of the curve is a straight line.
FIG. 11B is an explanatory diagram illustrating position coordinates of the start end, the terminal end, and an intermediate point of a curve used for the calculation of the length L of the curve when the shape of the curve is curved.
FIG. 12 is an explanatory diagram illustrating processing of an extension curve shape determining unit 14 of a display control unit 12.
FIG. 13A is an explanatory diagram illustrating an example in which the shape of an extension curve is the shape of the tangent at the terminal end of an original curve.
FIG. 13B is an explanatory diagram illustrating an example in which the shape of the extension curve has the same curvature as that of the shape of an original curve.
FIG. 13C is an explanatory diagram illustrating an example in which the shape of the extension curve is a wavy line shape having the same period as that of the shape of an original curve.
FIG. 13D is an explanatory diagram illustrating an example in which the shape of the extension curve is an arc shape.
FIG. 14 is an explanatory diagram illustrating processing of a curve extension unit 17 of the display control unit 12.
FIG. 15 is an explanatory diagram illustrating an example in which a display processing unit 18 cannot cause a display 32 to display some of character objects included in a character string.
FIG. 16 is an explanatory diagram illustrating a display area of the display 32 and a non-display area that is an area surrounding the display area.
FIG. 17 is a flowchart illustrating processing after the display processing unit 18 disposes a part of the character string in the non-display area.
FIG. 18 is an explanatory diagram illustrating the character string of which selection is accepted by a character string selection unit 18a.
FIG. 19A is an explanatory diagram illustrating movement of the character string in which the character objects are displayed superimposed on a curve image.
FIG. 19B is an explanatory diagram illustrating an example in which the curve image is illustrated as an underline of the character objects.
FIG. 20 is an explanatory diagram illustrating discarding of the character string acquired by a character string acquisition unit 10.
FIG. 21 is an explanatory diagram illustrating an example in which a user uses an AR marker.
FIG. 22 is an explanatory diagram illustrating an example in which character objects arranged in the non-display area is displayed on the display 32 due to that the character string is subjected to automatic line breaking at the right end of the display area on the display 32.

FIG. 23 is a flowchart illustrating an input display control method that is processing of an input display system according to a second embodiment.

FIG. 24 is an explanatory diagram illustrating an example in which character objects arranged in the non-display area is displayed on the display 32 due to that the character string is subjected to automatic line breaking at the right end of the display area on the display 32.

FIG. 25 is an explanatory diagram illustrating an example in which the display control unit 12 moves all objects in which some of character objects for characters are arranged in the non-display area to the display area, and causes all the character objects included in the character string to be displayed on the display 32.

FIG. 26 is a flowchart illustrating an input display control method that is processing of an input display system according to a third embodiment.

FIG. 27 is an explanatory diagram illustrating an example in which the display control unit 12 moves an entire character string in which some of character objects are arranged in the non-display area, and then makes a line break in the character string, thereby causing all the character objects included in the character string to be displayed in the display area of the display 32.

FIG. 28 is an explanatory diagram illustrating an example in which the display control unit 12 causes all character objects included in a character string to be displayed on the display 32 by reducing the sizes of the character objects.

FIG. 29 is a flowchart illustrating an input display control method that is processing of an input display system according to a fourth embodiment.

FIG. 30 is an explanatory diagram illustrating an example in which the display control unit 12 increases the sizes of character objects within a range in which the length of the character string is not longer than the length of the curve.

FIG. 31 is a configuration diagram illustrating an input display system including an input display control device according to a fifth embodiment.

FIG. 32 is an explanatory diagram illustrating a table indicating a correspondence between "character string" and "simple character string".

FIG. 33 is a flowchart illustrating an input display control method that is processing of an input display system according to the fifth embodiment.

FIG. 34 is an explanatory diagram illustrating an example in which the display control unit 12 causes character objects included in a character string after replacement processing to be displayed.

FIG. 35 is an explanatory diagram illustrating an example in which the display control unit 12 causes character objects included in a character string to be displayed along curves indicated by each of a plurality of pieces of curve information.

FIG. 36 is a flowchart illustrating an input display control method that is processing of an input display system according to a sixth embodiment.

FIG. 37 is an explanatory diagram illustrating an example in which when a user performs operation of drawing a plurality of lines and then the user makes an utterance, the display control unit 12 causes character objects included in a character string to be displayed along curves indicated by each of a plurality of pieces of curve information.

FIG. 38 is an explanatory diagram illustrating an example in which when a user makes an utterance and then the user performs operation of drawing a plurality of lines, the display control unit 12 causes character objects included in a character string to be displayed along curves indicated by each of a plurality of pieces of curve information.

FIG. 39 is a configuration diagram illustrating an input display system including an input display control device according to an eighth embodiment.

FIG. 40 is a hardware configuration diagram of the input display system according to the eighth embodiment.

FIG. 41 is an explanatory diagram illustrating an example of display processing in a display processing unit 53 of a display control unit 51.

FIG. 42 is an explanatory diagram illustrating an example of display processing in the display processing unit 53 of the display control unit 51.

FIG. 43 is an explanatory diagram illustrating an example of displaying character objects included in a character string indicating a translation result.

FIG. 44 is an explanatory diagram illustrating an example of displaying character objects included in a character string indicating a translation result.

FIG. 45 is an explanatory diagram illustrating an example of display processing in the display processing unit 53 when the display 32 includes two face-to-face screens.

FIG. 46 is an explanatory diagram illustrating an example of displaying character objects included in a character string indicating a translation result.

FIG. 47 is a configuration diagram illustrating an input display system including an input display control device according to a ninth embodiment.

FIG. 48 is a hardware configuration diagram of the input display system according to the ninth embodiment.

FIG. 49 is an explanatory diagram illustrating an example of processing of displaying character objects included in a character string indicating a character recognition result.

FIG. 50 is a configuration diagram illustrating an input display system including an input display control device according to a tenth embodiment.

FIG. 51 is an explanatory diagram illustrating an example of processing of displaying character objects included in a character string indicating a translation result.

DESCRIPTION OF EMBODIMENTS

Hereinafter, to explain the present invention in more detail, embodiments for carrying out the present invention will be described with reference to the accompanying drawings.

First Embodiment.

FIG. 1 is a configuration diagram illustrating an input display system including an input display control device according to a first embodiment, and FIG. 2 is a hardware configuration diagram of the input display system according to the first embodiment.

In FIGS. 1 and 2, it is assumed that an input display control device 100 uses a touch panel as a pointing device 21. However, this is only an example, and the input display control device 100 can use a joystick, a pointing stick, a touch pad, a stylus, a data glove, a trackball, a pen tablet, a mouse, a light pen, a joy pad, and the like.

Furthermore, a camera 70 is attached as an imaging device to the housing of the input display control device 100. The camera 70 images a three-dimensional space, and outputs an image that is a result of imaging the three-dimensional space to the input display control device 100.

An image acquisition unit 71 is implemented by, for example, an input interface circuit 27 illustrated in FIG. 2. The input interface circuit 27 includes, for example, a LAN port or a universal serial bus (USB) port.

The image acquisition unit 71 acquires an image of the three-dimensional space imaged by the camera 70, and outputs the acquired image to the display control unit 12. Furthermore, the image acquisition unit 71 recognizes a position where the input display control device 100 exists on the basis of the image of the three-dimensional space imaged by the camera 70, and outputs position information indicating the position to each of the display control unit 12 and the locus determination unit 4.

An operation acceptance unit 1 is implemented by, for example, the pointing device 21 illustrated in FIG. 2. The operation acceptance unit 1 accepts operation of drawing a line as user's operation, and outputs a content of the accepted operation to a locus determination unit 4.

A character management database (DB) 2 is implemented by, for example, a storage processing circuit 22 illustrated in FIG. 2. The character management DB 2 stores a character attribute table indicating a correspondence between a character type, a character size, a character height, and a character width.

A character management unit 3 is implemented by, for example, a character management processing circuit 23 illustrated in FIG. 2. In the character management unit 3, a size of a character to be displayed on a display 32 is set in advance. The character management unit 3 refers to the character attribute table stored in the character management DB 2, outputs character attribute information indicating the character height corresponding to the character size to the locus determination unit 4, and outputs character attribute information indicating the character height and the character width corresponding to the character size to the input display control device 100.

The locus determination unit 4 is implemented by, for example, an image generation processing circuit 24 illustrated in FIG. 2. The locus determination unit 4 determines a locus of the line drawn by the operation accepted by the operation acceptance unit 1. The locus determination unit 4 outputs, to the input display control device 100, curve information indicating a three-dimensional curve generated on the basis of the position information of the input display control device 100 and determined information, as information indicating the length, shape, and the like of a curve representing the locus. The three-dimensional curve includes a line of any shape, such as a straight line or a bent line.

Furthermore, the locus determination unit 4 generates a curve image that is an image of the three-dimensional curve representing the locus, and outputs the curve image to the input display control device 100. The curve image is included in the curve information, and the locus determination unit 4 outputs the curve information including the curve image to the input display control device 100.

A line width of the curve image corresponds to the character height indicated by the character attribute information output from the character management unit 3.

A character string recognition unit 5 includes a voice detection unit 6, a voice recognition dictionary DB 7, and a voice recognition unit 8. The character string recognition unit 5 outputs a character string indicating a voice recognition result to the input display control device 100 as a character string to be displayed.

The voice detection unit 6 is implemented by, for example, a microphone 25 illustrated in FIG. 2. The voice detection unit 6 detects user's voice and outputs the detected voice to the voice recognition unit 8.

The voice recognition dictionary DB 7 is implemented by, for example, the storage processing circuit 22 illustrated in FIG. 2. The voice recognition dictionary DB 7 includes, for example, an acoustic model in which acoustic characteristics of phonemes that are small units of human utterance are described, and a recognition dictionary in which words for voice recognition are described.

The voice recognition unit 8 is implemented by, for example, a voice recognition processing circuit 26 illustrated in FIG. 2. The voice recognition unit 8 is equipped with a voice recognition engine for recognizing the voice detected by the voice detection unit 6.

The voice recognition unit 8 analyzes the voice detected by the voice detection unit 6, calculates acoustic characteristics of the voice, and searches for a word having acoustic characteristics closest to the calculated acoustic characteristics from the words described in the recognition dictionary of the voice recognition dictionary DB 7. The voice recognition unit 8 outputs a character string indicating the word obtained by the search to the input display control device 100 as the character string indicating the voice recognition result.

The character string recognition unit 5 illustrated in FIG. 1 mounts the voice recognition dictionary DB 7 and the voice recognition unit 8. However, this is only an example, and instead of the voice recognition dictionary DB 7 and the voice recognition unit 8, the character string recognition unit 5 may be used in which a data transmission and reception unit is mounted.

The data transmission and reception unit is a network communication device such as a network card capable of transmission and reception of data with a voice recognition server (not illustrated) via a communication path such as the Internet or a local area network (LAN). The data transmission and reception unit transmits data indicating the voice detected by the voice detection unit 6 to the voice recognition server.

The voice recognition server is equipped with a voice recognition engine for recognizing voice, and when receiving the data indicating the voice transmitted from the data transmission and reception unit, recognizes the voice indicated by the received data and transmits the character string indicating the voice recognition result to the data transmission and reception unit.

When the data transmission and reception unit receives the character string indicating the voice recognition result transmitted from the voice recognition server, the data transmission and reception unit outputs the character string to the input display control device 100.

The input display control device 100 includes a curve information acquisition unit 9, a character string acquisition unit 10, a character attribute information acquisition unit 11, the display control unit 12, and the image acquisition unit 71.

The curve information acquisition unit 9 is implemented by, for example, the input interface circuit 27 illustrated in FIG. 2. The curve information acquisition unit 9 acquires the curve information output from the locus determination unit 4, and outputs the acquired curve information to each of a length comparison unit 13, a shape determination processing unit 16, a curve extension unit 17, and a display processing unit 18.

The character string acquisition unit 10 is implemented by, for example, the input interface circuit 27 illustrated in FIG. 2. The character string acquisition unit 10 acquires the character string output from the voice recognition unit 8, and outputs the acquired character string to each of the length comparison unit 13 and the display processing unit 18.

The character attribute information acquisition unit 11 is implemented by, for example, the input interface circuit 27 illustrated in FIG. 2. The character attribute information acquisition unit 11 acquires the character attribute information output from the character management unit 3, and outputs the acquired character attribute information to the length comparison unit 13.

The display control unit 12 includes the length comparison unit 13, an extension curve shape determining unit 14, the curve extension unit 17, and the display processing unit 18.

The display control unit 12 generates display information for superimposing, on the image acquired by the image acquisition unit 71, character objects that are objects indicating characters included in the character string acquired by the character string acquisition unit 10, along the curve indicated by the curve information acquired by the locus determination unit 4. The display control unit 12 causes the image on which the character objects are superimposed to be displayed in a display area of the display 32 in accordance with the generated display information. The display information generated by the display control unit 12 is information for displaying the character objects for the characters included in the character string acquired by the character string acquisition unit 10 superimposed on the curve image included in the curve information acquired by the curve information acquisition unit 9.

Hereinafter, to simplify the notation of the description, "character objects indicating characters included in a character string" may be described as "character objects included in a character string".

Upon determining that it is not possible to display character objects for some characters included in the character string acquired by the character string acquisition unit 10 along the curve since the length of the curve indicated by the curve information acquired by the curve information acquisition unit 9 is short, the display control unit 12 determines the shape of an extension portion of the curve from the shape of the curve, and extends the curve. The display control unit 12 generates display information for superimposing the character objects for some characters on the image along the curve of the extension portion, and causes the display 32 to display the character objects for some characters in accordance with the generated display information.

Furthermore, when some of the character objects for the characters included in the character string acquired by the character string acquisition unit 10 protrude out of the display area of the display 32 since the length of the character string acquired by the character string acquisition unit 10 is long, the display control unit 12 arranges some of the character objects for the characters in a surrounding three-dimensional space of a three-dimensional space indicated by the display area of the display 32.

Hereinafter, the three-dimensional space indicated by the display area of the display 32 is referred to as "display area", and the surrounding three-dimensional space of the three-dimensional space indicated by the display area of the display 32 is referred to as "non-display area".

For example, when the user performs swiping on the display 32 toward the right end of the display area of the display 32, if the right end of the curve indicated by the curve information is on the left side of the right end of the display area of the display 32, the display control unit 12 can extends the curve toward the right of the display area.

However, when the length of the curve is shorter than the length of the entire character string even if the curve is extended to the right end of the display area, some of the character objects included in the character string may protrude out of the display area of the display 32. In this case, the right end of the curve indicated by the curve information is further extended to the non-display area, and the character string is disposed along the extended curve.

Moreover, the display control unit 12 displays the character objects included in the character string superimposed on the curve image, and then generates display information for erasing display of the curve image, and erases the curve image in accordance with the generated display information.

The length comparison unit 13 is implemented by, for example, a length comparison processing circuit 28 illustrated in FIG. 2. The length comparison unit 13 compares the length of the curve indicated by the curve information acquired by the curve information acquisition unit 9 with the length of the character string acquired by the character string acquisition unit 10, and outputs a comparison result between the length of the curve and the length of the character string to each of the shape determination processing unit 16 and the curve extension unit 17.

The extension curve shape determining unit 14 is implemented by, for example, a shape determination processing circuit 29 illustrated in FIG. 2, and includes a curve storage unit 15 and the shape determination processing unit 16. If the comparison result by the length comparison unit 13 indicates that the length of the curve is shorter than the length of the character string, the extension curve shape determining unit 14 determines the shape of the extension curve that is the curve of the extension portion from the shape of the curve indicated by the curve information acquired by the curve information acquisition unit 9.

The curve storage unit 15 stores a plurality of curves having different shapes in advance. Note that, the plurality of curves stored in the curve storage unit 15 includes not only a two-dimensional curve but also a three-dimensional curve having a depth.

The shape determination processing unit 16 collates the shapes of the plurality of curves stored in the curve storage unit 15 with the shape of the curve indicated by the curve information acquired by the curve information acquisition unit 9, and selects the shape of the curve corresponding to the curve indicated by the curve information acquired by the curve information acquisition unit 9 from the shapes of the plurality of curves stored in the curve storage unit 15. The shape determination processing unit 16 determines the shape of the extension curve from the shape of the curve selected, and outputs the shape-determined extension curve to the curve extension unit 17.

The curve extension unit 17 is implemented by, for example, a curve extension processing circuit 30 illustrated in FIG. 2. If the comparison result by the length comparison unit 13 indicates that the length of the curve is shorter than the length of the character string, the curve extension unit 17 adds the extension curve whose shape is determined by the extension curve shape determining unit 14 to the terminal end of the curve indicated by the curve information acquired by the curve information acquisition unit 9.

The display processing unit 18 is implemented by, for example, the display processing circuit 31 illustrated in FIG. 2. The display processing unit 18 includes a character string selection unit 18a, an outline addition unit 18b, and a character string moving unit 18c.

The display processing unit 18 generates display information for superimposing, on the image acquired by the image acquisition unit 71, the character objects included in the character string acquired by the character string acquisition unit 10, along the curve indicated by the curve information acquired by the curve information acquisition unit 9. The display processing unit 18 causes the display 32 to display the image on which the character objects are superimposed in accordance with the generated display information.

Furthermore, if the comparison result by the length comparison unit 13 indicates that the length of the curve is shorter than the length of the character string, the display processing unit 18 generates display information for superimposing, on the image, some of character objects for characters that cannot be displayed superimposed on the curve image along the extension curve added by the curve extension unit 17. The display processing unit 18 causes the display 32 to display the image on which some of the character objects for the characters are superimposed in accordance with the generated display information.

Moreover, after causing the display 32 to display the character objects included in the character string, the display processing unit 18 generates display information for erasing the display of the curve image, and causes the display 32 to erase the curve image in accordance with the generated display information.

The character string selection unit 18a is implemented by, for example, the pointing device 21 illustrated in FIG. 2. The character string selection unit 18a accepts selection of the character string in which some of the character objects for the characters are arranged in the surrounding three-dimensional space. For example, when a user's contact time with respect to a character object superimposed on the image, among the character objects included in the character string in which some of the character objects for the characters are arranged in the surrounding three-dimensional space, is longer than a threshold value, the character string selection unit 18a accepts selection of the character string. The threshold value may be a value stored in an internal memory of the character string selection unit 18a, or may be a value externally given.

The outline addition unit 18b is implemented by, for example, the image generation processing circuit 24 illustrated in FIG. 2. The outline addition unit 18b adds, to contours of character objects included in the character string of which selection is accepted by the character string selection unit 18a, outlines of a color different from that of the character objects.

The character string moving unit 18c is implemented by, for example, the pointing device 21 illustrated in FIG. 2. The character string moving unit 18c accepts movement of the character string of which selection is accepted by the character string selection unit 18a.

When the character string moving unit 18c accepts movement for arranging all the character objects included in the character string of which selection is accepted by the character string selection unit 18a in the three-dimensional space indicated by the image acquired by the image acquisition unit 71, the display processing unit 18 generates display information for superimposing, on the image, character objects for all the characters included in the character string.

Furthermore, when the character string moving unit 18c accepts movement for moving all the character objects included in the character string of which selection is accepted by the character string selection unit 18a outside the image acquired by the image acquisition unit 71, the display processing unit 18 discards the character string acquired by the character string acquisition unit 10.

A character string temporary save unit 19 is implemented by, for example, the storage processing circuit 22 illustrated in FIG. 2. The character string temporary save unit 19 temporarily saves the character string acquired by the character string acquisition unit 10.

In FIG. 1, each of the operation acceptance unit 1, the character management DB 2, the character management unit 3, the locus determination unit 4, the character string recognition unit 5, the curve information acquisition unit 9, the character string acquisition unit 10, the character attribute information acquisition unit 11, the length comparison unit 13, the extension curve shape determining unit 14, the curve extension unit 17, the display processing unit 18, the character string temporary save unit 19, and the image acquisition unit 71 that are the components of the input display system, is implemented by dedicated hardware as illustrated in FIG. 2. That is, the input display system is assumed to be one implemented by the pointing device 21, the storage processing circuit 22, the character management processing circuit 23, the image generation processing circuit 24, the microphone 25, the voice recognition processing circuit 26, the input interface circuit 27, the length comparison processing circuit 28, the shape determination processing circuit 29, the curve extension processing circuit 30, the display processing circuit 31, and the display 32.

Here, examples of the storage processing circuit 22 include a nonvolatile or volatile semiconductor memory such as random access memory (RAM), read only memory (ROM), flash memory, erasable programmable read only memory (EPROM), and electrically erasable programmable read only memory (EEPROM); a magnetic disk, a flexible disk, an optical disk, a compact disk, a mini disk, a digital versatile disc (DVD), and the like.

Furthermore, examples of the character management processing circuit 23, the image generation processing circuit 24, the voice recognition processing circuit 26, the length comparison processing circuit 28, the shape determination processing circuit 29, the curve extension processing circuit 30, and the display processing circuit 3 1 include a single circuit, a composite circuit, a programmed processor, a parallel-programmed processor, an application specific integrated circuit (ASIC), a field-programmable gate array (FPGA), or a combination thereof.

Furthermore, the input display system is not limited to one in which the components each are implemented by dedicated hardware, and the input display system may be one implemented by software, firmware, or a combination of software and firmware.

Software or firmware is stored as a program in a memory of a computer. The computer means hardware for executing a program, and examples of the computer include a central processing unit (CPU), a central processing device, a processing device, an arithmetic device, a microprocessor, a microcomputer, a processor, a digital signal processor (DSP), and the like.

FIG. 3 is a hardware configuration diagram of the computer when the input display system is implemented by software, firmware, or the like.

When the input display system is implemented by software, firmware, or the like, the character management DB 2, the voice recognition dictionary DB 7, and the character string temporary save unit 19 are configured on a memory 41 of the computer. Furthermore, a program is stored in the memory 41 for causing the computer to execute processing procedures for the character management unit 3, the locus determination unit 4, the voice recognition unit 8, the curve information acquisition unit 9, the character string acquisition unit 10, the character attribute information acquisition unit 11, the length comparison unit 13, the extension curve shape determining unit 14, the curve extension unit 17, the display processing unit 18, and the image acquisition unit 71. Then, it is sufficient that a processor 42 executes the program stored in the memory 41.

FIG. 4 is a flowchart (part 1) illustrating an input display control method that is processing of the input display system according to the first embodiment. FIG. 5 is a flowchart (part 2) illustrating the input display control method that is the processing of the input display system according to the first embodiment.

Furthermore, FIG. 2 illustrates an example in which each of the components of the input display system is implemented by dedicated hardware, and FIG. 3 illustrates an example in which the input display system is implemented by software, firmware, or the like. However, this is only an example, and some components in the input display system may be implemented by dedicated hardware, and the remaining components may be implemented by software, firmware, or the like.

For example, it is possible to implement the operation acceptance unit 1 and the character string recognition unit 5 by dedicated hardware, and implement the character management DB 2, the character management unit 3, the locus determination unit 4, the input display control device 100, and the character string temporary save unit 19 by software, firmware, or the like. However, the combination of dedicated hardware and software is arbitrary.

Next, the operation of the input display system illustrated in FIG. 1. will be described
The camera 70 images a three-dimensional space, and outputs an image that is a result of imaging the three-dimensional space to the input display control device 100.

The image acquisition unit 71 acquires an image of the three-dimensional space output from the camera 70, and outputs the acquired image to the display control unit 12 (step ST1 in FIG. 4).

Furthermore, the image acquisition unit 71 measures, for example, each of distances to a plurality of objects existing in the image of the three-dimensional space. Any method may be used for measuring the distance to each object, and for example, a method can be used of measuring the distance to the object on the basis of the focal length of the camera 70, or infrared rays.

The image acquisition unit 71 recognizes a position in the three-dimensional space where the input display control device 100 exists on the basis of the distances to the plurality of objects, and outputs position information indicating the position to each of the display control unit 12 and the locus determination unit 4 (step ST2 in FIG. 4). Since the processing itself of recognizing the position in the three-dimensional space where the input display control device 100 exists on the basis of the distances to the plurality of objects is a known technique, detailed description thereof will be omitted.

FIG. 6 is an explanatory diagram illustrating the character attribute table stored in the character management DB 2.

In the character attribute table of FIG. 6, for example, the character height and character width corresponding to the character size are described for each character type. As the character type, Mincho typeface, Gothic typeface, and the like are conceivable.

The character type and character size of the character to be superimposed on the image are set in advance in the character management unit 3, and the character management unit 3 refers to the character attribute table stored in the character management DB 2 and outputs character attribute information indicating the character height corresponding to the character type and the character size to the locus determination unit 4. Furthermore, the character management unit 3 refers to the character attribute table stored in the character management DB 2 and outputs character attribute information indicating the character height and character width corresponding to the character type and character size to the character attribute information acquisition unit 11 of the input display control device 100 (step ST3 in FIG. 4).

For example, if the character type of the character set in advance is "A" and the character size is "10", character attribute information indicating that the character height is "5 mm" is output from the character management unit 3 to the locus determination unit 4. Furthermore, character attribute information indicating that the character height is "5 mm" and the character width is "5 mm" is output from the character management unit 3 to the input display control device 100.

Furthermore, if the character type of the character set in advance is "B" and the character size is "5", character attribute information indicating that the character height is "2 mm" is output from the character management unit 3 to the locus determination unit 4. Furthermore, character attribute information indicating that the character height is "2 mm" and the character width is "1.25 mm" is output from the character management unit 3 to the input display control device 100.

Upon receiving the character attribute information from the character management unit 3, the locus determination unit 4 sets the line width of a three-dimensional curve image to be generated to the line width corresponding to the character height indicated by the character attribute information (step ST4 in FIG. 4).

For example, when the character height indicated by the character attribute information is "10 mm", if the upper and lower margins of the character are set to "0.5 mm", the locus determination unit 4 calculates 10 + 0.5 + 0.5 = 11 (mm), and sets the line width of the curve image to "11 mm".

Here, the locus determination unit 4 provides margins at the upper and lower parts of the character, but the margins do not have to be provided, and the character height indicated by the character attribute information and the line width of the curve image may match without providing margins.

In the input display control device illustrated in FIG. 1, it is assumed that the pointing device 21 implementing the operation acceptance unit 1 is a touch panel. Thus, when the user performs operation of drawing a line on the touch panel by using one's finger or an input pen for the touch panel (in the case of step ST5: YES in FIG. 4), the operation acceptance unit 1 accepts the operation of drawing the line (step ST6 in FIG. 4). The operation acceptance unit 1 outputs a content of the accepted operation to the locus determination unit 4.

The content of the operation of drawing the line to be output is, for example, time-series data indicating a continuous change of coordinates of a position of the finger or coordinates of a position of the input pen in contact with the touch panel. Note that, the coordinates of the position are the position coordinates on the touch panel.

Upon receiving the content of the operation of drawing the line from the operation acceptance unit 1, the locus determination unit 4 determines the locus of the line drawn by the operation from the operation content (step ST7 in FIG. 4).

As described above, the content of the operation of drawing the line indicates the continuous change of the contact position with respect to the touch panel, so that it is possible to determine the locus of the drawn line by connecting the contact positions in the time series together.

Upon determining the locus of the drawn line, the locus determination unit 4 generates, as information indicating the length of the three-dimensional curve representing the locus, the depth and shape of the curve, and the like, curve information indicating the curve (step ST8 in FIG. 4).

The information indicating the depth of the curve is information regarding coordinates of a curve obtained by adding the depth length set in advance to the position in the three-dimensional space of the input display control device 100 indicated by the position information output from the image acquisition unit 71. When, for example, the three-dimensional curve image is to be disposed at a position at 2 cm from the display 32, the depth length set in advance is 2 cm. When the three-dimensional curve image is to be disposed at a position at 10 cm from the display 32, the depth length is 10 cm.

The line width of the three-dimensional curve image is the line width set in step ST4 in FIG. 4, and in the above example, the line width of the curve image is set to "11 mm", so that the locus determination unit 4 generates a curve image having a line width of "11 mm" (step ST6 in FIG. 4).

The locus determination unit 4 outputs three-dimensional curve information including the three-dimensional curve image to the curve information acquisition unit 9 of the input display control device 100.

When the voice detection unit 6 detects the user's voice (in the case of step ST9: YES in FIG. 4), the voice recognition unit 8 of the character string recognition unit 5 performs voice recognition processing using the voice recognition dictionary DB 7, thereby generating a character string indicating a voice recognition result (step ST10 in FIG. 4). The voice recognition unit 8 outputs the generated character string to the character string acquisition unit 10 of the input display control device 100.

Since the voice recognition processing itself by the voice recognition unit 8 is a known technique, detailed description thereof will be omitted, but for example, the following voice recognition method is conceivable.

[Voice recognition method]

The voice detected by the voice detection unit 6 is analyzed, acoustic characteristics of the voice are calculated, and search is performed for a word having acoustic characteristics closest to the calculated acoustic characteristics from the words described in the recognition dictionary of the voice recognition dictionary DB 7. Then, a character string indicating the word obtained by the search is output as a character string indicating a voice recognition result.

In the input display control device illustrated in FIG. 1, for convenience of explanation, it is assumed that the user utters "Let's go see the cherry blossoms when spring comes", and the voice recognition unit 8 outputs a character string indicating "Let's go see the cherry blossoms when spring comes".

When the three-dimensional curve information including the three-dimensional curve image is output from the locus determination unit 4, the input display control device 100 causes the three-dimensional curve image to be superimposed on the image output from the image acquisition unit 71. Furthermore, the input display control device 100 causes the character objects included in the character string output from the character string recognition unit 5 to be superimposed on the image.

Hereinafter, processing of the input display control device 100 will be specifically described.

FIGS. 7Ato 7D are explanatory diagrams illustrating an object existing in the three-dimensional space and an image output from the image acquisition unit 71.

FIG. 7A illustrates a state in which the object existing in the three-dimensional space is displayed on the display 32, and FIG. 7B illustrates a state of being in the middle of displaying a three-dimensional curve image. Furthermore, FIG. 7C illustrates a state in which the three-dimensional curve image and character objects are displayed on the display 32, and FIG. 7D illustrates a display result of the character objects.

FIG. 8 is an explanatory diagram illustrating display processing when a curve image is output before a character string indicating a voice recognition result is output.

FIG. 9 is an explanatory diagram illustrating display processing when a character string indicating a voice recognition result is output before a curve image is output.

FIGS. 10A and 10B are an explanatory diagram illustrating the character objects to be displayed superimposed on the curve image. FIG. 10A illustrates that if the length of the curve is longer than the length of the character string, all the character objects included in the character string can be displayed superimposed on the curve image. FIG. 10B illustrates that if the length of the curve is shorter than the length of the character string, some character objects included in the character string cannot be displayed superimposed on the curve image.

FIGS. 11A and 11B are an explanatory diagram illustrating processing of the length comparison unit 13 of the display control unit 12. FIG. 11A illustrates position coordinates of the start end and the terminal end of a curve used for calculation of a length L of the curve when the shape of the curve is a straight line. FIG. 11B illustrates position coordinates of the start end, the terminal end, and an intermediate point of a curve used for the calculation of the length L of the curve when the shape of the curve is curved.

FIG. 12 is an explanatory diagram illustrating processing of the extension curve shape determining unit 14 of the display control unit 12.

FIG. 13A is an explanatory diagram illustrating an example in which the shape of an extension curve is the shape of the tangent at the terminal end of an original curve, and FIG. 13B is an explanatory diagram illustrating an example in which the shape of the extension curve has the same curvature as that of the shape of an original curve.

FIG. 13C is an explanatory diagram illustrating an example in which the shape of the extension curve is a wavy line shape having the same period as that of the shape of an original curve, and FIG. 13D is an explanatory diagram illustrating an example in which the shape of the extension curve is an arc shape.

FIG. 14 is an explanatory diagram illustrating processing of the curve extension unit 17 of the display control unit 12.

When the curve information acquisition unit 9 acquires the three-dimensional curve information due to that the three-dimensional curve information is output from the locus determination unit 4 before the character string is output from the voice recognition unit 8 of the character string recognition unit 5 (in the case of step ST11: YES in FIG. 5), the display processing unit 18 of the display control unit 12 generates display information for superimposing the three-dimensional curve image on the image. The display processing unit 18 causes the display 32 to display the image on which the three-dimensional curve image is superimposed in accordance with the generated display information, as illustrated in FIG. 7B (step ST12 in FIG. 5).

FIG. 7B illustrates the state of being in the middle of displaying the three-dimensional curve image.

For simplicity of explanation, when the three-dimensional curve image is represented in two dimensions, the curve image displayed on the display 32 by the display processing unit 18 is as illustrated in step A of FIG. 8.

In the first embodiment, for convenience of explanation, it is assumed that the length of the curve is shorter than the length of the character string indicating the voice recognition result since the length of the line drawn by the user's operation is short.

Note that, when the display processing unit 18 causes the curve image to be displayed, the entire curve image may be displayed at the same time, but the curve image may be displayed by an animation in which the character string to be displayed later is sequentially displayed from the beginning side.

For example, as illustrated in step B of FIG. 8, when the user makes an utterance of "Let's go see the cherry blossoms when spring comes" and thus the character string indicating "Let's go see the cherry blossoms when spring comes" is output from the voice recognition unit 8, the character string acquisition unit 10 acquires the character string. The character string acquisition unit 10 outputs the acquired character string to the length comparison unit 13.

The character attribute information acquisition unit 11 acquires the character attribute information output from the character management unit 3 and outputs the character attribute information to the length comparison unit 13.

Upon receiving the character string indicating "Let's go see the cherry blossoms when spring comes" output from the character string acquisition unit 10, the length comparison unit 13 refers to the character width indicated by the character attribute information output from the character attribute information acquisition unit 11, and calculates the length of the character string (step ST13 in FIG. 5).

Here, the character string output from the voice recognition unit 8 is "Let's go see the cherry blossoms when spring comes", and the number of characters in the character string is 16. Thus, if the character width indicated by the character attribute information output from the character management unit 3 is, for example, "5 mm", the length of the character string is 80 mm as indicated in the following equation (1).

$$\text{Length of character string} = 5\ \text{mm} \times 16 = 80\ \text{mm} \qquad (1)$$

Next, the length comparison unit 13 calculates the length of the curve indicated by the curve information acquired by the curve information acquisition unit 9 (step ST14 in FIG. 5).

If the shape of the curve is a straight line as illustrated in FIG. 11A, the length L of the curve can be calculated from position coordinates (Xs, Ys) of the start end and position coordinates (Xe, Ye) of the terminal end of the curve as indicated in the following equation (2). In the case of the curve image displayed in step A of FIG. 8, the left end of the curve is the start end of the curve, and the right end of the curve is the terminal end of the curve. These position coordinates have the same unit as the unit for expressing the character width and the like. Here, mm is the unit.

$$L = \sqrt{(Xe - Xs)^2 + (Ye - Ys)^2} \qquad (2)$$

The equation (2) assumes that the curve is a two-dimensional curve for simplicity of explanation, but if the curve is a three-dimensional curve, the length L of the curve can be calculated by using Z coordinate positions of the start end and the terminal end of the curve.

The equation (2) indicates a calculation equation for the length L of the curve when the shape of the curve is a straight line. However, this is only an example, and for example, if the shape of the curve is a curve as illustrated in FIG. 11B, it is possible to calculate the length L of the curve by approximating the shape of the curve with straight lines by using the position coordinates (Xs, Ys) of the start end and the position coordinates (Xe, Ye) of the terminal end of the curve, and position coordinates (Xn, Yn) (n = 1, •••, N: N is an integer of greater than or equal to 1) of multiple intermediate points from the start end to the terminal end of the curve.

For example, when N = 2, the length L of the curve can be calculated from the position coordinates (Xs, Ys) of the start end, the position coordinates (X1, Y1) of the intermediate point, the position coordinates (X2, Y2) of the intermediate point, and the position coordinates (Xe, Ye) of the terminal end of the curve, as indicated in the following equation (3).

$$L = \sqrt{(X1 - Xs)^2 + (Y1 - Ys)^2} + \sqrt{(X2 - X1)^2 + (Y2 - Y1)^2} + \sqrt{(Xe - X2)^2 + (Ye - Y2)^2} \qquad (3)$$

In the equation (3), Xs < X1 < X2 < Xe, and Ys < Y1 < Y2 < Ye.

Although FIG. 11B illustrates an example of N = 2, it goes without saying that N may be set to greater than or equal to 3, and the position coordinates (Xn, Yn) of many intermediate points may be used to improve the approximation accuracy.

The equation (3) assumes that the curve is a two-dimensional curve for simplicity of explanation, but if the curve is a three-dimensional curve, the length L of the curve can be calculated by using Z coordinate positions of the start end, an intermediate point, and the terminal end of the curve. In this case, for the Z coordinate positions, Z coordinates can be used of the positions in the three-dimensional space of the input display control device 100.

Note that, when the user inputs the curve without moving the position in the three-dimensional space of the input display control device 100, the Z coordinates do not change, so the length L of the curve can be obtained by using the equation (3).

Upon calculating the length of the curve, the length comparison unit 13 compares the length of the curve with the length of the character string (step ST15 in FIG. 5). The length comparison unit 13 outputs the comparison result between the length of the curve and the length of the character string to each of the shape determination processing unit 16 and the curve extension unit 17.

If the comparison result by the length comparison unit 13 indicates that the length of the curve is shorter than the length of the character string (in the case of step ST16: YES in FIG. 5), the extension curve shape determining unit 14 determines the shape of the extension curve that is the curve of the extension portion, from the shape of the curve indicated by the curve information acquired by the curve information acquisition unit 9 (step ST17 in FIG. 5).

Hereinafter, processing of determining the shape of the extension curve by the extension curve shape determining unit 14 will be specifically described.

The shape determination processing unit 16 collates the shapes of the plurality of curves stored in the curve storage unit 15 with the shape of the curve indicated by the curve information acquired by the curve information acquisition unit 9.

By collating the shapes of the curves with each other, the shape determination processing unit 16 identifies a shape of a curve having the highest degree of match with the shape of the curve indicated by the curve information among the shapes of the plurality of curves stored in the curve storage unit 15, and selects the shape of the curve having the highest degree of match. Since the processing itself of collating the shapes of the curves with each other and identifying the shape of the curve having the highest degree of match is a known technique, detailed description thereof will be omitted.

Upon selecting the shape of the curve as illustrated in FIG. 12 from the shapes of the plurality of curves stored in the curve storage unit 15, the shape determination processing unit 16 determines the shape of the extension curve from the shape of the curve selected.

For example, if the lengths of the plurality of curves stored in the curve storage unit 15 are sufficiently longer than the curve representing the locus of the line drawn by the operation, a shape of a portion longer than the curve indicated by the curve information in the shape of the curve selected is determined as the shape of the extension curve.

In the example of FIG. 12, as a curve representing the locus of the line drawn by the operation, the curve representing the locus determined by the locus determination unit 4 is represented by a broken line. Furthermore, in the example of FIG. 12, the selected curve having the highest degree of match is represented by a solid line, and the shape of the extension portion of the curve represented by the broken line is the same as the shape of the curve represented by the solid line.

In the first embodiment, an example is described in which among the shapes of the plurality of curves stored in the curve storage unit 15, the shape of the curve having the highest degree of match with the shape of the curve representing the locus determined by the locus determination unit 4 is selected, and the shape of the extension curve is determined from the shape of the curve selected. However, this is only an example, and the shape of the extension curve that is the curve of the extension portion may be determined by another method.

For example, a method is conceivable such as calculating a change tendency and the like of the curvature of the shape of the curve representing the locus determined by the locus determination unit 4 and estimating the shape of the extension curve from the change tendency of the curvature.

FIGS. 13A to 13D illustrate examples of determining the shape of the extension curve, and in FIG. 13A, the shape of the tangent at the terminal end of the gently curved curve is the shape of the extension curve.

In FIG. 13B, since the curvature of the entire curve is constant, the curvature of the shape of the extension curve is the same as the curvature of the shape of the original curve that is a curve representing the locus determined by the locus determination unit 4.

In FIG. 13C, since the shape of the curve is a periodic wavy line shape, the shape of the extension curve is a wavy line shape having the same period as that of the original curve.

In FIG. 13D, since the vicinity of the terminal end of the curve is curved in an arc shape, the shape of the extension curve is an arc shape similar to that in the vicinity of the terminal end of the original curve.

When the extension curve shape determining unit 14 determines the shape of the extension curve, the curve extension unit 17 extends the curve by adding the extension curve to the terminal end of the curve indicated by the curve information acquired by the curve information acquisition unit 9 (step ST18 in FIG. 5).

In the example of FIG. 14, the length of the curve is 60 mm, the length of the character string is 80 mm, and the length of the curve is 20 mm shorter than the length of the character string, so the curve is extended by 20 mm.

When the curve extension unit 17 extends the curve, the display processing unit 18 generates display information for superimposing, on the image, "when spring comes" that are character objects that are not displayed since the curve is short, among character objects for multiple characters included in the character string, along the curve of the extension portion.

The display processing unit 18 causes the display 32 to display "when spring comes" that are the character objects that are not displayed since the curve is short, along the curve of the extension portion, in accordance with the generated display information, as illustrated in step D of FIG. 8 (step ST19 in FIG. 5). In step D of FIG. 8, the broken line represents the extension curve that is a curve of the extension portion.

Here, the display processing unit 18 causes the display 32 to display the character objects that are not displayed, along the extension curve added by the curve extension unit 17. However, this is only an example, and as illustrated in the right figure in step D of FIG. 8, the display processing unit 18 may cause the display 32 to display the curve image illustrating the extension curve, and display the character objects that are not displayed superimposed on the curve image.

In the example of step D in FIG. 8, the display processing unit 18 causes the display 32 to display the extension curve, but since the extension curve is a virtual line, the display processing unit 18 does not have to cause the display 32 to display the extension curve.

The display processing unit 18 records information on a position in the three-dimensional space of the character string indicating "Let's go see the cherry blossoms when spring comes" output from the character string acquisition unit 10 (step ST20 in FIG. 5).

The information on the position in the three-dimensional space of the character string is calculated on the basis of, for example, the curve information acquired by the curve information acquisition unit 9 and information of the extension portion extended by the curve extension unit 17. Since the processing itself of calculating the information on the position in the three-dimensional space of the character string is a known technique, detailed description thereof will be omitted.

By storing the information on the position in the three-dimensional space of the character string in this way, even if the input display control device 100 is moved and the position of the three-dimensional space indicated by the image acquired by the input image acquisition unit 71 changes, it is possible to fix a three-dimensional position of the character string, and dispose the character string in the three-dimensional space in a layout desired by the user.

Furthermore, by sharing the stored information on the position in the three-dimensional space of the character string with another input display control device 100, it is possible to dispose the same character string at the same position in the three-dimensional space by a plurality of the input display control devices 100. As a result, the character string disposed at the same position in the three-dimensional space can be shared among multiple users through the plurality of input display control devices 100.

Here, for example, when the user performs swiping on the display 32 toward the right end of the display area of the display 32, the right end of the curve indicated by the curve information is positioned at the right end of the display area of the display 32. In this case, the curve extension unit 17 extends the curve to the non-display area existing on the right side of the display area.

Then, the display processing unit 18 arranges some of character objects for characters included in the character string in the non-display area that is the surrounding three-dimensional space of the three-dimensional space indicated by the display area of the display 32, along the curve extended to the non-display area.

Descriptions will be given later of processing, by the display processing unit 18, of arranging some of the character objects for the characters in the non-display area, and processing after some of the character objects for the characters are arranged in the non-display area.

The display processing unit 18 causes the character objects for all the characters included in the character string to be displayed superimposed on the curve image, and then generates display information for erasing the curve image. The display processing unit 18 causes the display 32 to erase the curve image from the display 32 and display only the character objects included in the character string in accordance with the generated display information, as illustrated in step E of FIG. 8 (step ST21 in FIG. 5).

When causing the curve image to be erased, the display processing unit 18 may cause the entire curve image to be erased at the same time, but may cause the curve image to be erased by an animation in which the character string is erased in order from the beginning side.

Here, the display processing unit 18 displays the curve image, and the character objects for all the characters included in the character string in an overlapping manner, and then erases the curve image after a certain period of time. However, this is only an example, and the display processing unit 18 may erase the curve image immediately after completion of the display of the character objects included in the character string.

As illustrated in step A of FIG. 9, there is a case where the user makes an utterance before performing operation of drawing a line, and thus before the curve information including the curve image is output from the locus determination unit 4, the character string is output from the voice recognition unit 8 of the character string recognition unit 5, whereby the character string acquisition unit 10 acquires the character string.

When the character string is output from the character string acquisition unit 10 before the curve information including the curve image is output from the locus determination unit 4 (in the case of step ST11: NO in FIG. 5), the display processing unit 18 stores the output character string in the character string temporary save unit 19.

Upon storing the character string in the character string temporary save unit 19, the display processing unit 18 waits until the curve information is output from the locus determination unit 4 (in the case of step ST22: NO in FIG. 5).

After that, when the user starts the operation of drawing a line and the operation of drawing the line is completed, the curve information is output from the locus determination unit 4 to the display processing unit 18.

When the curve information is output from the locus determination unit 4 and thus the curve information is output from the curve information acquisition unit 9 (in the case of step ST22: YES in FIG. 5), the display processing unit 18 reads the character string stored in the character string temporary save unit 19. The display processing unit 18 generates display information for displaying the character objects included in the read character string superimposed on the curve image, and causes the character objects included in the character string to be displayed superimposed on the curve image in accordance with the generated display information, as illustrated in step B of FIG. 9. That is, the display processing unit 18 causes the curve image, and the character objects included in the character string to be displayed in an overlapping manner at the same position (step ST23 in FIG. 5).

However, in the example of FIG. 9, the length of the curve is shorter than the length of the character string indicating the voice recognition result, so of the character string, the character objects for "Let's go see the cherry blossoms" are displayed superimposed on the curve image, but the character objects for "when spring comes" are not displayed superimposed on the curve image.

When causing the curve image and the character string to be displayed in an overlapping manner at the same position, the display processing unit 18 may cause the curve image and all the character objects included in the character string to be displayed at the same time, but may cause the curve image and the character objects included in the character string to be displayed by an animation in which the character string is sequentially displayed from the beginning side of the character string.

Furthermore, the curve image, and the character objects included in the character string may be sequentially displayed so that the curve image, and the character objects included in the character string well up from under the user's finger in accordance with swiping with the finger.

Note that, FIG. 8 illustrates an example in which the user performs swiping with the finger and then makes an utterance, and FIG. 9 illustrates an example in which the user makes an utterance and then performs swiping with the finger, but the swiping with the finger and the utterance may be performed at the same time.

Upon receiving the character string indicating "Let's go see the cherry blossoms when spring comes" output from the character string acquisition unit 10, the length comparison unit 13 refers to the character width indicated by the character attribute information output from the character attribute information acquisition unit 11, and calculates the length of the character string (step ST13 in FIG. 5).

Furthermore, upon receiving the curve information acquired by the curve information acquisition unit 9, the length comparison unit 13 calculates the length of the curve indicated by the curve information in accordance with the above equation (2) or equation (3) (step ST14 in FIG. 5).

Upon calculating the length of the curve, the length comparison unit 13 compares the length of the curve with the length of the character string (step ST15 in FIG. 5).

If the comparison result by the length comparison unit 13 indicates that the length of the curve is shorter than the length of the character string (in the case of step ST16: YES in FIG. 5), the extension curve shape determining unit 14 determines the shape of the extension curve that is the curve of the extension portion, from the shape of the curve indicated by the curve information acquired by the curve information acquisition unit 9 (step ST17 in FIG. 5).

When the extension curve shape determining unit 14 determines the shape of the extension curve, the curve extension unit 17 extends the curve by adding the extension curve to the terminal end of the curve indicated by the curve information acquired by the curve information acquisition unit 9 (step ST18 in FIG. 5).

In the example of FIG. 14, the length of the curve is 60 mm, the length of the character string is 80 mm, and the length of the curve is 20 mm shorter than the length of the character string, so the curve is extended by 20 mm.

When the curve extension unit 17 extends the curve, the display processing unit 18 generates display information for displaying "when spring comes" that are the character objects that are not displayed since the length of the curve is short, along the curve of the extension portion.

The display processing unit 18 causes the display 32 to display "when spring comes" that are the character objects that are not displayed, along the curve of the extension portion, in accordance with the generated display information, as illustrated in step C of FIG. 9 (step ST19 in FIG. 5).

Here, the display processing unit 18 causes the display 32 to display the character objects that are not displayed, along the extension curve added by the curve extension unit 17. However, this is only an example, and as illustrated in the right figure in step C of FIG. 9, the display processing unit 18 may cause the display 32 to display the curve image illustrating the extension curve, and display the character objects that are not displayed superimposed on the curve image.

The display processing unit 18 records information on a position in the three-dimensional space of the character string indicating "Let's go see the cherry blossoms when spring comes" output from the character string acquisition unit 10 (step ST20 in FIG. 5).

The display processing unit 18 causes the character objects for all the characters included in the character string to be displayed superimposed on the curve image, and then generates display information for erasing the curve image.

The display processing unit 18 causes the display 32 to erase the curve image from the display 32 and display only the character string in accordance with the generated display information, as illustrated in step D of FIG. 9 (step ST21 in FIG. 5).

When the display processing unit 18 causes the curve image to be erased, the entire curve image may be erased at the same time, but the curve image may be erased by an animation in which the character string is erased in order from the beginning side.

Here, the display processing unit 18 displays the curve image, and the character objects for all the characters included in the character string in an overlapping manner, and then erases the curve image after a certain period of time. However, this is only an example, and the display processing unit 18 may erase the curve image immediately after completion of the display of the character string.

In the input display control device 100 illustrated in FIG. 1, an example is illustrated in which the length of the curve is shorter than the length of the character string indicating the voice recognition result. When the length of the curve is longer than or equal to the length of the character string indicating the voice recognition result, the input display control device 100 can cause the character objects for all the characters included in the character string to be displayed superimposed on the curve image without extending the length of the curve.

Thus, if the comparison result by the length comparison unit 13 indicates that the length of the curve is longer than or equal to the length of the character string (in the case of step ST16: No in FIG. 5), the processing of steps ST17 to ST20 is not performed and the processing proceeds to step ST21, and the curve image is erased and only the character string is displayed.

In the input display control device 100 illustrated in FIG. 1, the length comparison unit 13 assumes that the characters included in the character string are not separated from each other and the length between the characters is 0 mm, and calculates the length of the character string by the equation (1). However, if the length between the characters is greater than 0 mm, the length comparison unit 13 may calculate the length of the character string in consideration of the length between the characters. For example, if the length between the characters is 0.5 mm, the length of the character string is 87.5 mm as indicated in the following equation (4).

$$\text{Length of character string} = (5\text{ mm x }16) + (0.5\text{ mm x }15) = 87.5\text{ mm} \qquad (4)$$

The equation (4) indicates a case where the number of characters in the character string is 16 and the character width is "5 mm", as in the equation (1).

Next, descriptions of the processing, by the display processing unit 18, of arranging some of the character objects for the characters in the non-display area, and the processing after some of the character objects for the characters are arranged in the non-display area will be given.

For example, as illustrated in FIG. 15, when the user performs swiping on the display 32 toward the right end of the display area of the display 32, the right end of the curve indicated by the curve information is positioned at the right end of the display area of the display 32. FIG. 15 is an explanatory diagram illustrating an example in which the display processing unit 18 cannot cause the display 32 to display some of the character objects.

In the example of FIG. 15, of a character string indicating "I will go to the pool tomorrow", character objects of "tomorrow" are not displayed.

FIG. 16 is an explanatory diagram illustrating the display area of the display 32 and the non-display area that is an area surrounding the display area.

When it is not possible to cause the display 32 to display some of the character objects, the display processing unit 18 extends the extension curve to the non-display area as illustrated in FIG. 16, and arranges the character objects for the characters that are not displayed included in the character string, along the extended extension curve in the non-display area. When arranging the character objects in the non-display area, the display processing unit 18 arranges the character objects for the characters that are not displayed in the non-display area so that "I will go to the pool tomorrow" that is the character string output from the character string acquisition unit 10 straddles a border between the display area and the non-display area.

In the example of FIG. 16, the display processing unit 18 arranges the character objects for a character string "tomorrow" in the non-display area.

For example, when the user holds the input display control device 100, a position of the three-dimensional space imaged by the camera 70 can be changed. The position of the three-dimensional space imaged by the camera 70 is changed, whereby a position of the three-dimensional space indicated by an image imaged by the camera 70 is changed.

For that reason, the input display control device 100 can be moved or rotated so that character objects arranged in the non-display area enter the three-dimensional space indicated by the image imaged by the camera 70. As a result, the input display control device 100 can display all the character objects in the display area.

When the character objects arranged in the non-display area enter the three-dimensional space whose position is changed, the display processing unit 18 generates display information for superimposing the character objects arranged in the non-display area on the image acquired by the image acquisition unit 71.

The display processing unit 18 causes the display 32 to display the image on which the character objects arranged in the non-display area are superimposed in accordance with the generated display information.

Here, when the position of the three-dimensional space imaged by the camera 70 is changed, the display processing unit 18 causes the display 32 to display the character objects arranged in the non-display area. However, this is only an example, and when the user performs operation of selecting a character string in which some of character objects for characters are arranged in the non-display area, the display processing unit 18 may cause the display 32 to display the character objects arranged in the non-display area.

FIG. 17 is a flowchart illustrating processing after the display processing unit 18 arranges some of the character objects for the characters in the non-display area.

Hereinafter, the processing after the display processing unit 18 arranges some of the character objects for the characters in the non-display area will be described referring to FIG. 17.

When the user performs operation of selecting the character string in which some of the character objects for the characters are arranged in the non-display area (in the case of step ST31: YES in FIG. 17), the character string selection unit 18a accepts selection of the character string (step ST32 in FIG. 17).

If the user does not perform the operation of selecting a character string (in the case of step ST31: NO in FIG. 17), the character string selection unit 18a waits until the user performs the operation of selecting a character string.

As the operation of selecting a character string by the user, operation of long-pressing a character object displayed on the display 32 among character objects included in the character string in which some of the character objects for the characters are arranged in the non-display area is conceivable.

The operation of long-pressing a character object displayed on the display 32 means operation in which the user touches the character object displayed in the display area of the display 32 for a longer time than a threshold value.

Here, an example is described in which the user performs the operation of long-pressing a character object displayed in the display area of the display 32 and thus the character string selection unit 18a accepts selection of the character string. However, this is only an example, and for example, the character string selection unit 18a may accept selection of the character string when the user touches a character object displayed in the display area of the display 32 regardless of the touching time.

When the character string selection unit 18a accepts selection of the character string, the outline addition unit 18b adds, to the contours of the character objects included in the character string of which selection is accepted, outlines of a color different from that of the character objects, as illustrated in FIG. 18 (step ST33 in FIG. 17).

The outline addition unit 18b adds the outlines to the contours of the character objects, whereby the character objects are displayed on the display 32 as so-called "outline characters", and the user can recognize that selection of the character string is accepted.

FIG. 18 is an explanatory diagram illustrating the character string of which selection is accepted by the character string selection unit 18a.

When the user performs operation of moving the character string of which selection is accepted by the character string selection unit 18a (in the case of step ST34: YES in FIG. 17), the character string moving unit 18c accepts movement of the character string (step ST35 in FIG. 17).

When the user does not perform the operation of moving the character string (in the case of step ST34: NO in FIG. 17), the character string moving unit 18c waits until the user performs the operation of moving the character string.

When the character string moving unit 18c accepts movement for arranging all the character objects included in the character string in the display area of the display 32, the display processing unit 18 generates display information for display all the character objects included in the character string in the display area of the display 32.

As illustrated in FIG. 19, the display processing unit 18 causes all the character objects included in the character string to be displayed in the display area of the display 32 in accordance with the generated display information (step ST36 in FIG. 17).

FIGS. 19A and 19B are an explanatory diagram illustrating the movement of the character string.

FIG. 19A illustrates the movement of the character string in which the character objects are displayed superimposed on the curve image.

FIG. 19B illustrates an example in which the curve image is illustrated as an underline of the character objects.

Here, when the character string moving unit 18c accepts the movement for arranging all the character objects included in the character string in the display area of the display 32, the display processing unit 18 causes the display 32 to display the entire character string in the display area. However, as illustrated in FIG. 20, when the character string moving unit 18c accepts movement for moving the entire character string outside the display area of the display 32, the display processing unit 18 may discard the character string.

FIG. 20 is an explanatory diagram illustrating discarding of the character string acquired by the character string acquisition unit 10.

In FIG. 20, as movement operation for moving the entire character string outside the display area of the display 32, an example is illustrated in which the user flicks the character string of which selection is accepted by the character string selection unit 18a to the outside of the display area of the display 32.

In the first embodiment described above, the input display control device 100 is configured so that when some of the character objects for the characters included in the character string acquired by the character string acquisition unit 10 protrude out of the display area of the display 32 since the length of the character string acquired by the character string acquisition unit 10 is long, the display control unit 12 arranges some of the character objects for the characters in the surrounding three-dimensional space of the three-dimensional space indicated by the display area. Thus, the input display control device 100 can avoid a situation in which all the character objects included in the character string cannot be arranged.

Furthermore, in the first embodiment, the input display control device 100 is configured so that when a position of the three-dimensional space indicated by the image acquired by the image acquisition unit 71 is changed and thus the character objects arranged in the surrounding three-dimensional space of the three-dimensional space indicated by the image enter the three-dimensional space whose position is changed, the display control unit 12 generates the display information for superimposing the character objects arranged in the surrounding three-dimensional space on the image acquired by the image acquisition unit 71. Thus, the input display control device 100 can cause the display 32 to display the character objects arranged in the surrounding three-dimensional space.

Furthermore, in the first embodiment, the display control unit 12 includes the character string selection unit 18a for accepting selection of the character string in which some of the character objects for the characters are arranged in the surrounding three-dimensional space, and the character string moving unit 18c for accepting movement of the character string of which selection is accepted by the character string selection unit 18a. Furthermore, the input display control device 100 is configured so that when movement is accepted for arranging all the character objects included in the character string of which selection is accepted by the character string selection unit 18a in the three-dimensional space indicated by the image acquired by the image acquisition unit 71, the display control unit 12 generates display information for superimposing, on the image, character objects for all the characters included in the character string. Thus, the input display control device 100 can cause the display 32 to display all the character objects included in the character string.

Furthermore, in the first embodiment, the input display control device 100 is configured so that when it is determined that some character objects included in the character string acquired by the character string acquisition unit 10 cannot be displayed along the curve since the length of the curve indicated by the curve information acquired by the curve information acquisition unit 9 is short, the display control unit 12 determines the shape of the extension portion of the curve from the shape of the curve indicated by the curve information acquired by the curve information acquisition unit 9 and extends the curve, and generates the display information for displaying some of the character objects included in the character string along the curve of the extension portion. Thus, the input display control device 100 can cause all the character objects included in the character string to be displayed along the curve even when the length of the curve indicated by the curve information acquired by the curve information acquisition unit 9 is shorter than the length of the character string.

Moreover, in the first embodiment, when the curve information including the curve image is output from the locus determination unit 4 before the character string is output from the voice recognition unit 8, the input display control device 100 causes the display 32 to display the curve image and then display the character objects included in the character string output from the voice recognition unit 8 superimposed on the curve image. On the other hand, the input display control device 100 is configured so that when the character string is output from the voice recognition unit 8 before the curve information including the curve image is output from the locus determination unit 4, the input control device 100 waits until the curve information is output from the locus determination unit 4, and when the curve information is output from the locus determination unit 4, the display 32 is caused to display the curve information and display the character objects included in the character string superimposed on the curve image. Thus, the input display control device 100 can grasp in advance the position where the character objects included in the character string indicating the voice recognition result is displayed when the user performs the operation of drawing a line before making an utterance. The user can therefore grasp an idea for displaying a display image of the character objects included in the character string. Furthermore, when the user makes an utterance before performing the operation of drawing a line, the curve image, and the character objects included in the character string are displayed in an overlapping manner at the same position, so that it is possible to give a highly responsive operation feeling to the user.

In the input display control device 100 illustrated in FIG. 1, the display processing unit 18 causes the character string to be displayed superimposed on the curve image. However, this is only an example, and the display processing unit 18 may cause the character objects included in the character string to be displayed around the curve image along the curve image without causing the character string to be superimposed on the curve image.

Furthermore, the curve image may be a colorless and transparent image if the user does not need to confirm the curve image. Furthermore, the curve image may be a colored and transparent image.

When the curve image is colorless and transparent, the display processing unit 18 may cause the display 32 to display a curve having no width representing the locus determined by the locus determination unit 4, or a curve having no width representing the locus extended by the curve extension unit 17.

In the input display control device 100 illustrated in FIG. 1, when the user performs operation of drawing a line by using one's finger, the operation acceptance unit 1 accepts the operation of drawing the line. However, this is only an example, and for example, when the user performs operation of drawing a line by using an operation object whose shape can be identified from an image imaged by the camera 70, such as an augmented reality (AR) marker as illustrated in FIG. 21, or a finger, the operation acceptance unit 1 may accept the operation of drawing the line. FIG. 21 is an explanatory diagram illustrating an example in which the user uses the AR marker.

When the AR marker is used, for example, when the user presses a marker recognition button provided on the input display control device 100, the operation acceptance unit 1 recognizes the AR marker. After that, when the user performs operation of drawing a three-dimensional line on the three-dimensional space by using the AR marker, the operation acceptance unit 1 operates to accept the operation of drawing the line.

The input display control device 100 controls the operation acceptance unit 1 so that the operation acceptance unit 1 does not recognize the AR marker when the locus determination unit 4 generates the curve information and the curve image.

Second Embodiment. This second embodiment is not part of the claimed invention.

In the input display system illustrated in FIG. 1, when the character string moving unit 18c accepts movement for disposing the entire character string of which selection is accepted by the character string selection unit 18a in the display area, the display control unit 12 generates display information for superimposing, on the image, the character objects for all the characters included in the character string.

In a second embodiment, an input display system will be described in which the display control unit 12 generates display information for superimposing, on the image, objects arranged in a surrounding three-dimensional space by making a line break in a character string in which character objects for some characters are arranged in the surrounding three-dimensional space.

A configuration diagram illustrating the input display system including the input display control device 100 of the second embodiment is FIG. 1, as in the first embodiment. However, the display processing unit 18 does not have to include the character string selection unit 18a, the outline addition unit 18b, and the character string moving unit 18c.

FIG. 22 is an explanatory diagram illustrating an example in which character objects arranged in the non-display area is displayed on the display 32 due to that the character string is subjected to automatic line breaking at the right end of the display area on the display 32.

Next, the operation of the input display system of the second embodiment will be described.

FIG. 23 is a flowchart illustrating an input display control method that is processing of the input display system according to the second embodiment. In FIG. 23, the same reference numerals as those in FIG. 5 denote the same or corresponding portions.

For example, when the user utters "I will go to the pool tomorrow, It's been a month", the character string acquisition unit 10 acquires a character string indicating "I will go to the pool tomorrow. It's been a month" from the voice recognition unit 8, and outputs the character string to each of the length comparison unit 13 and the display processing unit 18.

Upon receiving the character string indicating "I will go to the pool tomorrow. It's been a month" from the character string acquisition unit 10, the display processing unit 18 generates display information for displaying the character objects included in the character string superimposed on the curve image, as in the first embodiment.

However, since the length of the character string acquired by the character string acquisition unit 10 is long, some of the character objects included in the character string protrude out of the display area of the display 32, so that the display processing unit 18 arranges some of the character objects included in the character string in the non-display area.

In the example of FIG. 22, of the character string acquired by the character string acquisition unit 10, the display processing unit 18 displays character objects for a character string "I will go to the pool" on the display 32. However, the display processing unit 18 arranges the character objects included in a character string "tomorrow. It's been a month" in the non-display area.

If the comparison result by the length comparison unit 13 indicates that the length of the curve is shorter than the length of the character string, the extension curve shape determining unit 14 determines the shape of the extension curve that is the curve of the extension portion, from the shape of the curve indicated by the curve information acquired by the curve information acquisition unit 9, as in the first embodiment.

When the extension curve shape determining unit 14 determines the shape of the extension curve, the curve extension unit 17 extends the curve by adding the extension curve to the terminal end of the curve indicated by the curve information acquired by the curve information acquisition unit 9, as in the first embodiment.

In the second embodiment as well, as in the first embodiment, the curve extension unit 17 extends the curve to the non-display area as illustrated in FIG. 22 (step ST18A in FIG. 23).

As described above, the display processing unit 18 arranges the character objects included in the character string "tomorrow. It's been a month" in the non-display area, and arranges the character objects along the curve extended to the non-display area.

Upon disposing the character string "tomorrow. It's been a month" in the non-display area, the display processing unit 18 cuts out the curve extended to the non-display area, and disposes the cut out curve below the curve in the display area (step ST19Ain FIG. 23).

The display processing unit 18 makes a line break in the character string indicated by "I will go to the pool tomorrow. It's been a month" output from the character string acquisition unit 10, at the right end of the display area on the display 32. In the example of FIG. 22, the line break is made between the character "l" and the character "t". In FIG. 22, "←" represents a line break in the character string.

Next, the display processing unit 18 disposes "tomorrow. It's been a month" so that start points of the curves are caused to match each other, and thus "t" that is the character object of the start point of "tomorrow. It's been a month" that is the character string obtained by the line break, and "I" that is the character object of the start point of "I will go to the pool tomorrow. It's been a month" are almost aligned in position in the left-right direction.

The display processing unit 18 displays character objects of "tomorrow. It's been" out of the character objects included in the character string "tomorrow. It's been a month" in the display area of the display 32 along the cut out curve (step ST19B in FIG. 23).

In the example of FIG. 22, of the character objects included in the character string "tomorrow. It's been a month", the character objects of "tomorrow. It's been" can be displayed on the display 32. However, character objects of "a month" protrude out of the display area of the display 32.

Since the character objects of "a month" protrude out of the display area of the display 32, the curve extension unit 17 extends the curve that is along the character objects of "tomorrow. It's been" to the non-display area.

The display processing unit 18 arranges the character objects of "a month" in the non-display area, along the curve extended to the non-display area.

Upon arranging the character objects of "a month" in the non-display area, the display processing unit 18 cuts out the curve extended to the non-display area, and disposes the cut out curve below the curve in the display area (step ST19A in FIG. 23).

The display processing unit 18 makes a line break in the character string indicated by "tomorrow. It's been a month" at the right end of the display area on the display 32. In the example of FIG. 22, the line break is made between the character "n" and the character "a".

Next, the display processing unit 18 disposes "a month" so that start points of the curves are caused to match each other, and thus "a" that is the character object of the start point of "a month" that is the character string obtained by the line break, and "t" that is the character object of the start point of "tomorrow. It's been a month" are almost aligned in position in the left-right direction.

The display processing unit 18 displays the character objects of "a month" in the display area of the display 32, along the cut out curve (step ST19B in FIG. 23).

In the example of FIG. 22, the character objects of "a month" is displayed on the display 32, and the character objects of "I will go to the pool", the character objects of "tomorrow. It's been", and the character objects of "a month" are displayed in three lines.

The display processing unit 18 repeatedly performs processing of steps ST19A to ST20B until the entire curve extended to the non-display area are cut out.

In FIG. 22, the display processing unit 18 makes a line break twice in the character string indicating "I will go to the pool tomorrow. It's been a month", thereby causing the character objects included in the character string indicating "I will go to the pool tomorrow. It's been a month" to be displayed in three lines. However, this is only an example, and for example, the display processing unit 18 may move the character string on the second line to the left end of the display area, to cause the character objects included in the character string "I will go to the pool" and the character objects included in the character string "tomorrow. It's been a month" to be displayed in two lines. Furthermore, the last character object of the character string on the second line may be aligned with the right end of the display area to make the two lines.

Here, the display processing unit 18 causes the character objects for the multiple characters included in each of the character string on the second line and the character string on the third line to be arranged in a straight line and displayed. However, this is only an example, and the curve extension unit 17 generates a curve for arranging the character objects included in each of the character string on the second line and the character string on the third line so that the shape of the curve for arranging the character objects included in each of the character string on the second line and the character string on the third line has the same shape as the shape of the curve for arranging the character objects included in the character string on the first line. Then, as illustrated in FIG. 24, the display processing unit 18 may cause the character objects for the multiple characters included in each of the character string on the second line and the character string on the third line to be displayed along the corresponding curve generated by the curve extension unit 17, in the display 32. In FIG. 24, "←" represents the line break in the character string.

FIG. 24 is an explanatory diagram illustrating an example in which character objects arranged in the non-display area is displayed on the display 32 due to that the character string is subjected to automatic line breaking at the right end of the display area on the display 32.

In the second embodiment described above, the input display control device 100 is configured so that the display control unit 12 generates the display information for superimposing, on the image, the objects arranged in the surrounding three-dimensional space by making the line break in the character string in which some of the character objects for the characters are arranged in the surrounding three-dimensional space. Thus, the input display control device 100 can cause the display 32 to automatically display the character objects for all the characters included in the character string in which some of the character objects for the characters are arranged in the surrounding three-dimensional space.

Third Embodiment.

In the input display system illustrated in FIG. 1, when the character string moving unit 18c accepts movement for arranging all the character objects included in the character string of which selection is accepted by the character string selection unit 18a in the display area, the display control unit 12 generates display information for superimposing, on the image, the character objects for all the characters included in the character string.
In a third embodiment, an input display system will be described in which the display control unit 12 generates display information for superimposing, on the image, the character objects for all the characters included in the character string in which some of the character objects for the characters are arranged in the surrounding three-dimensional space, by moving the entire character string into the three-dimensional space indicated by the image.
A configuration diagram illustrating the input display system including the input display control device 100 of the third embodiment is FIG. 1, as in the first embodiment. However, the display processing unit 18 does not have to include the character string selection unit 18a, the outline addition unit 18b, and the character string moving unit 18c.
FIG. 25 is an explanatory diagram illustrating an example in which the display control unit 12 moves an entire character string in which some of character objects for characters are arranged in the non-display area to the display area, and causes the entire character string to be displayed in the display area on the display 32.
Next, the operation of the input display system of the third embodiment will be described.
FIG. 26 is a flowchart illustrating an input display control method that is processing of the input display system according to the third embodiment. In FIG. 26, the same reference numerals as those in FIG. 5 denote the same or corresponding portions.
For example, when the user utters "I will go to the pool tomorrow", the character string acquisition unit 10 acquires a character string indicating "I will go to the pool tomorrow" from the voice recognition unit 8, and outputs the character string to each of the length comparison unit 13 and the display processing unit 18.
Upon receiving the character string indicating "I will go to the pool tomorrow" from the character string acquisition unit 10, the display processing unit 18 generates display information for displaying the character objects included in the character string superimposed on the curve image, as in the first embodiment.
However, since the length of the character string acquired by the character string acquisition unit 10 is long, some of the character objects included in the character string protrude out of the display area of the display 32, so that the display processing unit 18 arranges some of the character objects in the non-display area.
In the example of FIG. 25, of the character string acquired by the character string acquisition unit 10, the display processing unit 18 displays character objects of "I will go to the pool" on the display 32, and arranges character objects of "tomorrow" in the non-display area.
Upon arranging some of the character objects for the characters in the non-display area, the display processing unit 18 causes all the character objects included in the character string to be displayed on the display 32 by, for example, moving the entire character string toward the left end side of the display area of the display 32 in the figure, as illustrated in FIG. 25 (step ST24 in FIG. 26). In FIG. 25, "←" represents movement of the character string.
In the example of FIG. 25, the display processing unit 18 can cause the entire character string to be displayed in the display area by moving the entire character string toward the left end side of the display area in the figure.
In the third embodiment described above, the input display control device 100 is configured so that the display control unit 12 generates the display information for displaying all the character objects a part of which is arranged in the non-display area, in the display area, by moving the entire character objects to the display area. Thus, the input display control device 100 can cause all the character objects a part of which is arranged in the non-display area to be displayed in the display area of the display 32 automatically.
Note that, when the length of the character string output from the character string acquisition unit 10 is longer than, for example, the length in the left-right direction of the display area, all the character objects included in the character string cannot be displayed in the display area even if the display processing unit 18 moves the entire character string toward the left end side of the display area. Specifically, it is as follows.
For example, when the user utters "I will go to the pool tomorrow, It’s been a month", the character string acquisition unit 10 acquires a character string indicating "I will go to the pool tomorrow. It’s been a month" from the voice recognition unit 8, and outputs the character string to each of the length comparison unit 13 and the display processing unit 18.
Upon receiving the character string indicating "I will go to the pool tomorrow. It’s been a month" from the character string acquisition unit 10, the display processing unit 18 generates display information for displaying the character string superimposed on the curve image, as in the first embodiment.
However, since the length of the character string acquired by the character string acquisition unit 10 is long, some of the character objects included in the character string protrude out of the display area of the display 32, so that the display processing unit 18 arranges some of the character objects in the non-display area.

FIG. 27 is an explanatory diagram illustrating an example in which the display control unit 12 moves an entire character string in which some of character objects are arranged in the non-display area, and then makes a line break in the character string, thereby causing all the character objects included in the character string to be displayed in the display area of the display 32.

In the example of FIG. 27, of the character string acquired by the character string acquisition unit 10, the display processing unit 18 causes character objects of "I will go to the pool" to be displayed in the display area of the display 32, and arranges character objects of "tomorrow. It's been a month" in the non-display area.

The display processing unit 18 moves "I" that is the character of the start point of the character string to, for example, a position in front of the left end of the display area, and then makes a line break in the character string at the right end of the display area on the display 32.

In the example of FIG. 27, the display processing unit 18 moves the entire character string, thereby causing the character objects included in a character string "I will go to the pool tomorrow. It's" to be displayed in the display area. However, since character objects of "been a month" protrude out of the display area of the display 32, the display processing unit 18 arranges the character objects of "been a month" in the non-display area.

Next, the display processing unit 18 makes a line break in the entirely moved character string at the right end of the display area on the display 32. In the example of FIG. 27, the line break is made between the character object of "s" and the character object of "b".

The display processing unit 18 causes the character objects of "been a month" that is a character string obtained by the line break to be displayed in the display area of the display 32.

In the example of FIG. 27, the shape of the curve for arranging the character objects of "I will go to the pool tomorrow. It's" and the shape of the curve for arranging the character objects of "been a month" have the same shape, but may have different shapes.

With the configuration as described above, even when the length of the character string is long, all the character objects included in the character string can be automatically displayed in the display area of the display 32.

Fourth Embodiment.

In the input display system illustrated in FIG. 1, when the character string moving unit 18c accepts movement for arranging all the character objects for the characters included in the character string of which selection is accepted by the character string selection unit 18a in the display area, the display control unit 12 generates display information for superimposing, on the image, the character objects for all the characters included in the character string.

In a fourth embodiment, an input display system will be described in which the display control unit 12 makes the length of the character string in which some of character objects for characters are arranged in the surrounding three-dimensional space less than or equal to the length of the curve indicated by the curve information acquired by the curve information acquisition unit 9, by reducing the sizes of the character objects included in the character string.

A configuration diagram illustrating the input display system including the input display control device 100 of the fourth embodiment is FIG. 1, as in the first embodiment. However, the display processing unit 18 does not have to include the character string selection unit 18a, the outline addition unit 18b, and the character string moving unit 18c.

FIG. 28 is an explanatory diagram illustrating an example in which the display control unit 12 causes all character objects included in a character string to be displayed in the display area of the display 32 by reducing the sizes of the character objects included in the character string.

Next, the operation of the input display system of the fourth embodiment will be described.

FIG. 29 is a flowchart illustrating an input display control method that is processing of the input display system according to the fourth embodiment. In FIG. 29, the same reference numerals as those in FIG. 5 denote the same or corresponding portions.

For example, when the user utters "Would you like to go to the pool tomorrow", the character string acquisition unit 10 acquires a character string indicating "Would you like to go to the pool tomorrow?" from the voice recognition unit 8, and outputs the character string to each of the length comparison unit 13 and the display processing unit 18.

Upon receiving the character string indicating "Would you like to go to the pool tomorrow?" from the character string acquisition unit 10, the display processing unit 18 generates display information for displaying the character objects included in the character string superimposed on the curve image, as in the first embodiment.

However, since the length of the curve indicated by the curve information acquired by the curve information acquisition unit 9 is short, some character objects included in the character string acquired by the character string acquisition unit 10 protrude out of the display area of the display 32, so that the display processing unit 18 arranges some of the character objects in the non-display area.

In the example of FIG. 28, of the character string acquired by the character string acquisition unit 10, the display processing unit 18 displays character objects of "Would you like to go to the pool" in the display area of the display 32, and arranges character objects included in a character string "tomorrow?" in the non-display area.

In the example of FIG. 28, the sizes of the character objects included in the character string "Would you like to go to the pool tomorrow?" is as described in the character attribute table stored in the character management DB 2.

Upon arranging some of the character objects for the characters in the non-display area, the display processing unit 18 reduces the sizes of the character objects included in the character string so that the length of the character string is less than or equal to the length of the curve indicated by the curve information acquired by the curve information acquisition unit 9 (step ST25 in FIG. 29).

The display processing unit 18 reduces the size of each character object in all the character objects, and then generates display information for displaying all the character objects included in the character string in the display area of the display 32.

As illustrated in FIG. 28, the display processing unit 18 causes all the character objects included in the character string to be displayed in the display area of the display 32 in accordance with the generated display information (step ST19 in FIG. 29).

Here, the display processing unit 18 reduces the sizes of the character objects included in the character string so that the length of the character string is less than or equal to the length of the curve.

When the length of the character string acquired by the character string acquisition unit 10 is shorter than the length of the curve, the display processing unit 18 may increase the size of each character object in all the character objects included in the character string within a range in which the length of the character string is not longer than the length of the curve.

FIG. 30 is an explanatory diagram illustrating an example in which the display processing unit 18 increases the sizes of the character objects included in the character string within the range in which the length of the character string is not longer than the length of the curve.

In the example of FIG. 30, the display control unit 12 increases the size of each of the character objects in all the character objects included in the character string so that the length of the character string is almost the same as the length of the curve. However, when the length of the character string acquired by the character string acquisition unit 10 is shorter than the length of the curve, the display control unit 12 may cause all the character objects included in the character string to be displayed in the display area of the display 32 without changing the size of each character object in all the character objects included in the character string.

In the fourth embodiment described above, the input display control device 100 is configured so that the display control unit 12 makes the length of the character string less than or equal to the length of the curve indicated by the curve information acquired by the curve information acquisition unit 9 by reducing the sizes of the character objects included in the character string in which some of the character objects for the characters are arranged in the surrounding three-dimensional space. Thus, the input display control device 100 can cause all the character objects included in the character string acquired by the character string acquisition unit 10 to be displayed in the display area of the display 32 automatically.

Note that, when the extension curve is not drawn and the length of the curve is shorter than the length of the character string, the sizes of the character objects included in the character string may be reduced to display all the character objects.

Fifth Embodiment. This embodiment is not part of the claimed invention.

In the input display system illustrated in FIG. 1, when the character string moving unit 18c accepts movement for arranging all the character objects included in the character string of which selection is accepted by the character string selection unit 18a in the display area, the display control unit 12 generates display information for superimposing, on the image, the character objects for all the characters included in the character string.

In a fifth embodiment, the display control unit 12 performs processing of replacing the character string acquired by the character string acquisition unit 10 with a character string having the same meaning as that of the character string and having a length shorter than that of the character string. Then, an input display system will be described in which the display control unit 12 generates display information for superimposing, on the image, character objects included in a character string after replacement processing, along the curve indicated by the curve information acquired by the curve information acquisition unit 9.

FIG. 31 is a configuration diagram illustrating the input display system including an input display control device according to the fifth embodiment. In FIG. 31, since the same reference numerals as those in FIG. 1 denote the same or corresponding portions, the description thereof will be omitted.

The display processing unit 18 is implemented by, for example, the display processing circuit 31 illustrated in FIG. 2.

Unlike the display processing unit 18 illustrated in FIG. 1, the display processing unit 18 includes a table storage unit 18d instead of the character string selection unit 18a, the outline addition unit 18b, and the character string moving unit 18c.

The display processing unit 18 generates display information for displaying the character objects included in the character string acquired by the character string acquisition unit 10 in the display area of the display 32 along the curve indicated by the curve information acquired by the curve information acquisition unit 9, and causes the display 32 to display the character objects in accordance with the generated display information. The display information generated by the display processing unit 18 is information for displaying the character objects included in the character string acquired by the character string acquisition unit 10 superimposed on the curve image included in the curve information acquired by the curve information acquisition unit 9. The display processing unit 18 causes the display 32 to display the character objects included in the character string superimposed on the curve image in accordance with the display information.

Furthermore, if the comparison result by the length comparison unit 13 indicates that the length of the curve is shorter than the length of the character string, the display processing unit 18 generates display information for displaying, on the display 32, some of the character objects that cannot be displayed superimposed on the curve image along the extension curve added by the curve extension unit 17. The display processing unit 18 causes the display 32 to display some of the character objects in accordance with the generated display information.

Moreover, after causing the display 32 to display the character objects included in the character string, the display processing unit 18 generates display information for erasing the display of the curve image, and causes the display 32 to erase the curve image in accordance with the generated display information.

The table storage unit 18d is implemented by, for example, the storage processing circuit 22 illustrated in FIG. 2. As illustrated in FIG. 32, the table storage unit 18d stores a table indicating a correspondence between "character string" and "simple character string".

FIG. 32 is an explanatory diagram illustrating the table indicating the correspondence between "character string" and "simple character string".

In FIG. 32, a simple character string is referred to as "simplified version". The "simple character string" has the same meaning as that of the "character string" and having a length shorter than that of the "character string".

The display processing unit 18 acquires a simple character string having a correspondence with the character string acquired by the character string acquisition unit 10 from the table storage unit 18d, and replaces the character string acquired by the character string acquisition unit 10 with the acquired simple character string.

The display processing unit 18 generates display information for superimposing, on the image acquired by the image acquisition unit 71, the character objects included in the character string after the replacement processing, along the curve indicated by the curve information acquired by the curve information acquisition unit 9.

The display processing unit 18 causes the character objects included in the character string after the replacement processing to be displayed in the display area of the display 32 in accordance with the generated display information.

Next, the operation of the input display control device illustrated in FIG. 31 will be described.

FIG. 33 is a flowchart illustrating an input display control method that is processing of the input display system according to the fifth embodiment. In FIG. 33, the same reference numerals as those in FIG. 5 denote the same or corresponding portions.

Since the operation other than the display processing unit 18 is similar to the operation of the input display control device illustrated in FIG. 1, only the operation of the display processing unit 18 will be mainly described here.

For example, when the user utters "I went to eat ramen today", the character string acquisition unit 10 acquires a character string indicating "I went to eat ramen today" from the voice recognition unit 8, and outputs the character string to each of the length comparison unit 13 and the display processing unit 18.

Upon receiving the character string indicating "I went to eat ramen today" from the character string acquisition unit 10, the display processing unit 18 generates display information for displaying the character objects included in the character string superimposed on the curve image, as in the first embodiment.

However, since the length of the character string acquired by the character string acquisition unit 10 is long, some character objects included in the character string protrude out of the display area of the display 32, so that the display processing unit 18 arranges some character objects included in the character string in the non-display area.

The display processing unit 18 arranges character objects of "today" in the non-display area, of the character string indicating "I went to eat ramen today".

To make it possible to display the entire character string in the display area of the display 32, the display processing unit 18 replaces the character string acquired by the character string acquisition unit 10 with a simple character string to shorten the length of the character string (step ST26 in FIG. 33).

Specifically, the display processing unit 18 acquires a simple character string having a correspondence with the character string acquired by the character string acquisition unit 10 from the table storage unit 18d.

In the table illustrated in FIG. 32, as a simple character string having a correspondence with a character string indicating "went to eat" of the character string indicating "I went to eat ramen today", "ate" is stored.

Furthermore, in the table illustrated in FIG. 32, as a simple character string having a correspondence with a character string indicating "ramen" of the character string indicating "I went to eat ramen today", a pictogram indicating ramen is stored.

Thus, the display processing unit 18 replaces "went to eat" with "ate", and replaces "ramen" with "pictogram indicating ramen".

The display processing unit 18 generates display information for superimposing the character objects included in the character string after the replacement processing on the image acquired by the image acquisition unit 71, along the curve indicated by the curve information acquired by the curve information acquisition unit 9, and as illustrated in FIG. 34, causes the character objects included in the character string after the replacement processing to be displayed in the display area of the display 32 in accordance with the generated display information (step ST19 in FIG. 33).

FIG. 34 is an explanatory diagram illustrating an example in which the display control unit 12 causes the character objects included in the character string after the replacement processing to be displayed.

In the example of FIG. 34, the display processing unit 18 replaces the character string acquired by the character string acquisition unit 10 with a simple character string, so that the length of the character string is shortened and all the character objects included in the character string are displayed in the display area of the display 32.

Here, when some of the character objects protrude out of the display area since the length of the character string acquired by the character string acquisition unit 10 is long, the display processing unit 18 replaces the character string with a simple character string. However, this is only an example, and the display processing unit 18 may replace the character string with a simple character string even when some of the character objects do not protrude out of the display area.

In the fifth embodiment described above, the input display control device 100 is configured so that the display control unit 12 performs processing of replacing the character string acquired by the character string acquisition unit 10 with another character string having a meaning identical to a meaning of the character string and having the length shorter than the length of the character string, and generates the display information for superimposing, on the image acquired by the image acquisition unit 71, the character objects included in the character string after the replacement processing, along the curve indicated by the curve information acquired by the curve information acquisition unit 9. Thus, the input display control device 100 can cause all the character objects included in the character string acquired by the character string acquisition unit 10 to be displayed in the display area of the display 32 automatically.

Sixth Embodiment. This embodiment is not part of the claimed invention.

In a sixth embodiment, the curve information acquisition unit 9 acquires a plurality of pieces of curve information. Then, an input display system will be described in which the display control unit 12 generates display information for superimposing, on the image, the character objects included in the character string acquired by the character string acquisition unit 10 along curves indicated by each of the plurality of pieces of curve information acquired by the curve information acquisition unit 9.

A configuration diagram illustrating the input display system including the input display control device 100 of the sixth embodiment is FIG. 1, as in the first embodiment. However, the display processing unit 18 does not have to include the character string selection unit 18a, the outline addition unit 18b, and the character string moving unit 18c.

FIG. 35 is an explanatory diagram illustrating an example in which the display control unit 12 causes the character objects included in the character string to be displayed along the curves indicated by each of the plurality of pieces of curve information.

Next, the operation of the input display system of the sixth embodiment will be described.

FIG. 36 is a flowchart illustrating an input display control method that is processing of the input display system according to the sixth embodiment. In FIG. 36, the same reference numerals as those in FIG.4 denote the same or corresponding portions.

Upon receiving the content of the operation of drawing the line from the operation acceptance unit 1, the locus determination unit 4 determines the locus of the line drawn by the operation from the operation content, and generates, as information indicating the length of a curve representing the locus, the depth and shape of the curve, and the like, curve information indicating the curve, as in the first embodiment (steps ST5 to ST8 in FIG. 36).

The locus determination unit 4 outputs the curve information including the curve image to the curve information acquisition unit 9, as in the first embodiment.

In the input display system of the sixth embodiment, when the operation acceptance unit 1 receives the content of the operation of drawing a plurality of lines, the locus determination unit 4 generates a plurality of pieces of curve information.

The curve information acquisition unit 9 acquires the curve information output from the locus determination unit 4, and outputs the curve information to each of the length comparison unit 13, the shape determination processing unit 16, the curve extension unit 17, and the display processing unit 18.

For example, when the user utters "I will go to the pool tomorrow, It’s been a month", the character string acquisition unit 10 acquires a character string indicating "I will go to the pool tomorrow. It’s been a month" from the voice recognition unit 8, and outputs the character string to each of the length comparison unit 13 and the display processing unit 18.

Upon receiving the character string indicating "I will go to the pool tomorrow. It’s been a month" from the character string acquisition unit 10, the display processing unit 18 generates display information for displaying the character objects included in the character string superimposed on the curve image, as in the first embodiment.

However, since the length of the character string acquired by the character string acquisition unit 10 is long, some of the character objects included in the character string protrude out of the display area of the display 32, so that the display processing unit 18 arranges some of the character objects included in the character string in the non-display area.

In the example of FIG. 35, of the character string indicating "I will go to the pool tomorrow. It’s been a month", a character string within a range that fits in the curve is a character string "I will go to", so that the display processing unit 18 generates display information for displaying the character objects of "I will go to" along the curve.

Upon causing the character objects of "I will go to" to be displayed in the display area of the display 32 along the curve in accordance with the generated display information, the display processing unit 18 makes a line break in the character string at a position of the beginning of the character string that is not displayed. In the example of FIG. 35, the line break is made between the character object of "o" and the character object of "t". In FIG. 35, "←" represents the line break in the character string.

However, in the input display control system of the sixth embodiment, the display processing unit 18 accepts operation of adding a curve for displaying the character objects included in the character string obtained by the line break before making the line break in the character string.

Upon receiving the content of the operation of drawing the line from the operation acceptance unit 1, the locus determination unit 4 determines the locus of the line drawn by the operation from the operation content, and generates, as information indicating the length of a curve representing the locus, the depth and shape of the curve, and the like, curve information indicating the curve.

In the example of FIG. 35, the operation acceptance unit 1 accepts operations of drawing two lines, and the locus determination unit 4 generates pieces of curve information for two curves, in accordance with the contents of the corresponding operations of drawing the two lines.

The locus determination unit 4 outputs the generated two pieces of curve information to the curve information acquisition unit 9.

The curve information acquisition unit 9 acquires the two pieces of curve information output from the locus determination unit 4, and outputs the two pieces of curve information to each of the length comparison unit 13, the shape determination processing unit 16, the curve extension unit 17, and the display processing unit 18.

Upon receiving the two pieces of curve information from the curve information acquisition unit 9, the display processing unit 18 generates display information for displaying character objects of "the pool tomorrow." along a curve (hereinafter referred to as a first curve) closer to a display position of the character objects "I will go to" that are already displayed out of the curves indicated by the two pieces of curve information. Note that, although the closer curve is used as the first curve here, the order in which the curves are drawn may be stored, and the curve in the earlier order may be used as the first curve. Since character objects of "It’s been a month" do not fit in the first curve, at this stage, the display processing unit 18 only generates display information for displaying the character objects of "the pool tomorrow.".

Upon causing the display 32 to display the character objects of "the pool tomorrow." along the first curve in accordance with the generated display information, the display processing unit 18 makes a line break in the character string at a position of the beginning of the character string that is not displayed. In the example of FIG. 35, the line break is made between the character object of "." and the character object of "I".

The display processing unit 18 generates display information for displaying the character objects of "It’s been a month" along a curve (hereinafter referred to as a second curve) that is not the first curve out of the curves indicated by the two pieces of curve information.

The display processing unit 18 causes the character objects of "It’s been a month" to be displayed in the display area of the display 32 along the second curve in accordance with the generated display information.

In the sixth embodiment described above, the input display control device 100 is configured so that the curve information acquisition unit 9 acquires the plurality of pieces of curve information, and the display control unit 12 generates the display information for superimposing, on the image acquired by the image acquisition unit 71, the character objects included in the character string acquired by the character string acquisition unit 10, along the curves indicated by each of the plurality of pieces of curve information acquired by the curve information acquisition unit 9. Thus, the input display control device 100 can cause the character objects included in the character string to be displayed in a layout desired by the user even when the length of the character string acquired by the character string acquisition unit 10 is longer than the length of one curve.

Seventh Embodiment. This embodiment is not part of the claimed invention.

In the input display system of the sixth embodiment, the display processing unit 18 arranges the character objects for some characters included in the character string acquired by the character string acquisition unit 10 in the non-display area, and then makes a line break.

In a seventh embodiment, an input display system will be described in which the display processing unit 18 makes a line break in a character string without arranging the character objects for some characters included in the character string acquired by the character string acquisition unit 10 in the non-display area.

FIG. 37 is an explanatory diagram illustrating an example in which when the user performs operation of drawing a plurality of lines and then the user makes an utterance, the display control unit 12 causes character objects included in a character string to be displayed along curves indicated by each of a plurality of pieces of curve information.

In the example in FIG. 37, a case is illustrated where the user first performs operation of drawing three lines, and then utters "I will go to the pool tomorrow. It's been a month. I'm looking forward to it". At this time, since the lengths of curves drawn by the user are shorter than the length of the character string, only "month." is displayed on the third line, and "I'm looking forward to it" is not displayed. The user who sees the display 32 notices that there is no display of "I'm looking forward to it", and additionally performs operation of drawing the fourth line. Then, the display control unit 12 displays the character objects of "I'm looking forward to it" that is not displayed, along the added fourth curve. In the example of FIG. 37, as described above, the display control unit 12 causes the character objects of "I will go to the pool tomorrow. It's been a month. I'm looking forward to it." to be displayed along the four curves.

FIG. 38 is an explanatory diagram illustrating an example in which when the user makes an utterance and then the user performs operation of drawing a plurality of lines, the display control unit 12 causes character objects included in a character string to be displayed along curves indicated by each of a plurality of pieces of curve information.

In the example of FIG. 38, the display control unit 12 causes the character objects of "I will go to the pool tomorrow. It's been a month. I'm looking forward to it." to be displayed along the four curves.

In the seventh embodiment described above, the input display control device 100 is configured so that the curve information acquisition unit 9 acquires the plurality of pieces of curve information, and the display control unit 12 generates the display information for displaying the character objects included in the character string acquired by the character string acquisition unit 10 along the curves indicated by each of the plurality of pieces of curve information acquired by the curve information acquisition unit 9. Thus, the input display control device 100 can cause the character objects included in the character string to be displayed in a layout desired by the user even when the length of the character string acquired by the character string acquisition unit 10 is longer than the length of one curve.

Eighth Embodiment. This embodiment is not part of the claimed invention.

In the input display system illustrated in FIGS. 1 and 31, the display control unit 12 causes the display 32 to display the character objects included in the character string acquired by the character string acquisition unit 10 along the curve indicated by the curve information acquired by the curve information acquisition unit 9.

In an eighth embodiment, an input display system for translating the character string acquired by the character string acquisition unit 10 and causing the display 32 to display character objects included in a character string indicating a translation result for the character string will be described.

FIG. 39 is a configuration diagram illustrating the input display system including an input display control device according to the eighth embodiment, and FIG. 40 is a hardware configuration diagram of the input display system according to the eighth embodiment.

In FIGS. 39 and 40, since the same reference numerals as those in FIGS. 1, 2, and 31 denote the same or corresponding portions, the description thereof will be omitted.

A translation unit 52 is implemented by, for example, a translation processing circuit 34 illustrated in FIG. 40. The translation unit 52 translates the character string acquired by the character string acquisition unit 10, and outputs the character string indicating the translation result for the character string to each of the length comparison unit 13 and a display processing unit 53.

A display control unit 51 includes the length comparison unit 13, the extension curve shape determining unit 14, the curve extension unit 17, the translation unit 52, and the display processing unit 53. The display control unit 51 performs processing similar to that of the display control unit 12 illustrated in FIGS. 1 and 31, and also generates a curve for displaying a translated character string having a length longer than or equal to the length of the character string indicating the translation result output from the translation unit 52. Furthermore, the display control unit 51 generates display information for displaying the character objects included in the character string indicating the translation result by the translation unit 52 on the display 32 along the curve for displaying the translated character string, and causes the display 32 to display the character objects included in the character string indicating the translation result in accordance with the generated display information.

The display processing unit 53 is implemented by, for example, the display processing circuit 31 illustrated in FIG. 40, and includes the character string selection unit 18a, the outline addition unit 18b, and the character string moving unit 18c similarly to the display processing unit 18 illustrated in FIG. 1.

The display processing unit 53 illustrated in FIG. 39 includes the character string selection unit 18a, the outline addition unit 18b, and the character string moving unit 18c. However, this is only an example, and the display processing unit 53 may include the table storage unit 18d similarly to the display processing unit 18 illustrated in FIG. 31.

Unlike the display processing unit 18 illustrated in FIGS. 1 and 31, the display processing unit 53 generates the curve for displaying the translated character string having the length longer than or equal to the length of the character string indicating the translation result output from the translation unit 52. The display processing unit 53 causes the display 32 to display the character objects included in the character string indicating the translation result output from the translation unit 52 along the curve for displaying the translated character string.

In FIG. 39, each of the operation acceptance unit 1, the character management DB 2, the character management unit 3, the locus determination unit 4, the character string recognition unit 5, the curve information acquisition unit 9, the character string acquisition unit 10, the character attribute information acquisition unit 11, the length comparison unit 13, the extension curve shape determining unit 14, the curve extension unit 17, the translation unit 52, the display processing unit 53, and the character string temporary save unit 19 that are the components of the input display system, is implemented by dedicated hardware as illustrated in FIG. 40. That is, the input display system is assumed to be one implemented by the pointing device 21, the storage processing circuit 22, the character management processing circuit 23, the image generation processing circuit 24, the microphone 25, the voice recognition processing circuit 26, the input interface circuit 27, the length comparison processing circuit 28, the shape determination processing circuit 29, the curve extension processing circuit 30, the display processing circuit 31, the display 32, and the translation processing circuit 34.

However, the input display system may be one implemented by software, firmware, or a combination of software and firmware.

When the input display system is implemented by software or firmware or the like, the character management DB 2, the voice recognition dictionary DB 7, and the character string temporary save unit 19 are configured on the memory 41 of the computer illustrated in FIG. 3, and a program is stored in the memory 41 for causing the computer to execute processing procedures for the operation acceptance unit 1, the character management unit 3, the locus determination unit 4, the voice detection unit 6, the voice recognition unit 8, and the display control unit 51. Then, it is sufficient that the processor 42 illustrated in FIG. 3 executes the program stored in the memory 41.

Next, the operation of the input display system illustrated in FIG. 39 will be described.

However, since the components other than the translation unit 52 and the display processing unit 53 are similar to those of the input display system according to any one of the first to seventh embodiments, here, processing of the translation unit 52 and the display processing unit 53 will be mainly described.

When the character string acquisition unit 10 acquires a character string indicating the voice recognition result output from the character string recognition unit 5, the translation unit 52 translates the acquired character string, and outputs a character string indicating the translation result for the character string to each of the length comparison unit 13 and the display processing unit 53.

If the character string indicating the voice recognition result is "I went to the sea in summer vacation", for example, the character string indicating the translation result for the character string is "I went to the sea in summer vacation".

Similarly to the display processing unit 18 of FIG. 1 or 31, the display processing unit 53 causes the character string indicating the voice recognition result acquired by the character string recognition unit 5 to be displayed superimposed on the curve image acquired by the curve information acquisition unit 9.

Furthermore, if it is not possible to cause some character objects to be displayed along the curve since the length of the curve indicated by the curve information is shorter than the length of the character string, the display processing unit 53 causes the display 32 to display some character objects along the extension curve added by the curve extension unit 17, similarly to the display processing unit 18 of FIG. 1 or 31.

Upon receiving the character string indicating the translation result from the translation unit 52, the display processing unit 53 generates the curve for displaying the translated character string having the length longer than or equal to the length of the character string indicating the translation result.

At this time, character attribute information indicating the character width of the characters constituting the character string indicating the translation result is received from the character management unit 3.

For example, if the character string indicating the translation result is "I went to the sea in summer vacation", the number of characters is 36 including spaces. Thus, if the character width of the characters constituting the character string indicating the translation result is "2 mm", the length of the character string indicating the translation result is 72 mm as indicated in the following equation (5).

$$\text{Length of character string indicating translation result} = 2\text{ mm} \times 36 = 72\text{ mm} \qquad (5)$$

Thus, in this case, the length of the curve for displaying the translated character string is greater than or equal to 72 mm.

Furthermore, the shape of the curve for displaying the translated character string is the same as the shape of the curve representing the locus of the line drawn by the user's operation, that is, the shape of the curve indicated by the curve information acquired by the curve information acquisition unit 9. When the curve is extended by the curve extension unit 17, the shape is the same as the shape of the curve extended by the curve extension unit 17.

For example, if the shape of the curve representing the locus of the line drawn by the user's operation is an arc shape, the shape of the curve for displaying the translated character string is also the arc shape. If the shape of the curve representing the locus of the line drawn by the user's operation is a wavy line shape, the shape of the curve for displaying the translated character string is also the wavy line shape.

Note that, when the curve is extended by the curve extension unit 17 and the length of the curve for displaying the translated character string is longer than the length of the curve extended by the curve extension unit 17, or when the curve is not extended by the curve extension unit 17 and the length of the curve for displaying the translated character string is longer than the length of the curve indicated by the curve information acquired by the curve information acquisition unit 9, the curve for displaying the translated character string is extended. For the extension of the curve for displaying the translated character string, a method is used similar to the case of extending the curve indicated by the curve information. Specifically, the shape of the extension portion of the curve for displaying the translated character string is determined from the shape of the curve for displaying the translated character string, and the curve for displaying the translated character string is extended.

Upon generating the curve for displaying the translated character string, the display processing unit 53 generates display information for displaying the character objects included in the character string indicating the translation result on the display 32 along the curve for displaying the translated character string, and causes the display 32 to display the character objects included in the character string indicating the translation result in accordance with the display information.

Here, FIG. 41 is an explanatory diagram illustrating an example of display processing in the display processing unit 53 of the display control unit 51.

In step A, the display processing unit 53 displays a curve image of the curve representing the locus of the line drawn by the user's operation on the display 32.

When the voice recognition unit 8 performs recognition processing of the user's voice in step B, the display processing unit 53 causes the character objects included in the character string indicating the voice recognition result to be displayed superimposed on the curve image in step C. Steps A to C are the same as those in the first embodiment. However, here, an example is illustrated in a case where the curve information including the curve image is output from the locus determination unit 4 before the character string indicating the voice recognition result is output from the voice recognition unit 8.

In step D, the display processing unit 53 causes the display 32 to display the character objects included in the character string indicating the translation result along the curve for displaying the translated character string having the same shape as the curve representing the locus of the line drawn by the user's operation.

In the example of FIG. 41, the display processing unit 53 arranges the curve for displaying the translated character string on the lower side of the curve representing the locus of the line drawn by the user's operation, but the curve for displaying the translated character string may be arranged on the upper side of the curve representing the locus of the line drawn by the user's operation, or may be arranged on the left side or the right side.

In step E, the display processing unit 53 erases the curve image of the curve representing the locus of the line drawn by the user's operation.

In the input display system of the eighth embodiment, the display processing unit 53 causes the display 32 to display the curve for displaying the translated character string. However, this is only an example, and the curve for displaying the translated character string may be transparent.

In the input display system of the eighth embodiment, the character objects included in the character string indicating the voice recognition result and the character objects included in the character string indicating the translation result are displayed side by side. However, this is only an example, and as illustrated in FIG. 42, the display processing unit 53 may cause the character objects included in the character string indicating the voice recognition result to be displayed in step C, and then causing the character objects included in the character string indicating the translation result to be displayed from the beginning side superimposed on the curve image while causing the character objects included in the character string indicating the voice recognition result to be erased from the beginning side in step D. In this case, the character objects included in the finally displayed character string is only the character objects included in the character string indicating the translation result.

FIG. 42 is an explanatory diagram illustrating an example of display processing in the display processing unit 53 of the display control unit 51.

In the input display system of the eighth embodiment, as illustrated in FIG. 43, the display processing unit 53 may cause the character objects included in the character string indicating a result of back translation to be displayed side by side with the character objects included in the character string indicating the voice recognition result and the character string indicating the translation result. FIG. 43 is an explanatory diagram illustrating an example of displaying the character objects included in the character string indicating the translation result.

In the input display system of the eighth embodiment, the translation unit 52 performs translation from Japanese into English, so that the back translation in this case means that the translation result is retranslated from English into Japanese.

In the example of FIG. 43, in step D, the display processing unit 53 causes a character string in English indicating the translation result to be displayed under a character string in Japanese indicating the voice recognition result, and causes a character string in Japanese indicating the back translation to be displayed under the character string in English.

Furthermore, as illustrated in FIG. 44, in step D, the display processing unit 53 erases the character string in Japanese indicating the voice recognition result displayed superimposed on the curve image, and then causes the character string in English indicating the translation result to be displayed superimposed on the curve image. Then, the display processing unit 53 may cause the character string in Japanese indicating the back translation to be displayed under the character string in English. FIG. 44 is an explanatory diagram illustrating an example of displaying the character objects included in the character string indicating the translation result.

In the eighth embodiment described above, the input display control device 100 is configured so that the translation unit 52 is included for translating the character string acquired by the character string acquisition unit 10, and the display processing unit 53 generates the curve for displaying the translated character string having the length longer than or equal to the length of the character string indicating the translation result output from the translation unit 52, and generates the display information for displaying the character objects included in the character string indicating the translation result on the display 32 along the curve for displaying the translated character string. Thus, the input display control device 100 can cause all the character objects included in the character string to be displayed along the curve even when the length of the curve representing the locus of the line drawn by the operation of drawing the line is shorter than the character string indicating the translation result.

In the input display system of the eighth embodiment, the display processing unit 53 causes the character objects included in the character string indicating the voice recognition result and the character objects included in the character string indicating the translation result to be displayed side by side. However, this is only an example, and when the display processing unit 53 has a face-to-face configuration in which the display 32 includes two screens and the top sides of the two screens are in contact with each other as illustrated in FIG. 45, the display processing unit 53 may perform display as follows.

FIG. 45 is an explanatory diagram illustrating an example of display processing in the display processing unit 53 when the display 32 includes two face-to-face screens.

For example, the display processing unit 53 causes the character objects included in the character string indicating the voice recognition result to be displayed on the lower screen of the two face-to-face screens in the figure, and causes the character objects included in the character string indicating the translation result to be displayed on the upper screen of the two face-to-face screens in the figure.

Alternatively, the display processing unit 53 causes the character objects included in the character string indicating the translation result to be displayed on the lower screen of the two face-to-face screens, and causes the character objects included in the character string indicating the voice recognition result to be displayed on the upper screen of the two face-to-face screens.

However, since it is the two face-to-face screens, the characters are rotated 180 degrees on the upper screen of the two face-to-face screens.

Furthermore, even in the case of the two face-to-face screens, the display processing unit 53 may cause the character objects included in the character string indicating the result of the back translation to be displayed, as illustrated in FIG. 46. FIG. 46 is an explanatory diagram illustrating an example of displaying the character objects included in the character string indicating the translation result.

Note that, also in the eighth embodiment, as in the first embodiment, the input display control device 100 may be configured so that when some of the character objects included in the character string acquired by the character string acquisition unit 10 protrude out of the display area of the display 32 since the length of the character string acquired by the character string acquisition unit 10 is long, some of the character objects are arranged in the non-display area.

Furthermore, when some of the character objects included in the character string indicating the translation result protrude out of the display area of the display 32, some of the character objects indicating the translation result may be arranged in the non-display area. By doing so, it is possible to avoid a situation in which the character objects included in the character string indicating the translation result cannot be generated.

In a case where the character objects included in the character string indicating the translation result are arranged in the non-display area, when the user selects the character string indicating the translation result, outlines of a color different from that of the character objects may be added to the contours of the character objects included in the character string, as in the first embodiment.

Moreover, as in the first embodiment, the movement of the selected character string may be accepted. By doing so, it is possible to avoid a situation in which all the character objects included in the character string indicating the translation result cannot be displayed.

Furthermore, when the user selects and moves either or both of the character string acquired by the character string acquisition unit 10 and the character string indicating the translation result, the acquired character string and the character string indicating the translation result may be moved together. By doing so, it is possible to prevent the characters from being arranged at distant positions after the movement. Note that, a configuration is also possible in which movements are separately performed.

Moreover, similarly to the above, the back translation may be generated to straddle a border between the display area and the non-display area, and made selectable by the user and moved after the selection, whereby all the character objects included in the character string may be displayed.

Ninth Embodiment. This embodiment is not part of the claimed invention.

In the input display system illustrated in FIGS. 1 and 31, the character string recognition unit 5 acquires the character string indicating the voice recognition result as the character string to be displayed.

In a ninth embodiment, an input display system will be described in which a character string recognition unit 60 acquires a character string indicating the recognition result of characters drawn by the operation accepted by the operation acceptance unit 1, as the character string to be displayed.

FIG. 47 is a configuration diagram illustrating the input display system including an input display control device according to the ninth embodiment, and FIG. 48 is a hardware configuration diagram of the input display system according to the ninth embodiment.

In FIGS. 47 and 48, since the same reference numerals as those in FIGS. 1 and 2 denote the same or corresponding portions, the description thereof will be omitted.

The character string recognition unit 60 includes a character recognition processing unit 61, and outputs the character string indicating the recognition result of the characters drawn by the operation accepted by the operation acceptance unit 1 as a character string to be displayed, to each of the locus determination unit 4 and the character string acquisition unit 10.

The character recognition processing unit 61 is implemented by, for example, a character recognition processing circuit 35 in which an optical character recognition (OCR) function that is optical character recognition processing is implemented. The character recognition processing unit 61 recognizes the characters drawn by the operation accepted by the operation acceptance unit 1, and outputs the character string indicating the recognition result of the characters, as the character string to be displayed, to each of the locus determination unit 4 and the character string acquisition unit 10.

In FIG. 47, each of the operation acceptance unit 1, the character management DB 2, the character management unit 3, the locus determination unit 4, the character string recognition unit 60, the curve information acquisition unit 9, the character string acquisition unit 10, the character attribute information acquisition unit 11, the length comparison unit 13, the extension curve shape determining unit 14, the curve extension unit 17, the display processing unit 18, and the character string temporary save unit 19 that are components of the input display system, is implemented by dedicated hardware as illustrated in FIG. 48. That is, the input display system is assumed to be one implemented by the pointing device 21, the storage processing circuit 22, the character management processing circuit 23, the image generation processing circuit 24, the microphone 25, the voice recognition processing circuit 26, the input interface circuit 27, the length comparison processing circuit 28, the shape determination processing circuit 29, the curve extension processing circuit 30, the display processing circuit 31, the display 32, and the character recognition processing circuit 35.

However, the input display system may be one implemented by software, firmware, or a combination of software and firmware.

When the input display system is implemented by software or firmware or the like, the character management DB 2 and the character string temporary save unit 19 are configured on the memory 41 of the computer illustrated in FIG. 3, and a program is stored in the memory 41 for causing the computer to execute processing procedures for the operation acceptance unit 1, the character management unit 3, the locus determination unit 4, the character recognition processing unit 61, and the display control unit 12. Then, it is sufficient that the processor 42 illustrated in FIG. 3 executes the program stored in the memory 41.

FIG. 49 is an explanatory diagram illustrating an example of processing of displaying a character string indicating a character recognition result.

Next, the operation of the input display system illustrated in FIG. 47 will be described.

In the input display system illustrated in FIG. 47, it is assumed that the pointing device 21 implementing the operation acceptance unit 1 is a touch panel. Thus, when the user performs operation of drawing characters as operation of drawing lines on the touch panel by using one's finger or an input pen for the touch panel, the operation acceptance unit 1 accepts the operation of drawing the characters, and outputs a content of the operation to each of the locus determination unit 4 and the character string recognition unit 60.

The content of the operation of drawing the characters to be output is, for example, time-series data indicating a continuous change of position coordinates on the touch panel as coordinates of a position of the finger or a position of the input pen in contact with the touch panel.

In the example of FIG. 49, in step A, the user handwrites a character string "I want to eat Japanese food".

The character recognition processing unit 61 of the character string recognition unit 60 recognizes multiple characters drawn by the operation accepted by the operation acceptance unit 1, acquires a character string indicating the recognition result of the multiple characters, and outputs the acquired character string to each of the locus determination unit 4 and the input display control device 100.

Upon receiving the content of the operation of drawing one or more characters from the operation acceptance unit 1 and receiving the character string from the character recognition processing unit 61, the locus determination unit 4 performs processing of allocating the content of the operation of drawing the one or more characters for each character.

Specifically, it is as follows.

First, the locus determination unit 4 identifies a coordinate $X_{LEFT}$ having the smallest X coordinate and a coordinate $X_{RIGHT}$ having the largest X coordinate among the position coordinates on the touch panel indicated by the time-series data that is the content of the operation of drawing the characters. The locus determination unit 4 calculates the length in the X direction of the character string by subtracting the coordinate $X_{LEFT}$ from the coordinate $X_{RIGHT}$ identified.

Then, the locus determination unit 4 calculates the length in the X direction per character by dividing the length in the X direction of the character string by the number of characters, and also calculates a coordinate range in the X direction where each character exists, from the length in the X direction per character and the coordinates $X_{LEFT}$. For example, the coordinate range in the X direction where the n-th character from the left end of the character string exists is calculated as (length in the X direction per character × (n-1) + $X_{LEFT}$) to (length in the X direction per character × n + $X_{LEFT}$).

The locus determination unit 4 finds the coordinate range in the X direction including each position coordinate indicated by the time-series data, and allocates it to the coordinate range in the X direction corresponding to each position coordinate indicated by the time-series data, thereby allocating the content of the operation of drawing the one or more characters for each character.

Next, for a coordinate range unit in the X direction, the locus determination unit 4 calculates an average value of X coordinates and an average value of Y coordinates of multiple position coordinates indicated by the time-series data included in the coordinate range, as the center coordinates of the character corresponding to the coordinate range.

Upon calculating the center coordinates of each character included in the character string, the locus determination unit 4 generates one line by connecting the center coordinates of the respective characters as illustrated in step B of FIG. 49, sets the one line as a curve representing the locus of the character string, and outputs curve information indicating the curve to the input display control device 100.

Here, assuming that the sizes of the characters included in the character string are equal, the length in the X direction per character is calculated by dividing the length in the X direction of the character string by the number of characters. In the case of handwritten characters, the sizes of the characters are not always equal, so the coordinate range unit in the X direction may not match each character included in the character string.

However, in the input display system illustrated in FIG. 47, even if the center coordinates of each character are not exactly known, if the center coordinates are known of each area obtained by dividing an area where the character string exists in the X direction, a curve indicating an arrangement direction of the character string can be obtained. Thus, even when the sizes of the characters are not equal, the curve can be obtained by the above method.

Furthermore, here, when the locus determination unit 4 obtains the curve indicating the arrangement direction of the character string, each position coordinate indicated by the time-series data is allocated to the coordinate range unit in the X direction; however, for example, when the handwritten characters are written vertically, each position coordinate indicated by the time-series data may be allocated to a coordinate range unit in the Y direction.

It goes without saying that the method of allocating each position coordinate described here is only an example, and other methods may be used.

Furthermore, here, for simplicity of explanation, the locus determination unit 4 generates one line on the basis of the coordinates in the X direction and the coordinates in the Y direction; however, by considering the coordinates in the Z direction, it is possible to generate a three-dimensional line.

In the input display system illustrated in FIG. 47, the curve is obtained from the operation content of drawing characters. However, this is only an example, and when the user performs the operation of drawing a line described in the first embodiment separately from the operation of drawing characters and thus the operation acceptance unit 1 accepts the operation of drawing the characters and the operation of drawing the line, the locus determination unit 4 may determine the curve representing the locus of the drawn line from a content of the operation of drawing the line accepted by the operation acceptance unit 1.

When the character string acquisition unit 10 acquires the character string output from the character recognition processing unit 61 of the character string recognition unit 60, the display processing unit 18 generates display information for displaying the character string on the display 32 along the curve indicated by the curve information acquired by the curve information acquisition unit 9. The display processing unit 18 causes the display 32 to display the character string in accordance with the generated display information.

In step C of FIG. 49, the display processing unit 18 draws a curve representing a locus so that the locus and the handwritten characters are arranged side by side, and causes the character objects included in the character string to be displayed. However, this is not limited thereto, and the display processing unit 18 may, for example, cause the handwritten characters to be erased and then draw a curve at a position of the handwritten characters and cause the character objects included in the character string to be displayed.

Furthermore, the curve representing the locus may be transparent.

In the input display system illustrated in FIG. 47, the locus determination unit 4 can obtain the curve from the operation content of drawing characters. However, as in the first embodiment, the recognized character string is displayed with characters having predetermined attributes. Thus, when the length of the obtained curve is shorter than the length of the character string, the display processing unit 18 cannot cause some characters included in the character string to be displayed along the curve, as in the first embodiment.

In this case, as in the first embodiment, the curve extension unit 17 extends the curve, so that the display processing unit 18 causes some characters that are not displayed to be displayed.

Specifically, the length comparison unit 13 compares the length of the curve with the length of the character string, the extension curve shape determining unit 14 determines the shape of the extension curve, and the curve extension unit 17 adds the extension curve to the curve indicated by the curve information acquired by the curve information acquisition unit 9, whereby the curve is extended. Then, the display processing unit 18 causes some characters that are not displayed to be displayed along the extension curve.

In the ninth embodiment described above, the input display system is configured so that the character string recognition unit 60 recognizes the characters drawn by the operation accepted by the operation acceptance unit 1, and the character recognition processing unit 61 is included for acquiring the character string indicating the character recognition result as the character string to be displayed. Thus, even when the handwritten characters are displayed, the input display system can avoid a situation in which all the character objects included in the character string cannot be displayed, as in the first embodiment.

Note that, in the ninth embodiment as well, as in the first embodiment, the input display control device 100 may be configured so that when the length of the character string indicating the recognition result is long and thus some of the character objects included in the character string protrude out of the display area of the display 32, some of the character objects are arranged in the non-display area.

Furthermore, in a case where the character objects included in the character string indicating the recognition result are arranged in the non-display area, when the user selects the character string, outlines of a color different from that of the character objects may be added to the contours of the character objects included in the character string, as in the first embodiment.

Moreover, the movement of the selected character string may be accepted. By doing so, it is possible to avoid a situation in which all the character objects included in the character string indicating the recognition result cannot be generated.

Furthermore, when the user selects and moves either or both of the handwritten character string and the character string indicating the recognition result, the handwritten character string and the character string indicating the recognition result may be moved together. By doing so, it is possible to prevent the characters from being arranged at distant positions after the movement. Note that, a configuration is also possible in which movements are separately performed.

Tenth Embodiment. This embodiment is not part of the claimed invention.

In the input display system illustrated in FIG. 47, an example is illustrated in which the character string recognition unit 60 including the character recognition processing unit 61 is applied to the input display control device illustrated in FIG. 1.

In a tenth embodiment, an input display system will be described in which the character string recognition unit 60 including the character recognition processing unit 61 is applied to the input display control device illustrated in FIG. 39.

FIG. 50 is a configuration diagram illustrating the input display system including the input display control device according to the tenth embodiment.

FIG. 51 is an explanatory diagram illustrating an example of processing of displaying a character string indicating a translation result.

In the input display system illustrated in FIG. 47, the display processing unit 18 causes the display 32 to display the character string indicating the recognition result of the multiple characters along the curve indicated by the curve information acquired by the curve information acquisition unit 9.

On the other hand, the input display system illustrated in FIG. 50 is different from the input display system illustrated in FIG. 47 in that the display processing unit 53 also causes the display 32 to display the character string indicating the translation result along the curve indicated by the curve information as illustrated in step C of FIG. 51.

In the tenth embodiment described above, as in the eighth embodiment, even when the length of the curve indicated by the curve information acquired by the curve information acquisition unit 9 is shorter than the character string indicating the translation result by the translation unit 52, the display processing unit 53 can cause the entire character string to be displayed along the curve.

Note that, in the tenth embodiment as well, as in the first embodiment, the input display control device 100 may be configured so that when the length of the character string indicating the translation result is long and thus some of the character objects included in the character string protrude out of the display area of the display 32, some of the character objects are arranged in the non-display area.

Furthermore, in a case where the character string indicating the translation result is disposed in the non-display area, when the user selects the character string indicating the character string, outlines of a color different from that of the character objects may be added to the contours of the character objects included in the character string, as in the first embodiment.

Moreover, the movement of the selected character string may be accepted. By doing so, it is possible to avoid a situation in which all the character objects included in the character string indicating the translation result cannot be generated.

Furthermore, when the user selects and moves either or both of the handwritten character string and the character string indicating the translation result, the handwritten character string and the character string indicating the translation result may be moved together. By doing so, it is possible to prevent the characters from being arranged at distant positions after the movement. Note that, a configuration is also possible in which movements are separately performed.

INDUSTRIAL APPLICABILITY

The input display control device, the input display control method, and the input display system according to the present invention are suitable for applications for displaying arranged character objects.

REFERENCE SIGNS LIST

1: operation acceptance unit, 2: character management DB, 3: character management unit, 4: locus determination unit, 5: character string recognition unit, 6: voice detection unit, 7: voice recognition dictionary DB, 8: voice recognition unit, 9: curve information acquisition unit, 10: character string acquisition unit, 11: character attribute information acquisition unit, 12: display control unit, 13: length comparison unit, 14: extension curve shape determining unit, 15: curve storage unit, 16: shape determination processing unit, 17: curve extension unit, 18: display processing unit, 18a: character string selection unit, 18b: outline addition unit, 18c: character string moving unit, 18d: table storage unit, 19: character string temporary save unit, 21: pointing device, 22: storage processing circuit, 23: character management processing circuit, 24: image generation processing circuit, 25: microphone, 26: voice recognition processing circuit, 27: input interface circuit, 28: length comparison processing circuit, 29: shape determination processing circuit, 30: curve extension processing circuit, 31: display processing circuit, 32: display, 34: translation processing circuit, 35: character recognition processing circuit, 41: memory, 42: processor, 51: display control unit, 52: translation unit, 53: display processing unit, 60: character string recognition unit, 61: character recognition processing unit, 70: camera, 71: image acquisition unit, 100: input display control device

## Claims

**1.** An input display control device comprising:

an image acquisition unit (71) for acquiring an image of a three-dimensional space, wherein the image is acquired from a camera (70), which images the three-dimensional space;
a curve information acquisition unit (9) for acquiring curve information indicating a three-dimensional curve;
a character string acquisition unit (10) for acquiring a character string; and
a display control unit (12; 53) for generating display information for superimposing character objects that are objects indicating characters included in the character string acquired by the character string acquisition unit on the image acquired by the image acquisition unit, along an extended curve of the curve indicated by the curve information acquired by the curve information acquisition unit, wherein the extended curve is generated by the display control unit based on the shape of the curve when a length of the curve is short in comparison to a length of the character string; wherein
when some of the character objects for the characters included in the character string acquired by the character string acquisition unit protrude out of a display area of a display, since a length of the character string acquired by the character string acquisition unit is long, the display control unit generates the display information for arranging said some of the character objects for the characters in a surrounding three-dimensional space of a three-dimensional space indicated by the display area along the extended curve obtained by extending the curve indicated by the curve information acquired by the curve information acquisition unit to non-display area;

wherein when a position of the three-dimensional space indicated by the image acquired by the image acquisition unit is changed and thus character objects arranged in the surrounding three-dimensional space enter the three-dimensional space whose position is changed, the display control unit generates display information for superimposing the character objects arranged in the surrounding three-dimensional space on the image acquired by the image acquisition unit.

2. The input display control device according to claim 1, wherein the display control unit includes a character string selection unit (18a) for accepting selection of the character string in which some of the character objects for the characters are arranged in the surrounding three-dimensional space.

3. The input display control device according to claim 3, wherein when a user's contact time with respect to a character object superimposed on the image, among the character objects for the characters included in the character string in which some of the character objects for the characters are arranged in the surrounding three-dimensional space, is longer than a threshold value, the character string selection unit accepts selection of the character string.

4. The input display control device according to claim 2, wherein the display control unit includes an outline addition unit (18b) for adding, to contours of the character objects for the character included in the character string of which selection is accepted by the character string selection unit, outlines of a color different from that of the character objects.

5. The input display control device according to claim 2, wherein the display control unit includes a character string moving unit (18c) for accepting movement of the character string of which selection is accepted by the character string selection unit.

6. The input display control device according to claim 5, wherein when the character string moving unit accepts movement for disposing the entire character string of which selection is accepted by the character string selection unit in the three-dimensional space indicated by the image acquired by the image acquisition unit, the display control unit generates display information for superimposing, on the image, the character objects for all the characters included in the character string.

7. The input display control device according to claim 5, wherein when the character string moving unit accepts movement for moving the entire character string of which selection is accepted by the character string selection unit outside the image acquired by the image acquisition unit, the display control unit discards the character string.

8. The input display control device according to claim 1, wherein the display control unit generates display information for superimposing, on the image acquired by the image acquisition unit, the character objects for all the characters included in the character string in which some of the character objects for the characters are arranged in the surrounding three-dimensional space, by moving the entire character string into the three-dimensional space indicated by the image.

9. An input display control method, comprising:

acquiring an image of a three-dimensional space, by an image acquisition unit (71), wherein the image is acquired from a camera (70), which images the three-dimensional space;
acquiring curve information indicating a three-dimensional curve, by a curve information acquisition unit (9);
acquiring a character string, by a character string acquisition unit (10); and
performing processing of generating display information for superimposing character objects that are objects indicating characters included in the character string acquired by the character string acquisition unit on the image acquired by the image acquisition unit, along an extended curve of the curve indicated by the curve information acquired by the curve information acquisition unit, by a display control unit (12; 53), wherein the extended curve is generated by the display control unit based on the shape of the curve when a length of the curve is short in comparison to a length of the character string;
wherein
when some of the character objects for the characters included in the character string acquired by the character string acquisition unit protrude out of a display area of a display, since a length of the character string acquired by the character string acquisition unit is long, the display control unit generates the display information for arranging some of the character objects for the characters in a surrounding three-dimensional space of a three-dimensional space indicated by the display area along the extended curve obtained by extending the curve indicated by the curve information acquired by the curve information acquisition unit to non-display area;
wherein when a position of the three-dimensional space indicated by the image acquired is changed and thus character objects arranged in the surrounding three-dimensional space enter the three-dimensional space whose position is changed, generating display information for superimposing the character objects arranged in the surrounding three-dimensional space on the image acquired.

**Patentansprüche**

1. Eingabeanzeigesteuerungsvorrichtung, umfassend:

eine Bilderfassungseinheit (71) zum Erfassen eines Bildes eines dreidimensionalen Raums, wobei das Bild von einer Kamera (70) erfasst wird, die den dreidimensionalen Raum abbildet;
eine Kurveninformationserfassungseinheit (9) zum Erfassen von Kurveninformationen, die eine dreidimensionale Kurve angeben;
eine Zeichenkettenerfassungseinheit (10) zum Erfassen einer Zeichenkette; und
eine Anzeigesteuereinheit (12; 53) zum Erzeugen von Anzeigeinformationen zum Überlagern von Zeichenobjekten, die Objekte sind, die Zeichen angeben, die in der von der Zeichenkettenerfassungseinheit erfassten Zeichenkette enthalten sind, auf dem von der Bilderfassungseinheit erfassten Bild entlang einer verlängerten Kurve der Kurve, die durch die von der Kurveninformationserfassungseinheit erfassten Kurveninformationen angegeben wird, wobei die verlängerte Kurve von der Anzeigesteuereinheit basierend auf der Form der Kurve erzeugt wird, wenn eine Länge der Kurve im Vergleich zu einer Länge der Zeichenkette kurz ist;
wobei
wenn einige der Zeichenobjekte für die Zeichen, die in der Zeichenkette enthalten sind, die von der Zeichenkettenerfassungseinheit erfasst wurde, aus einem Anzeigebereich einer Anzeige herausragen, da eine Länge der Zeichenkette, die von der Zeichenkettenerfassungseinheit erfasst wurde, lang ist, die Anzeigesteuereinheit die Anzeigeinformationen zum Anordnen der einigen der Zeichenobjekte für die Zeichen in einem umgebenden dreidimensionalen Raum eines dreidimensionalen Raums erzeugt, der durch den Anzeigebereich entlang der verlängerten Kurve angegeben wird, die durch Verlängern der Kurve, die durch die Kurveninformationen angegeben wird, die von der Kurveninformationserfassungseinheit erfasst wurden, zu einem Nicht-Anzeigebereich erhalten wird;
wobei die Anzeigesteuereinheit, wenn eine Position des dreidimensionalen Raums, die durch das von der Bilderfassungseinheit erfasste Bild angegeben wird, geändert wird und somit Zeichenobjekte, die in dem umgebenden dreidimensionalen Raum angeordnet sind, in den dreidimensionalen Raum eintreten, dessen Position geändert wird, Anzeigeinformationen zum Überlagern der in dem umgebenden dreidimensionalen Raum angeordneten Zeichenobjekte auf dem von der Bilderfassungseinheit erfassten Bild erzeugt.

2. Eingabeanzeigesteuerungsvorrichtung nach Anspruch 1, wobei die Anzeigesteuereinheit eine Zeichenkettenauswahleinheit (18a) zur Annahme der Auswahl der Zeichenkette enthält, in der einige der Zeichenobjekte für die Zeichen in dem umgebenden dreidimensionalen Raum angeordnet sind.

3. Eingabeanzeigesteuerungsvorrichtung nach Anspruch 3, wobei die Auswahl der Zeichenkette durch die Zeichenkettenauswahleinheit akzeptiert wird, wenn die Kontaktzeit des Benutzers in Bezug auf ein dem Bild überlagertes Zeichenobjekt unter den Zeichenobjekten für die Zeichen, die in der Zeichenkette enthalten sind, in der einige der Zeichenobjekte für die Zeichen in dem umgebenden dreidimensionalen Raum angeordnet sind, länger als ein Schwellenwert ist.

4. Eingabeanzeigesteuerungsvorrichtung nach Anspruch 2, wobei die Anzeigesteuereinheit eine Umrissadditionseinheit (18b) zum Hinzufügen von Umrissen einer Farbe, die sich von der Farbe der Zeichenobjekte unterscheidet, zu den Konturen der Zeichenobjekte für das Zeichen, das in der Zeichenkette enthalten ist, deren Auswahl von der Zeichenkettenauswahleinheit akzeptiert wird, umfasst.

5. Eingabeanzeigesteuerungsvorrichtung nach Anspruch 2, wobei die Anzeigesteuereinheit eine Zeichenkettenverschiebungseinheit (18c) zur Annahme der Verschiebung der Zeichenkette, deren Auswahl von der Zeichenkettenauswahleinheit angenommen wird, enthält.

6. Eingabeanzeigesteuerungsvorrichtung nach Anspruch 5, wobei, wenn die Zeichenkettenverschiebungseinheit eine Verschiebung zum Anordnen der gesamten Zeichenkette akzeptiert, deren Auswahl von der Zeichenketten-Auswahleinheit in dem dreidimensionalen Raum akzeptiert wird, der durch das von der Bilderfassungseinheit erfasste Bild angegeben wird, die Anzeigesteuereinheit Anzeigeinformationen zum Überlagern der Zeichenobjekte für alle in der Zeichenkette enthaltenen Zeichen auf dem Bild erzeugt.

7. Eingabeanzeigesteuerungsvorrichtung nach Anspruch 5, wobei die Anzeigesteuereinheit die Zeichenkette verwirft, wenn die Zeichenkettenverschiebungseinheit eine Verschiebung zum Verschieben der gesamten Zeichenkette akzeptiert, deren Auswahl durch die Zeichenkettenauswahleinheit außerhalb des durch die Bilderfassungseinheit erfassten Bildes akzeptiert wird.

8. Eingabeanzeigesteuerungsvorrichtung nach Anspruch 1, wobei die Anzeigesteuereinheit Anzeigeinformationen erzeugt, um auf dem von der Bilderfassungseinheit erfassten Bild die Zeichenobjekte für alle in der Zeichenkette enthaltenen Zeichen zu überlagern, wobei einige der Zeichenobjekte für die Zeichen in dem umgebenden dreidimensionalen Raum angeordnet sind, indem die gesamte Zeichenkette in den durch das Bild angegebenen dreidimensionalen Raum bewegt wird.

9. Eingabeanzeigesteuerungsverfahren, umfassend:

Erfassen eines Bildes eines dreidimensionalen Raumes durch eine Bilderfassungseinheit (71), wobei das Bild von einer Kamera (70) erfasst wird, die den dreidimensionalen Raum abbildet;
Erfassen von Kurveninformationen, die eine dreidimensionale Kurve angeben, durch eine Kurveninformationserfassungseinheit (9);
Erfassen einer Zeichenkette durch eine Zeichenkettenerfassungseinheit (10); und
Durchführen einer Verarbeitung zum Erzeugen von Anzeigeinformationen zum Überlagern von Zeichenobjekten, die Objekte sind, die Zeichen angeben, die in der Zeichenkette enthalten sind, die von der Zeichenkettenerfassungseinheit erfasst wurde, auf dem Bild, das von der Bilderfassungseinheit erfasst wurde, entlang einer verlängerten Kurve der Kurve, die durch die Kurveninformationen angezeigt wird, die von der Kurveninformationserfassungseinheit erfasst wurden, durch eine Anzeigesteuereinheit (12; 53), wobei die verlängerte Kurve von der Anzeigesteuereinheit basierend auf der Form der Kurve erzeugt wird, wenn eine Länge der Kurve im Vergleich zu einer Länge der Zeichenkette kurz ist;
wobei
wenn einige der Zeichenobjekte für die Zeichen, die in der Zeichenkette enthalten sind, die von der Zeichenkettenerfassungseinheit erfasst wurde, aus einem Anzeigebereich einer Anzeige herausragen, da eine Länge der Zeichenkette, die von der Zeichenkettenerfassungseinheit erfasst wurde, lang ist, die Anzeigesteuereinheit die Anzeigeinformationen zum Anordnen von einigen der Zeichenobjekte für die Zeichen in einem umgebenden dreidimensionalen Raum eines dreidimensionalen Raums erzeugt, der durch den Anzeigebereich entlang der verlängerten Kurve angezeigt wird, die durch Verlängern der Kurve, die durch die Kurveninformationen angegeben wird, die von der Kurveninformationserfassungseinheit erfasst wurden, zu einem Nicht-Anzeigebereich erhalten wird;
wobei, wenn eine Position des dreidimensionalen Raums, die durch das erfasste Bild angegeben wird, geändert wird und somit Zeichenobjekte, die in dem umgebenden dreidimensionalen Raum angeordnet sind, in den dreidimensionalen Raum eintreten, dessen Position geändert wird, Anzeigeinformationen zum Überlagern der Zeichenobjekte, die in dem umgebenden dreidimensionalen Raum angeordnet sind, auf dem erfassten Bild erzeugt werden.

## Revendications

1. Dispositif de commande d’affichage d’entrée comprenant:

une unité d’acquisition d’images (71) pour acquérir une image d’un espace tridimensionnel, dans lequel l’image est acquise à partir d’un appareil photo (70) qui prend des images de l’espace tridimensionnel;
une unité d’acquisition d’informations de courbe (9) pour acquérir des informations de courbe indiquant une courbe tridimensionnelle;
une unité d’acquisition de chaîne de caractères (10) pour acquérir une chaîne de caractères; et
une unité de commande d’affichage (12; 53) pour générer des informations d’affichage afin de superposer des objets de caractère qui sont des objets indiquant des caractères inclus dans la chaîne de caractères acquise par l'unité d'acquisition de chaîne de caractères sur l'image acquise par l'unité d'acquisition d'images, le long d'une courbe étendue de la courbe indiquée par les informations de courbe acquises par l'unité d'acquisition d'informations de courbe, dans lequel la courbe étendue est générée par l'unité de commande d'affichage sur la base de la forme de la courbe lorsqu'une longueur de la courbe est courte par rapport à une longueur de la chaîne de caractères;
dans lequel
lorsque certains des objets de caractère pour les caractères inclus dans la chaîne de caractères acquise par l'unité d'acquisition de chaîne de caractères se trouvent au-delà d'une zone d'affichage d'un écran, étant donné qu'une longueur de la chaîne de caractères acquise par l'unité d'acquisition de chaîne de caractères est importante, l'unité de commande d'affichage génère les informations d'affichage permettant d'agencer lesdits certains des objets de caractère pour les caractères dans un espace tridimensionnel environnant d'un espace tridimensionnel indiqué par la zone d'affichage le long de la courbe étendue obtenue en étendant la courbe indiquée par les informations de courbe acquises par l'unité d'acquisition d'informations de courbe à la zone de non-affichage;
dans lequel lorsqu'une position de l'espace tridimensionnel indiqué par l'image acquise par l'unité d'acquisition d'images est modifiée et que des objets de caractère agencés dans l'espace tridimensionnel environnant entrent dans l'espace tridimensionnel dont la position est modifiée, l'unité de commande d'affichage génère des informations d'affichage pour superposer les objets de caractère agencés dans l'espace tridimensionnel environnant à l'image acquise par l'unité d'acquisition d'images.

**2.** Dispositif de commande d'affichage d'entrée selon la revendication 1, dans lequel l'unité de commande d'affichage comprend une unité de sélection de chaîne de caractères (18a) pour accepter la sélection de la chaîne de caractères dans laquelle certains des objets de caractère sont agencés dans l'espace tridimensionnel environnant.

**3.** Dispositif de commande d'affichage d'entrée selon la revendication 3, dans lequel lorsque le temps de contact d'un utilisateur par rapport à un objet de caractère superposé à l'image, parmi les objets de caractère pour les caractères inclus dans la chaîne de caractères dans laquelle certains des objets de caractère pour les caractères sont agencés dans l'espace tridimensionnel environnant, est plus long qu'une valeur seuil, l'unité de sélection de chaîne de caractères accepte la sélection de la chaîne de caractères.

**4.** Dispositif de commande d'affichage d'entrée selon la revendication 2, dans lequel l'unité de commande d'affichage comporte une unité d'ajout de contour (18b) pour ajouter, à des contours des objets de caractère pour le caractère inclus dans la chaîne de caractères dont la sélection est acceptée par l'unité de sélection de chaîne de caractères, des contours d'une couleur différente de celle des objets de caractère.

**5.** Dispositif de commande d'affichage d'entrée selon la revendication 2, dans lequel l'unité de commande d'affichage inclut une unité de déplacement de chaîne de caractères (18c) pour accepter le déplacement de la chaîne de caractères dont la sélection est acceptée par l'unité de sélection de chaîne de caractères.

**6.** Dispositif de commande d'affichage d'entrée selon la revendication 5, dans lequel, lorsque l'unité de déplacement de chaîne de caractères accepte le déplacement pour disposer l'ensemble de la chaîne de caractères dont la sélection est acceptée par l'unité de sélection de chaîne de caractères dans l'espace tridimensionnel indiqué par l'image acquise par l'unité d'acquisition d'images, l'unité de commande d'affichage génère des informations d'affichage pour superposer, à l'image, les objets de caractère pour tous les caractères inclus dans la chaîne de caractères.

**7.** Dispositif de commande d'affichage d'entrée selon la revendication 5, dans lequel, lorsque l'unité de déplacement de chaîne de caractères accepte le déplacement pour déplacer l'ensemble de la chaîne de caractères dont la sélection est acceptée par l'unité de sélection de chaîne de caractères en dehors de l'image acquise par l'unité d'acquisition d'images, l'unité de commande d'affichage rejette la chaîne de caractères.

**8.** Dispositif de commande d'affichage d'entrée selon la revendication 1, dans lequel l'unité de commande d'affichage génère des informations d'affichage pour superposer, à l'image acquise par l'unité d'acquisition d'images, les objets de caractère pour tous les caractères inclus dans la chaîne de caractères dans laquelle certains des objets de caractère pour les caractères sont agencés dans l'espace tridimensionnel environnant, en déplaçant la chaîne de caractères entière dans l'espace tridimensionnel indiqué par l'image.

**9.** Procédé de commande d'affichage d'entrée, comprenant:

l'acquisition d'une image d'un espace tridimensionnel par une unité d'acquisition d'images (71), dans lequel l'image est acquise à partir d'un appareil photo (70) qui prend des images de l'espace tridimensionnel;
l'acquisition d'informations de courbe indiquant une courbe tridimensionnelle, par une unité d'acquisition d'informations de courbe (9);
l'acquisition d'une chaîne de caractères par une unité d'acquisition de chaîne de caractères (10); et
la réalisation d'un traitement de génération d'informations d'affichage pour superposer des objets de caractère qui sont des objets indiquant des caractères inclus dans la chaîne de caractères acquise par l'unité d'acquisition de chaîne de caractères à l'image acquise par l'unité d'acquisition d'images, le long d'une courbe étendue de la courbe indiquée par les informations de courbe acquises par l'unité d'acquisition d'informations de courbe, par une unité de commande d'affichage (12; 53), dans lequel la courbe étendue est générée par l'unité de commande d'affichage sur la base de la forme de la courbe lorsqu'une longueur de la courbe est courte par rapport à une longueur de la chaîne de caractères;
dans lequel
lorsque certains des objets de caractère pour les caractères inclus dans la chaîne de caractères acquise par l'unité d'acquisition de chaîne de caractères se trouvent au-delà d'une zone d'affichage d'un écran, étant donné qu'une longueur de la chaîne de caractères acquise par l'unité d'acquisition de chaîne de caractères est importante, l'unité de commande d'affichage génère les informations d'affichage permettant d'agencer certains des objets de caractère pour les caractères dans un espace tridimensionnel environnant d'un espace tridimensionnel indiqué par la zone d'affichage le long de la courbe étendue obtenue en étendant la courbe indiquée par les informations de courbe acquises par l'unité d'acquisition d'informations de courbe à la zone de non-affichage ;
dans lequel lorsqu'une position de l'espace tridimensionnel indiqué par l'image acquise est modifiée et que des objets de caractère agencés dans l'espace tridimensionnel environnant entrent dans l'espace tridimensionnel dont la position est modifiée, des informations d'affichage sont générées pour superposer les objets de caractère agencés dans l'espace tridimensionnel environnant à l'image acquise.

FIG. 1

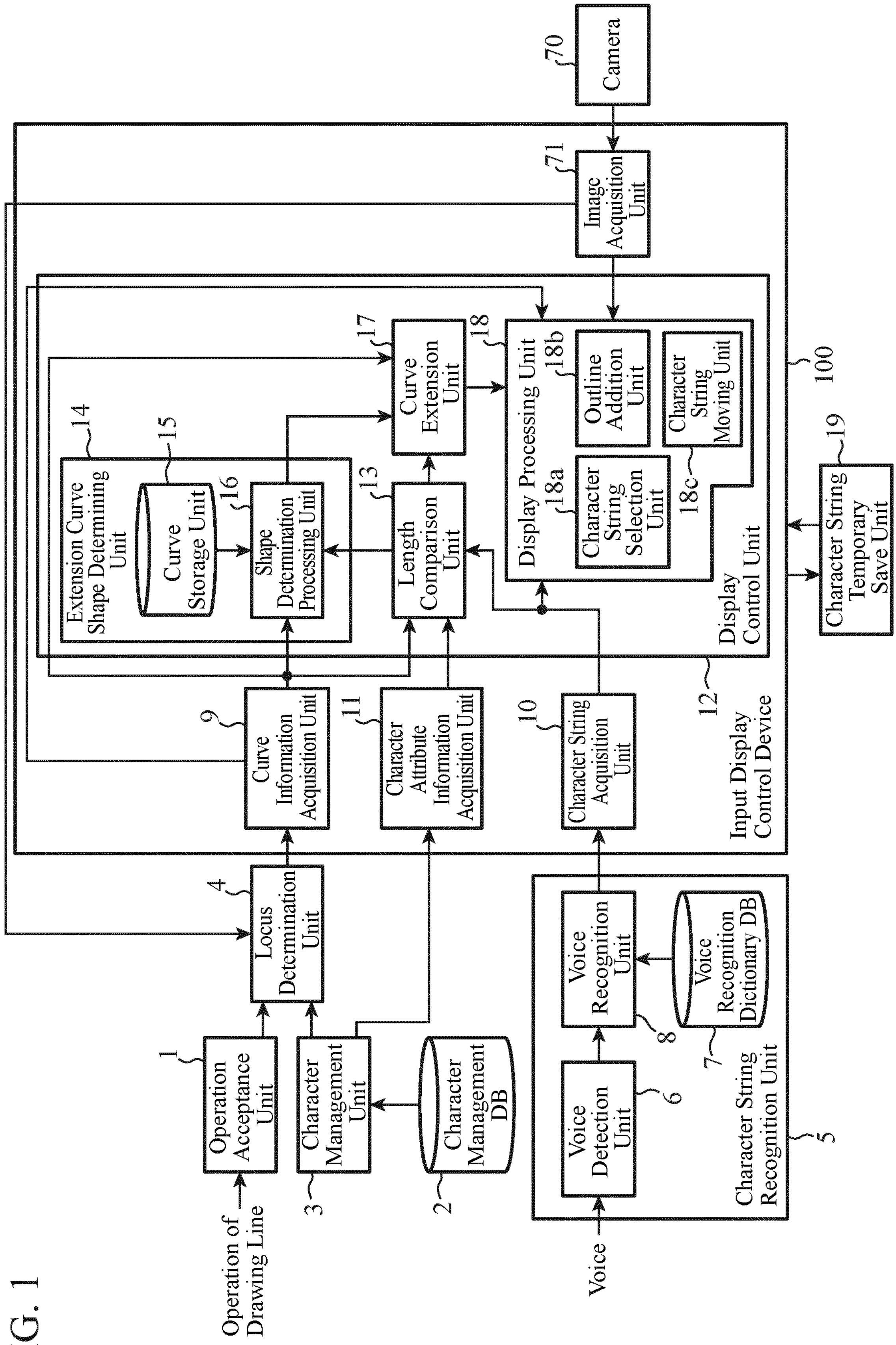
Operation of Drawing Line
1
Operation Acceptance Unit
2
Character Management DB
3
Character Management Unit
4
Locus Determination Unit
5
Character String Recognition Unit
Voice
6
Voice Detection Unit
7
Voice Recognition Dictionary DB
8
Voice Recognition Unit
9
Curve Information Acquisition Unit
10
Character String Acquisition Unit
11
Character Attribute Information Acquisition Unit
12
Display Control Unit
13
Length Comparison Unit
14
Extension Curve Shape Determining Unit
15
Curve Storage Unit
16
Shape Determination Processing Unit
17
Curve Extension Unit
18
Display Processing Unit
18a
Character String Selection Unit
18b
Outline Addition Unit
18c
Character String Moving Unit
19
Character String Temporary Save Unit
70
Camera
71
Image Acquisition Unit
100
Input Display Control Device

FIG. 2

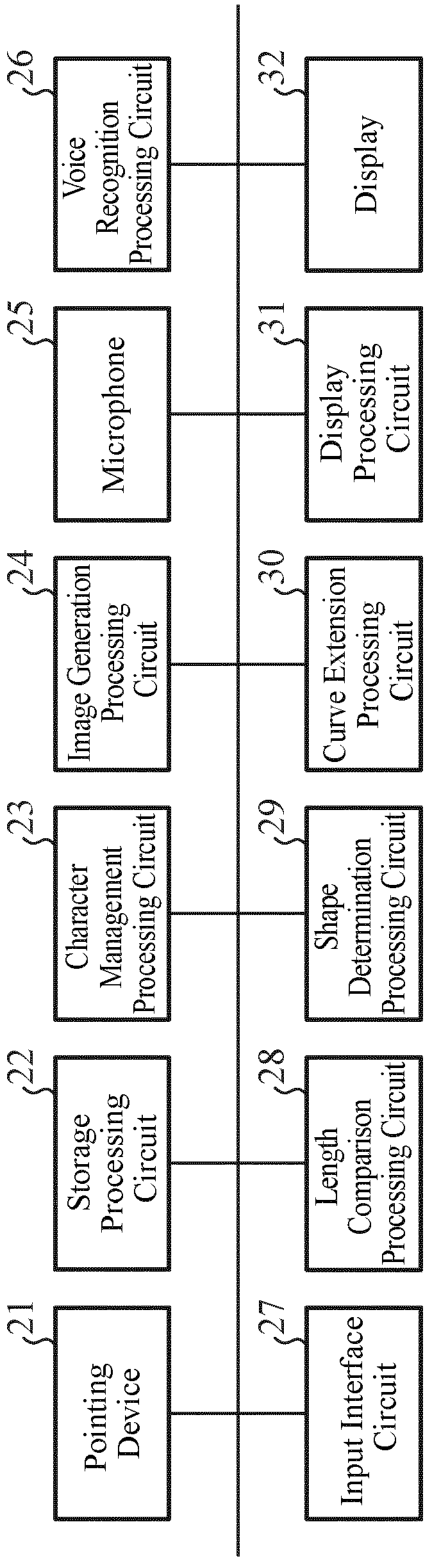
21
Pointing Device
22
Storage Processing Circuit
23
Character Management Processing Circuit
24
Image Generation Processing Circuit
25
Microphone
26
Voice Recognition Processing Circuit
27
Input Interface Circuit
28
Length Comparison Processing Circuit
29
Shape Determination Processing Circuit
30
Curve Extension Processing Circuit
31
Display Processing Circuit
32
Display

FIG. 3

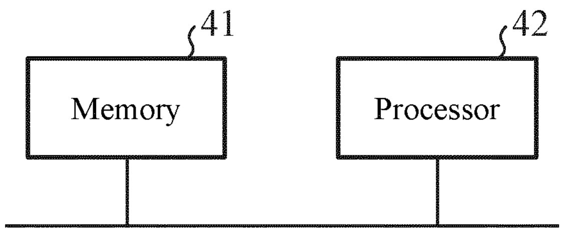

FIG. 4

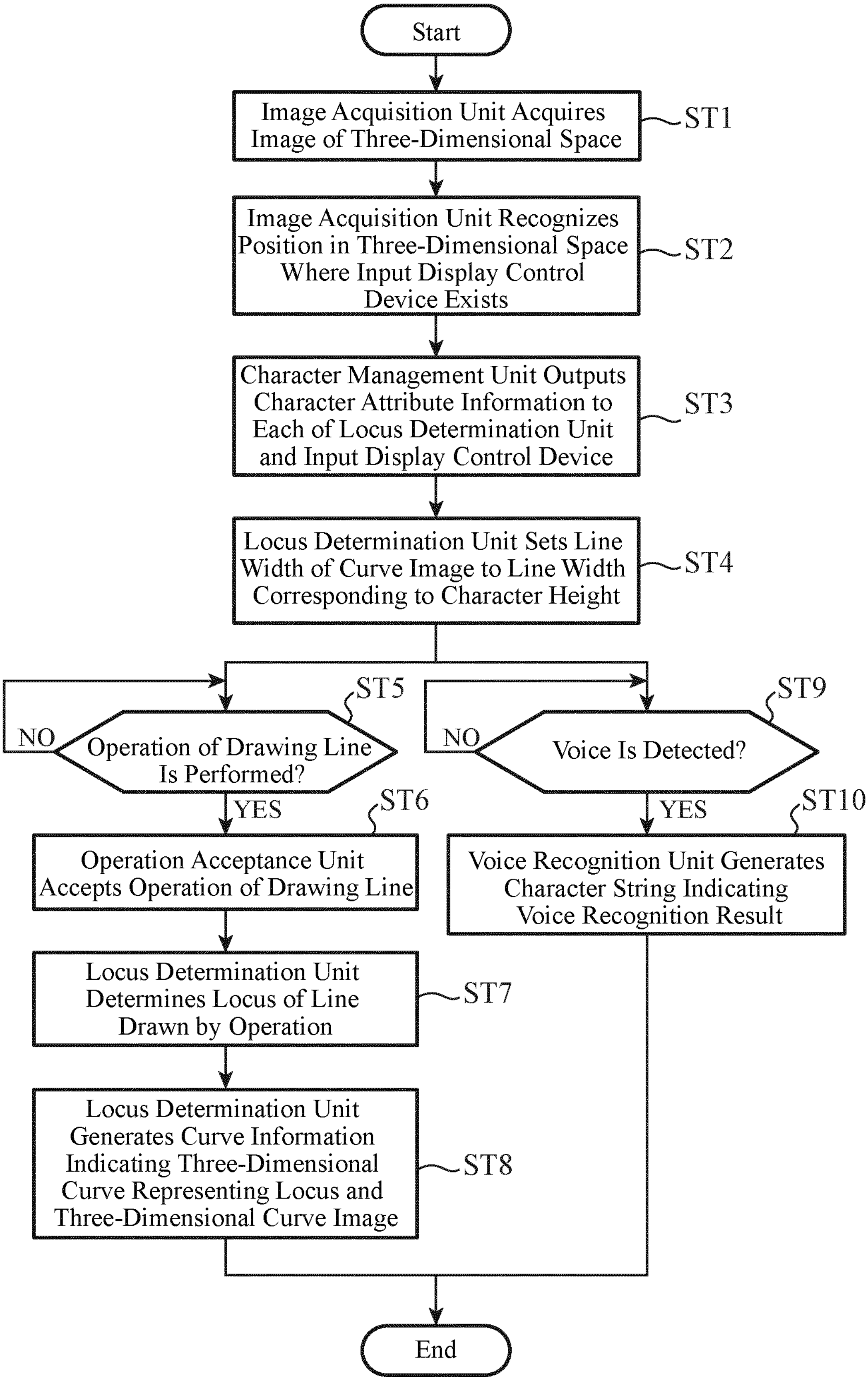
Start
Image Acquisition Unit Acquires Image of Three-Dimensional Space
ST1
Image Acquisition Unit Recognizes Position in Three-Dimensional Space Where Input Display Control Device Exists
ST2
Character Management Unit Outputs Character Attribute Information to Each of Locus Determination Unit and Input Display Control Device
ST3
Locus Determination Unit Sets Line Width of Curve Image to Line Width Corresponding to Character Height
ST4
ST5
NO
Operation of Drawing Line Is Performed?
YES
ST6
Operation Acceptance Unit Accepts Operation of Drawing Line
Locus Determination Unit Determines Locus of Line Drawn by Operation
ST7
Locus Determination Unit Generates Curve Information Indicating Three-Dimensional Curve Representing Locus and Three-Dimensional Curve Image
ST8
ST9
NO
Voice Is Detected?
YES
ST10
Voice Recognition Unit Generates Character String Indicating Voice Recognition Result
End

FIG. 5

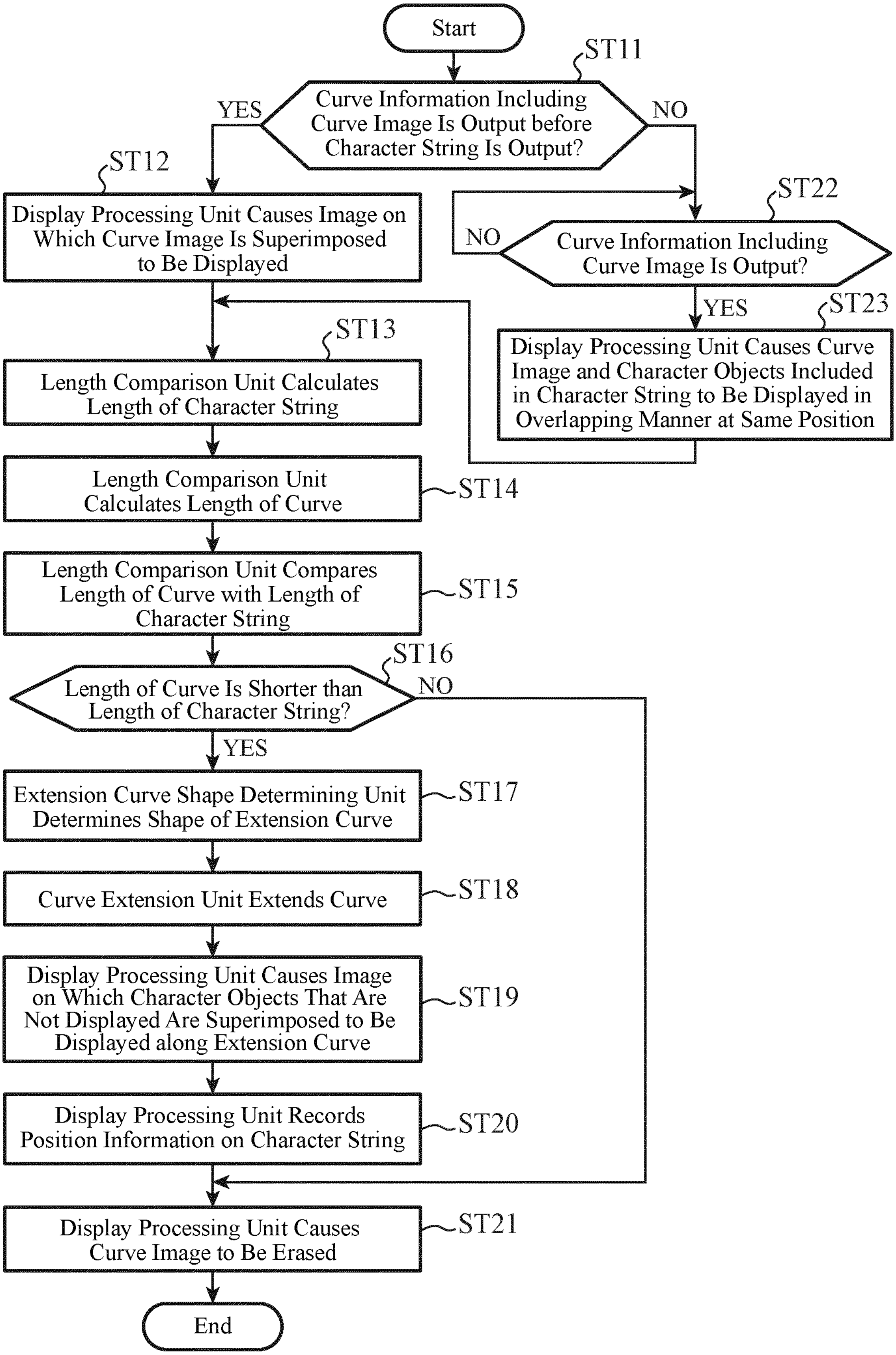
Start
ST11
Curve Information Including Curve Image Is Output before Character String Is Output?
YES
NO
ST12
Display Processing Unit Causes Image on Which Curve Image Is Superimposed to Be Displayed
ST22
NO
Curve Information Including Curve Image Is Output?
YES
ST23
Display Processing Unit Causes Curve Image and Character Objects Included in Character String to Be Displayed in Overlapping Manner at Same Position
ST13
Length Comparison Unit Calculates Length of Character String
Length Comparison Unit Calculates Length of Curve
ST14
Length Comparison Unit Compares Length of Curve with Length of Character String
ST15
ST16
Length of Curve Is Shorter than Length of Character String?
NO
YES
Extension Curve Shape Determining Unit Determines Shape of Extension Curve
ST17
Curve Extension Unit Extends Curve
ST18
Display Processing Unit Causes Image on Which Character Objects That Are Not Displayed Are Superimposed to Be Displayed along Extension Curve
ST19
Display Processing Unit Records Position Information on Character String
ST20
Display Processing Unit Causes Curve Image to Be Erased
ST21
End

FIG. 6

| Character Type | Character Size | Character Height | Character Width |
|---|---|---|---|
| A | 5 | 2.5 mm | 2.5 mm |
| | 10 | 5 mm | 5 mm |
| | 15 | 7.5 mm | 7.5 mm |
| | 20 | 10 mm | 10 mm |
| B | 5 | 2 mm | 1.25 mm |
| | 10 | 4 mm | 2.5 mm |
| | 15 | 6 mm | 3.75 mm |
| | 20 | 8 mm | 5 mm |
| C | ... | ... | ... |
| | ... | ... | ... |
| | ... | ... | ... |
| | ... | ... | ... |

FIG. 7A

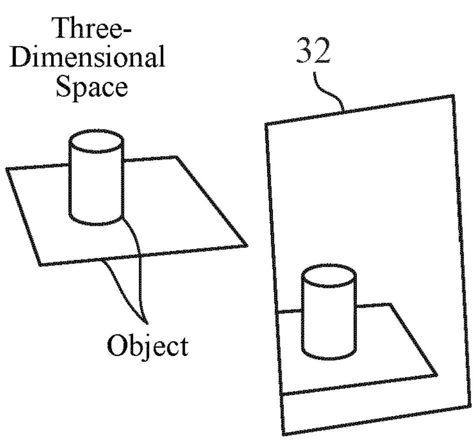


FIG. 7B

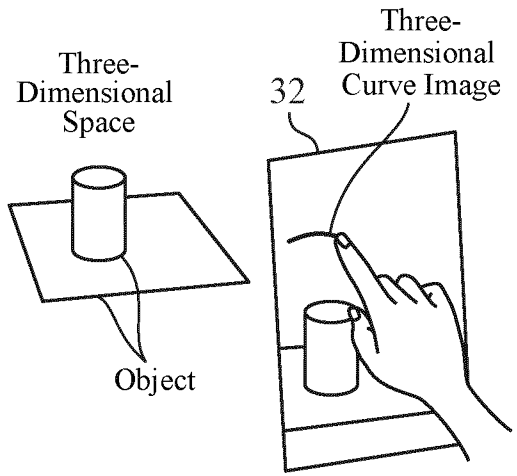


FIG. 7C

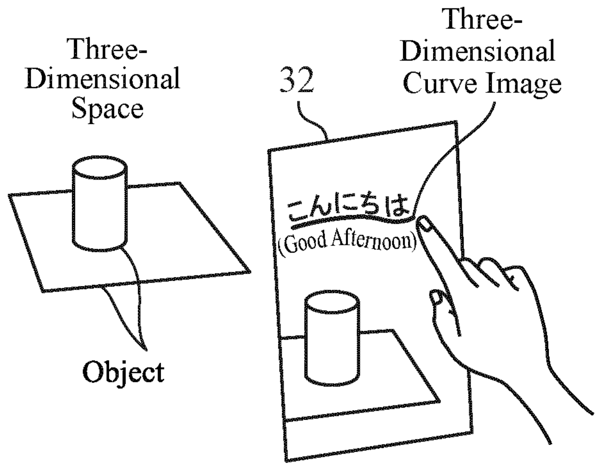


FIG. 7D

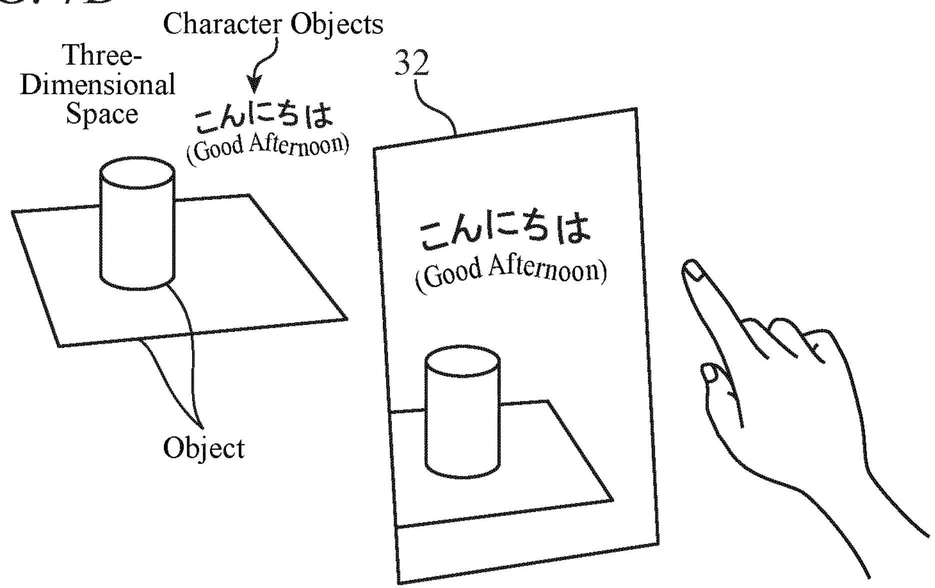

FIG. 8

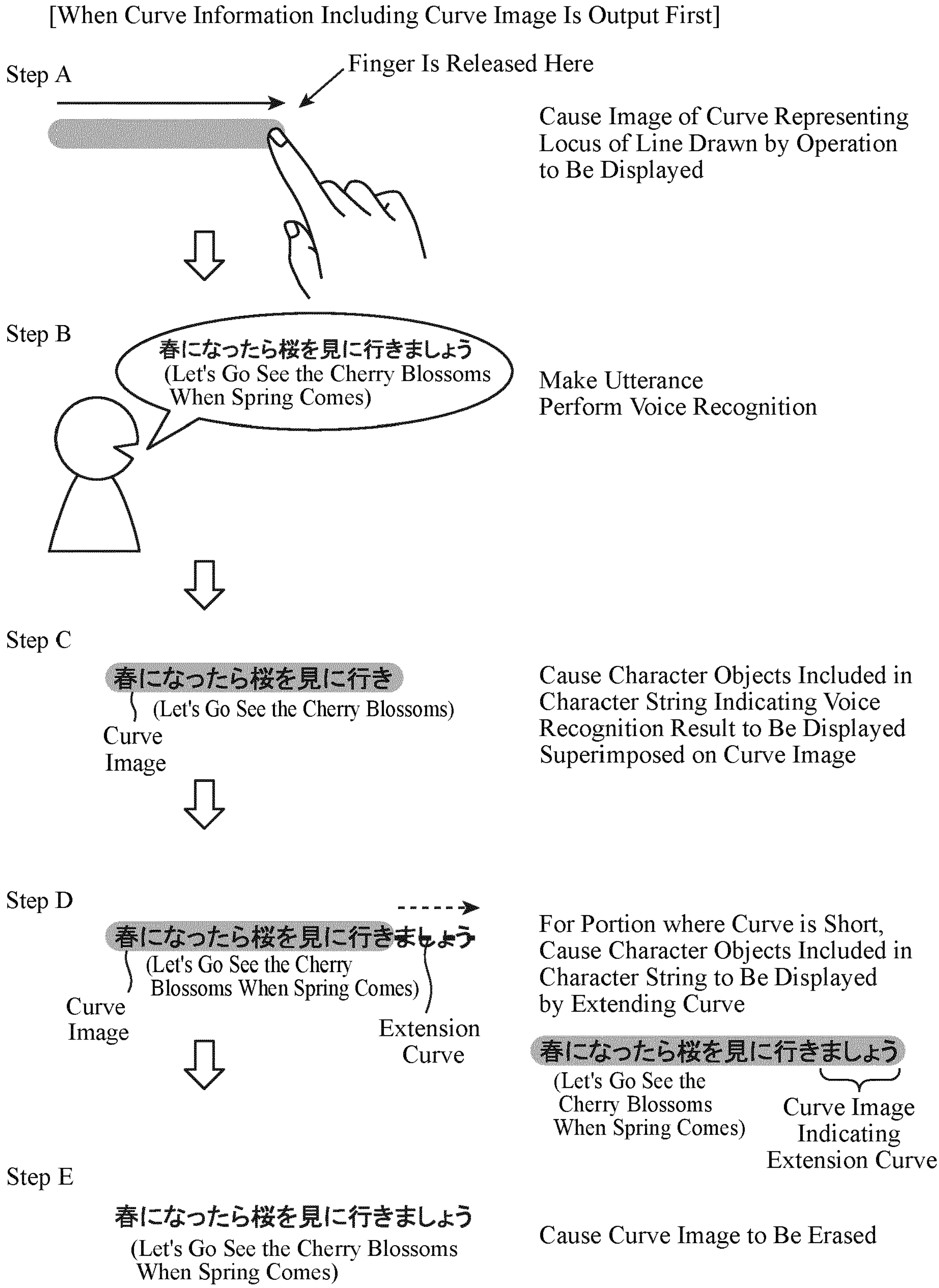
[When Curve Information Including Curve Image Is Output First]
Step A
Finger Is Released Here
Cause Image of Curve Representing Locus of Line Drawn by Operation to Be Displayed
Step B
春になったら桜を見に行きましょう
(Let's Go See the Cherry Blossoms When Spring Comes)
Make Utterance
Perform Voice Recognition
Step C
春になったら桜を見に行き
(Let's Go See the Cherry Blossoms)
Curve Image
Cause Character Objects Included in Character String Indicating Voice Recognition Result to Be Displayed Superimposed on Curve Image
Step D
春になったら桜を見に行きましょう
(Let's Go See the Cherry Blossoms When Spring Comes)
Curve Image
Extension Curve
For Portion where Curve is Short, Cause Character Objects Included in Character String to Be Displayed by Extending Curve
春になったら桜を見に行きましょう
(Let's Go See the Cherry Blossoms When Spring Comes)
Curve Image Indicating Extension Curve
Step E
春になったら桜を見に行きましょう
(Let's Go See the Cherry Blossoms When Spring Comes)
Cause Curve Image to Be Erased

# FIG. 9

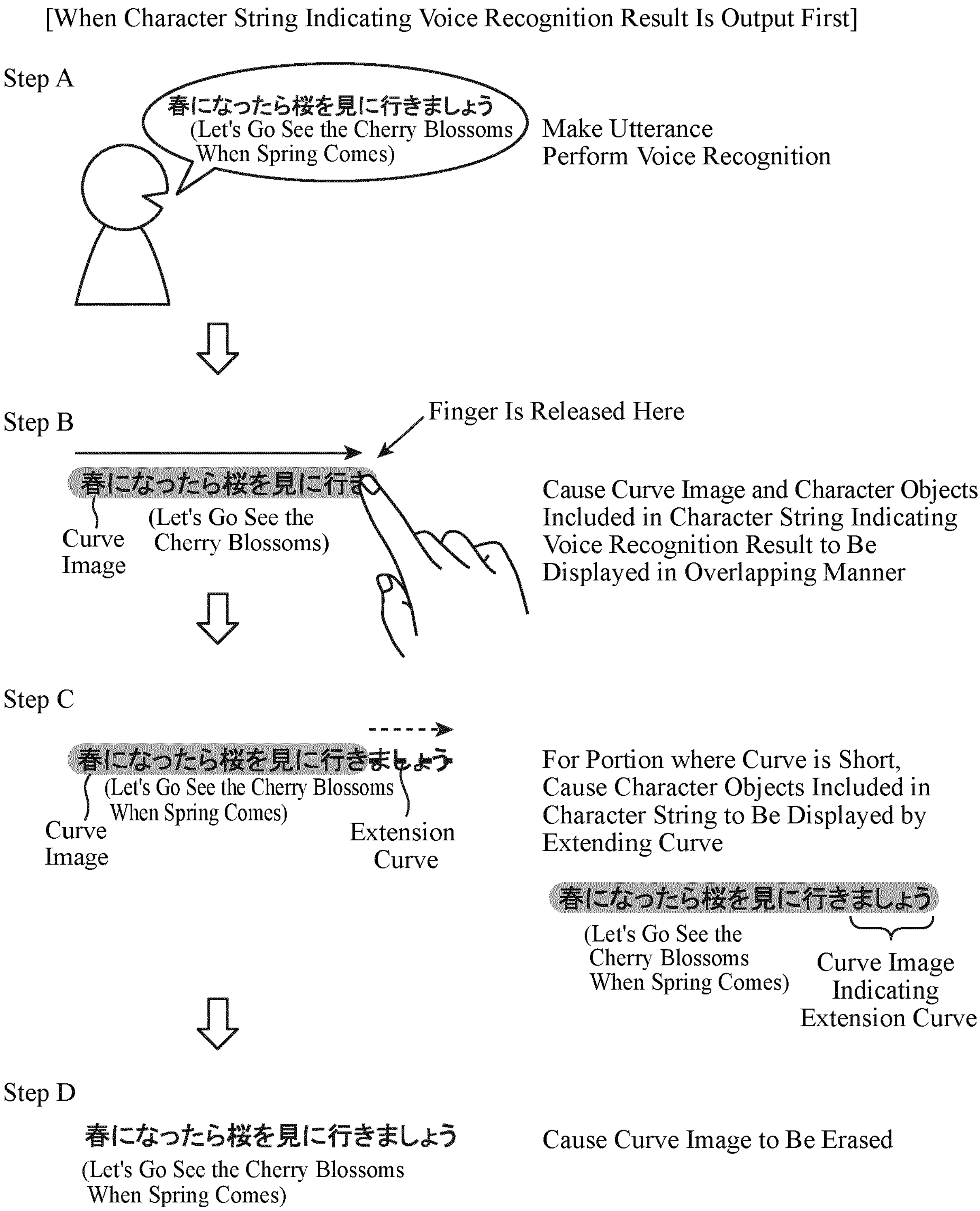
[When Character String Indicating Voice Recognition Result Is Output First]
Step A
春になったら桜を見に行きましょう
(Let's Go See the Cherry Blossoms When Spring Comes)
Make Utterance
Perform Voice Recognition
Step B
Finger Is Released Here
春になったら桜を見に行き
(Let's Go See the Cherry Blossoms)
Curve Image
Cause Curve Image and Character Objects Included in Character String Indicating Voice Recognition Result to Be Displayed in Overlapping Manner
Step C
春になったら桜を見に行きましょう
(Let's Go See the Cherry Blossoms When Spring Comes)
Curve Image
Extension Curve
For Portion where Curve is Short, Cause Character Objects Included in Character String to Be Displayed by Extending Curve
春になったら桜を見に行きましょう
(Let's Go See the Cherry Blossoms When Spring Comes)
Curve Image Indicating Extension Curve
Step D
春になったら桜を見に行きましょう
(Let's Go See the Cherry Blossoms When Spring Comes)
Cause Curve Image to Be Erased

# FIG. 10A

Example in Which All Character Objects Can Be Displayed since Length of Curve Is Longer than Length of Character String

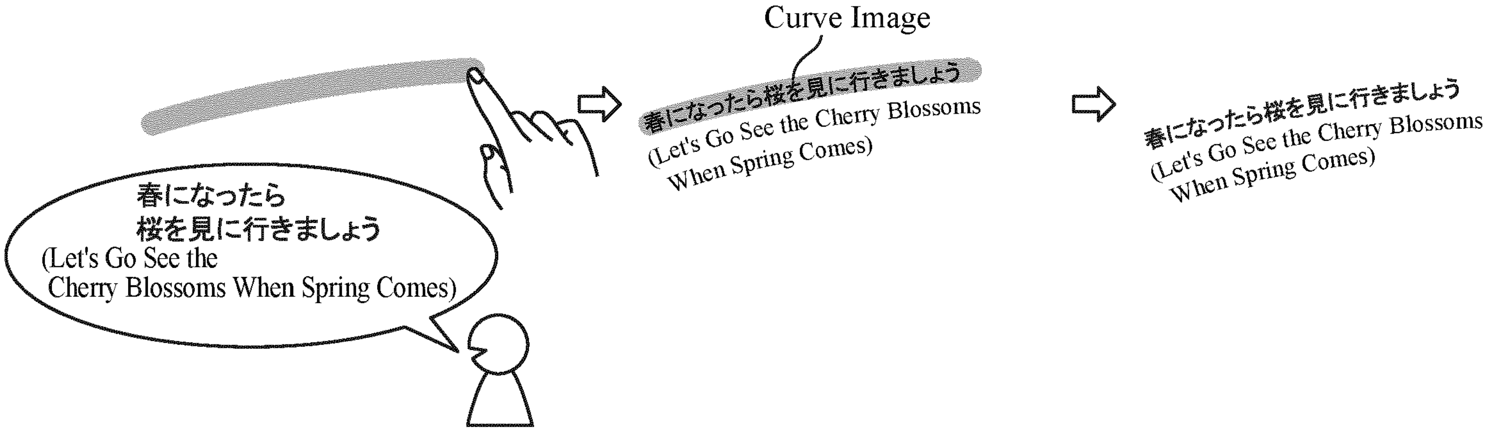


# FIG. 10B

Example in Which Some Character Objects Cannot Be Displayed since Length of Curve Is Shorter than Length of Character

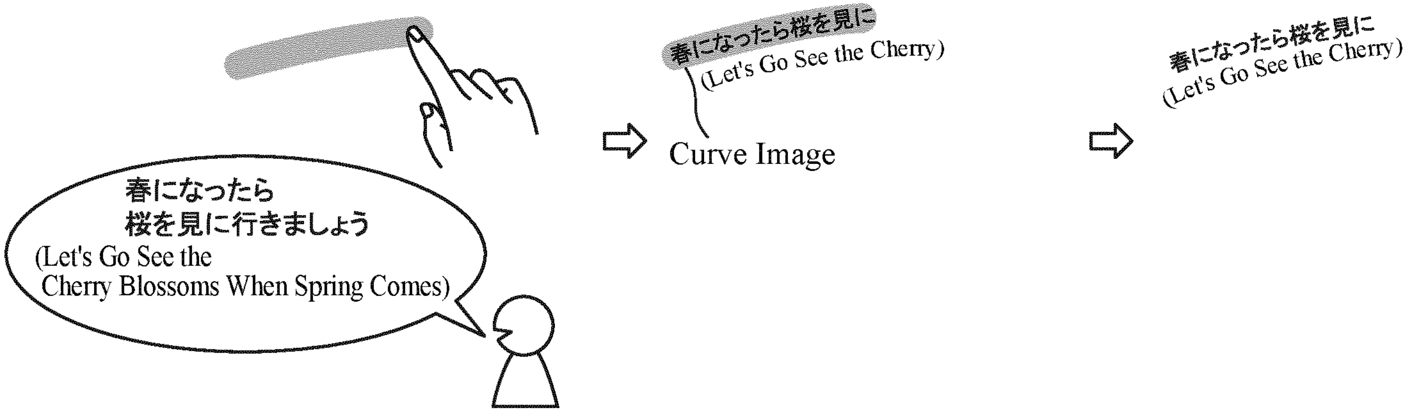

FIG. 11A

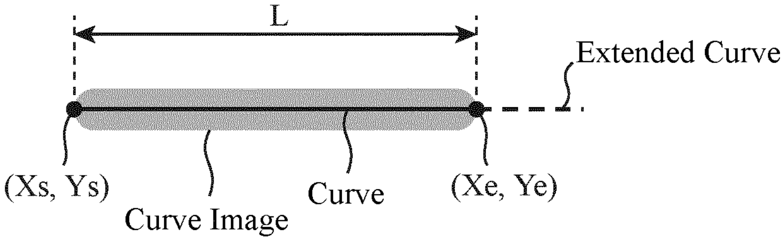


FIG. 11B

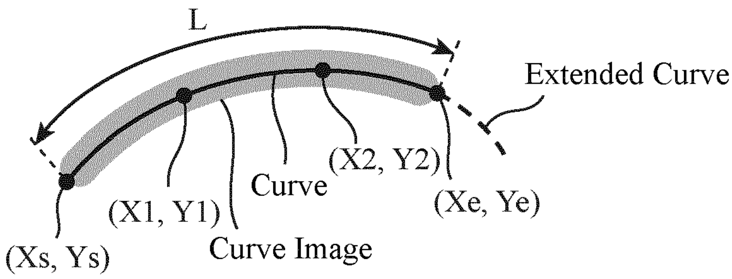


FIG. 12

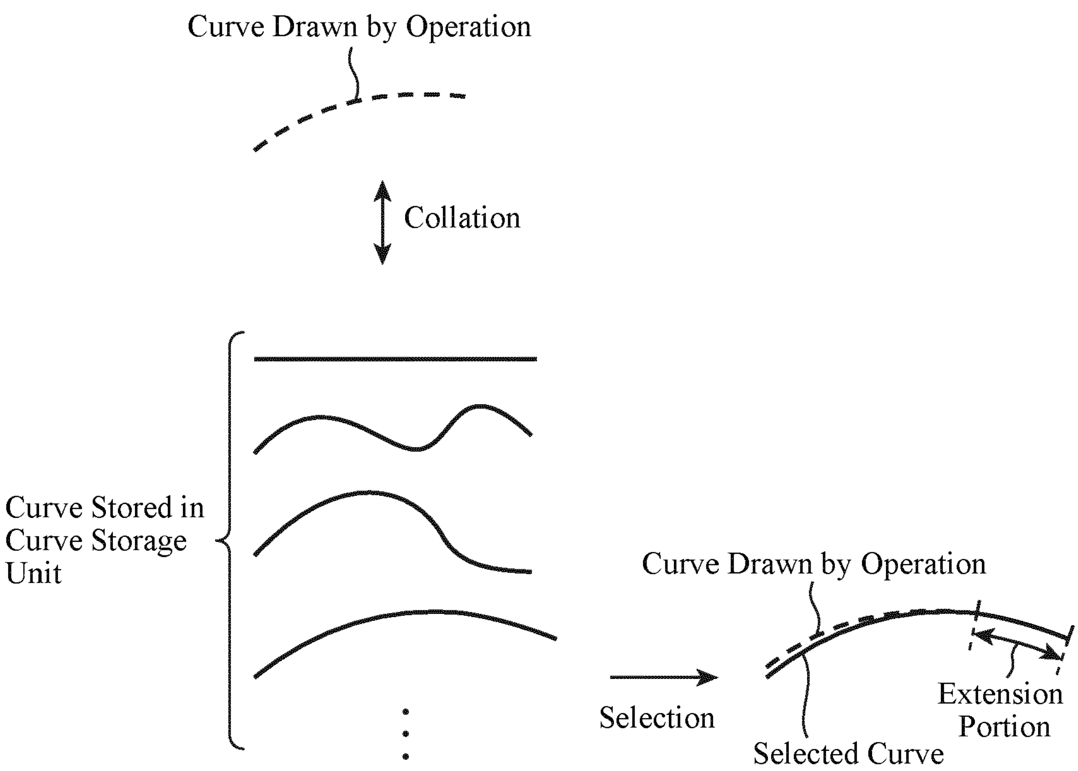

FIG. 13A

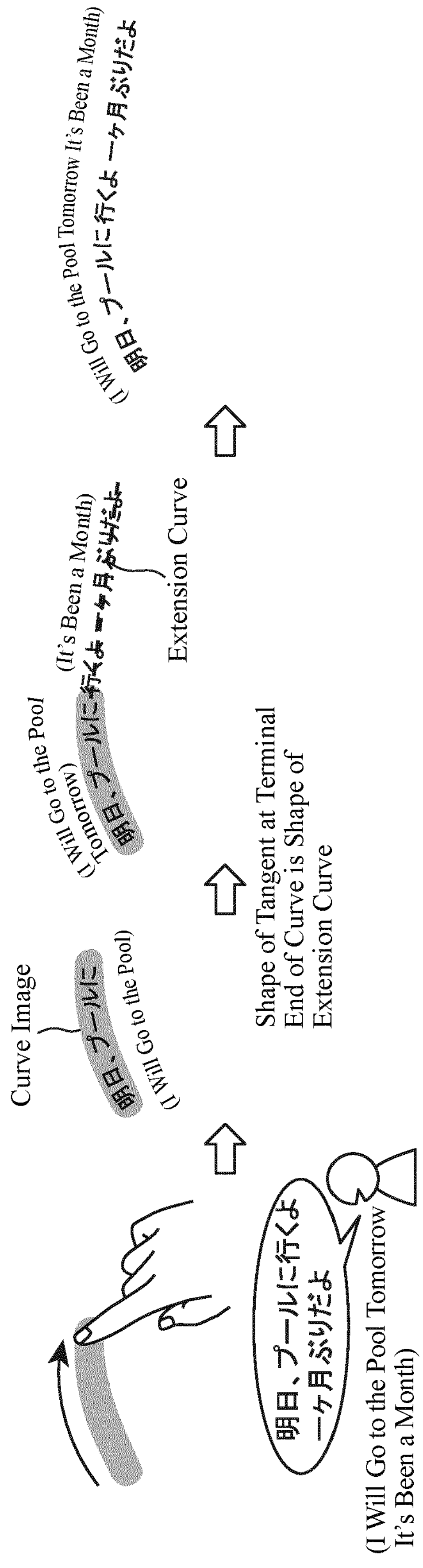
明日、プールに行くよ 一ヶ月ぶりだよ
(I Will Go to the Pool Tomorrow It's Been a Month)
Curve Image
明日、プールに
(I Will Go to the Pool)
Shape of Tangent at Terminal End of Curve is Shape of Extension Curve
明日、プールに行くよ 一ヶ月ぶりだよ
(I Will Go to the Pool Tomorrow)
(It's Been a Month)
Extension Curve
明日、プールに行くよ 一ヶ月ぶりだよ
(I Will Go to the Pool Tomorrow It's Been a Month)

FIG. 13B

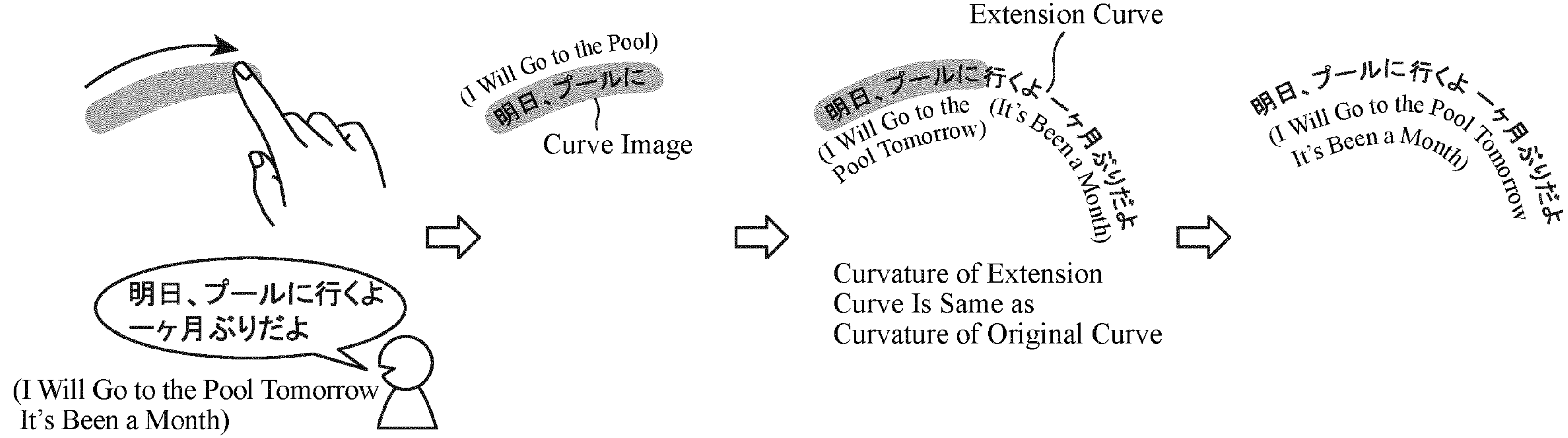
明日、プールに行くよ
一ヶ月ぶりだよ
(I Will Go to the Pool Tomorrow
It's Been a Month)
(I Will Go to the Pool)
明日、プールに
Curve Image
Extension Curve
明日、プールに行くよ 一ヶ月ぶりだよ
(I Will Go to the Pool Tomorrow)
(It's Been a Month)
Curvature of Extension
Curve Is Same as
Curvature of Original Curve
明日、プールに行くよ 一ヶ月ぶりだよ
(I Will Go to the Pool Tomorrow
It's Been a Month)

FIG. 13C

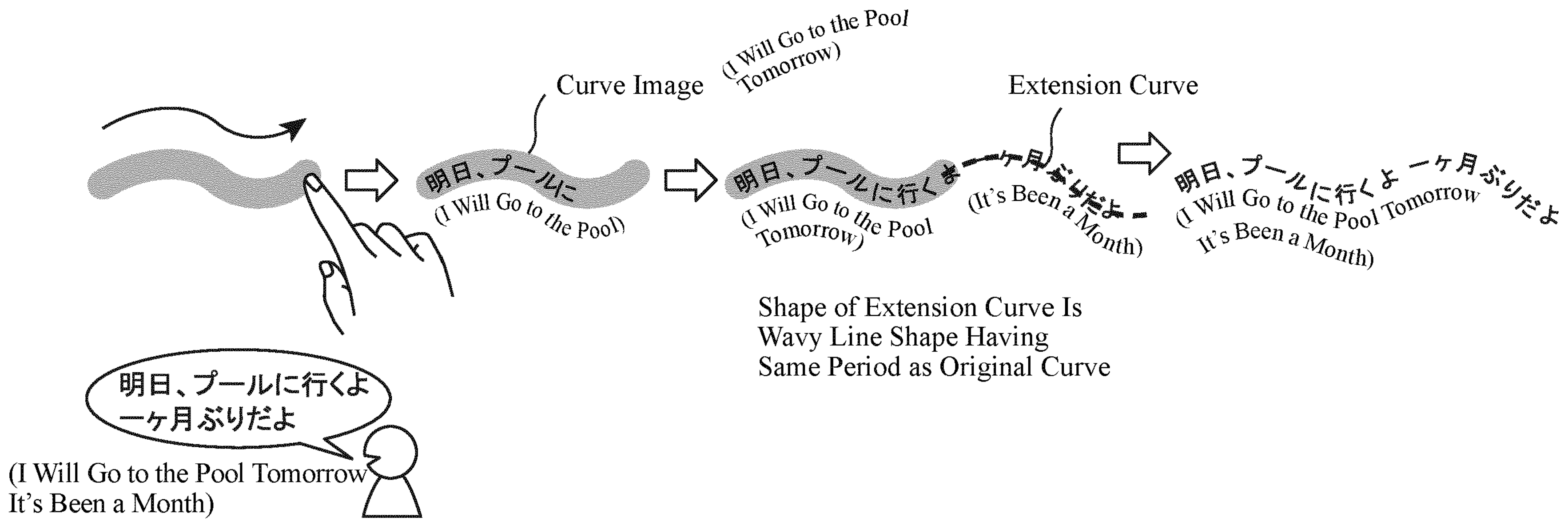

Curve Image
(I Will Go to the Pool Tomorrow)
Extension Curve
明日、プールに
(I Will Go to the Pool)
明日、プールに行くよ一ケ月ぶりだよ
(I Will Go to the Pool Tomorrow)
(It's Been a Month)
明日、プールに行くよ 一ケ月ぶりだよ
(I Will Go to the Pool Tomorrow It's Been a Month)
明日、プールに行くよ
一ケ月ぶりだよ
(I Will Go to the Pool Tomorrow
It's Been a Month)
Shape of Extension Curve Is
Wavy Line Shape Having
Same Period as Original Curve

FIG. 13D

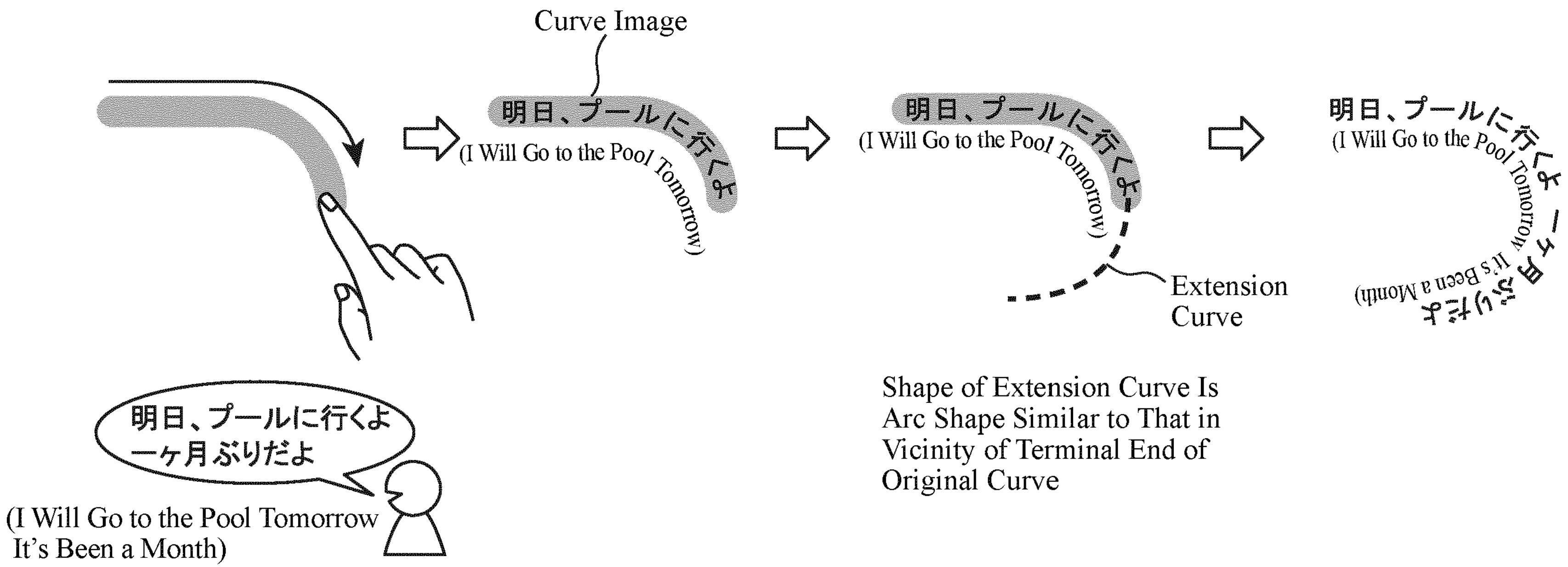
明日、プールに行くよ
一ヶ月ぶりだよ
(I Will Go to the Pool Tomorrow
It’s Been a Month)
Curve Image
明日、プールに行くよ
(I Will Go to the Pool Tomorrow)
明日、プールに行くよ
(I Will Go to the Pool Tomorrow)
Extension Curve
Shape of Extension Curve Is Arc Shape Similar to That in Vicinity of Terminal End of Original Curve
明日、プールに行くよ 一ヶ月ぶりだよ
(I Will Go to the Pool Tomorrow It’s Been a Month)

FIG. 14

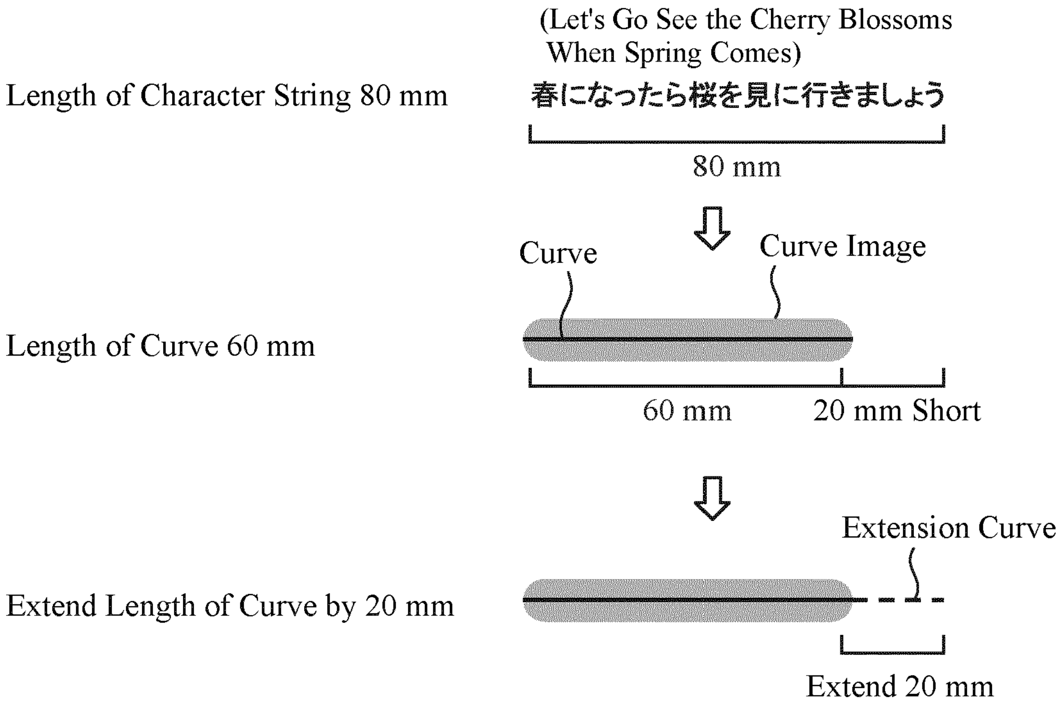
Length of Character String 80 mm
(Let's Go See the Cherry Blossoms When Spring Comes)
春になったら桜を見に行きましょう
80 mm
Curve
Curve Image
Length of Curve 60 mm
60 mm
20 mm Short
Extension Curve
Extend Length of Curve by 20 mm
Extend 20 mm

FIG. 15

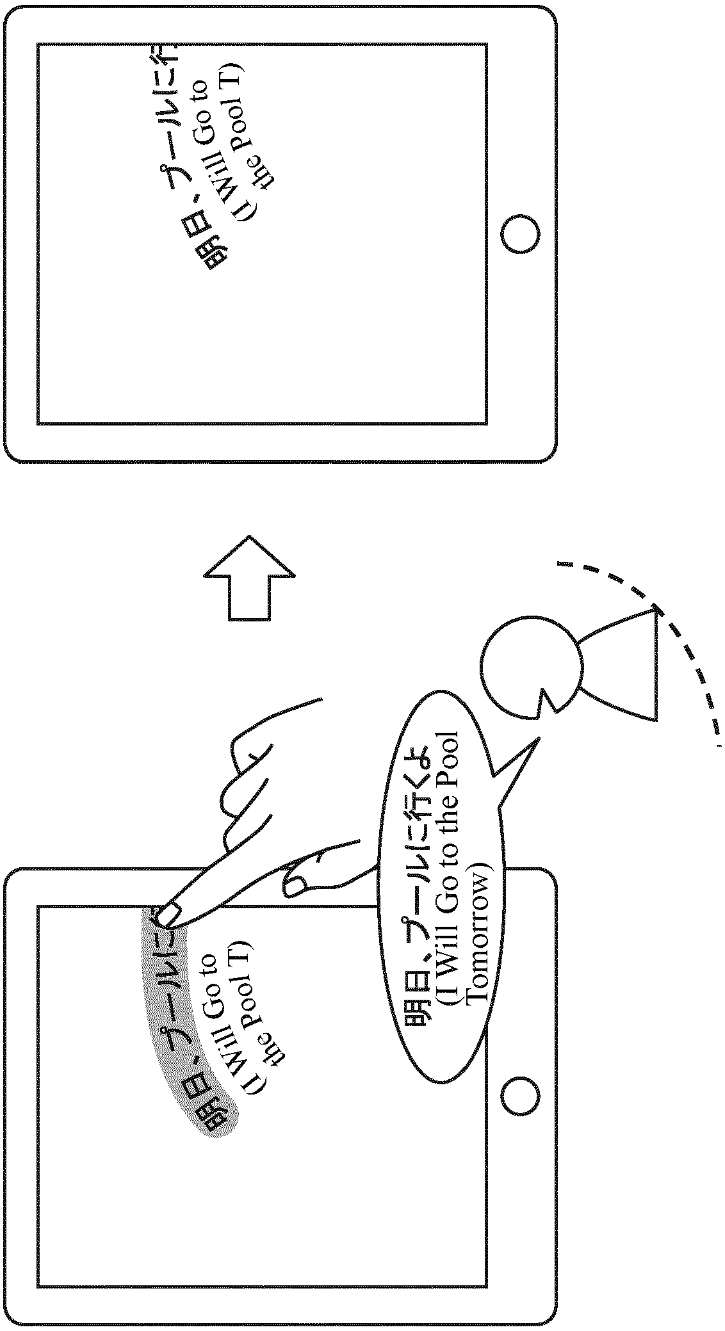
明日、プールに
(I Will Go to the Pool T)
明日、プールに行くよ
(I Will Go to the Pool Tomorrow)
明日、プールに行
(I Will Go to the Pool T)

FIG. 16

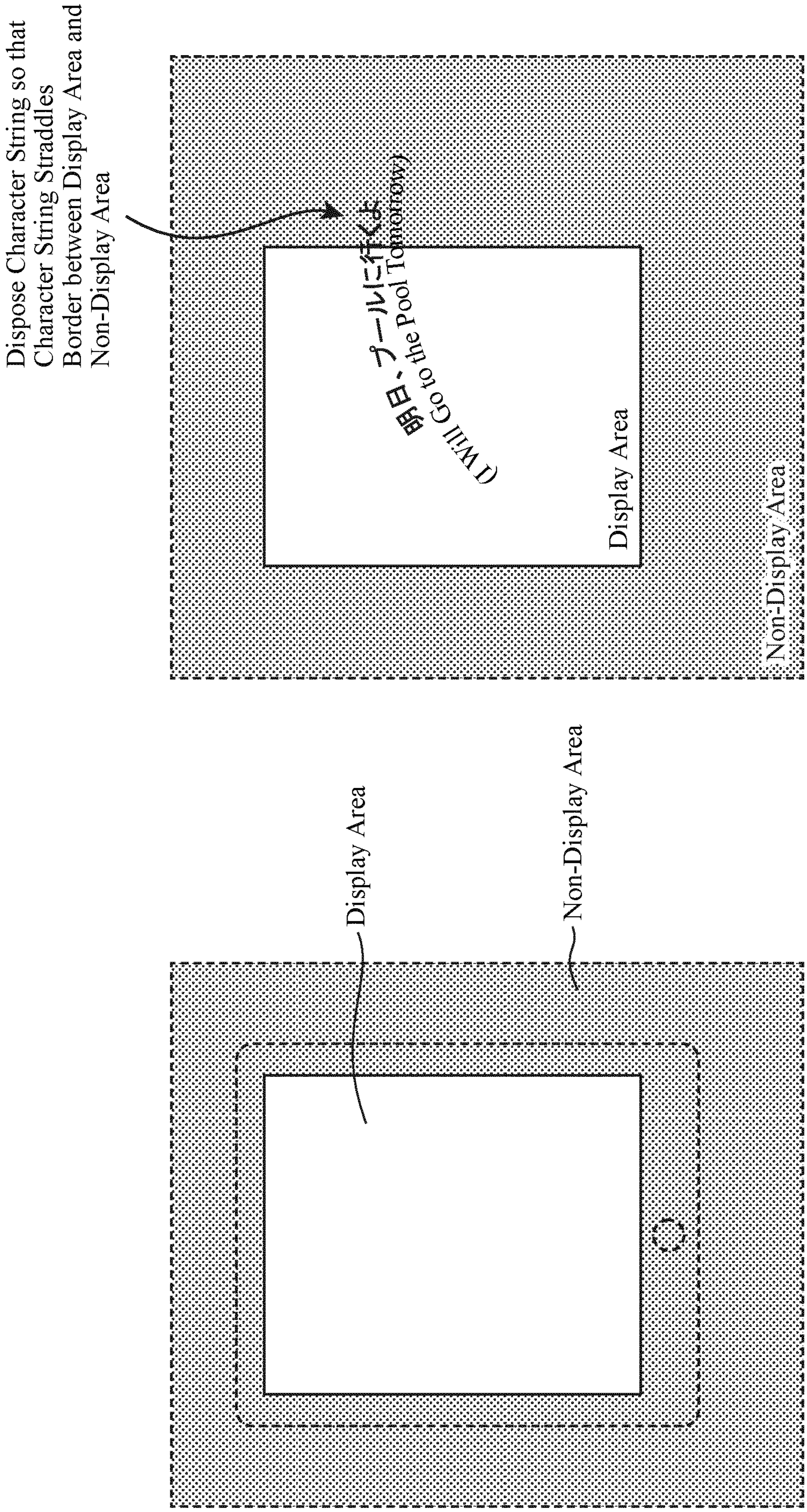
Dispose Character String so that
Character String Straddles
Border between Display Area and
Non-Display Area
明日、プールに行くよ
(I Will Go to the Pool Tomorrow)
Display Area
Non-Display Area
Display Area
Non-Display Area

FIG. 17

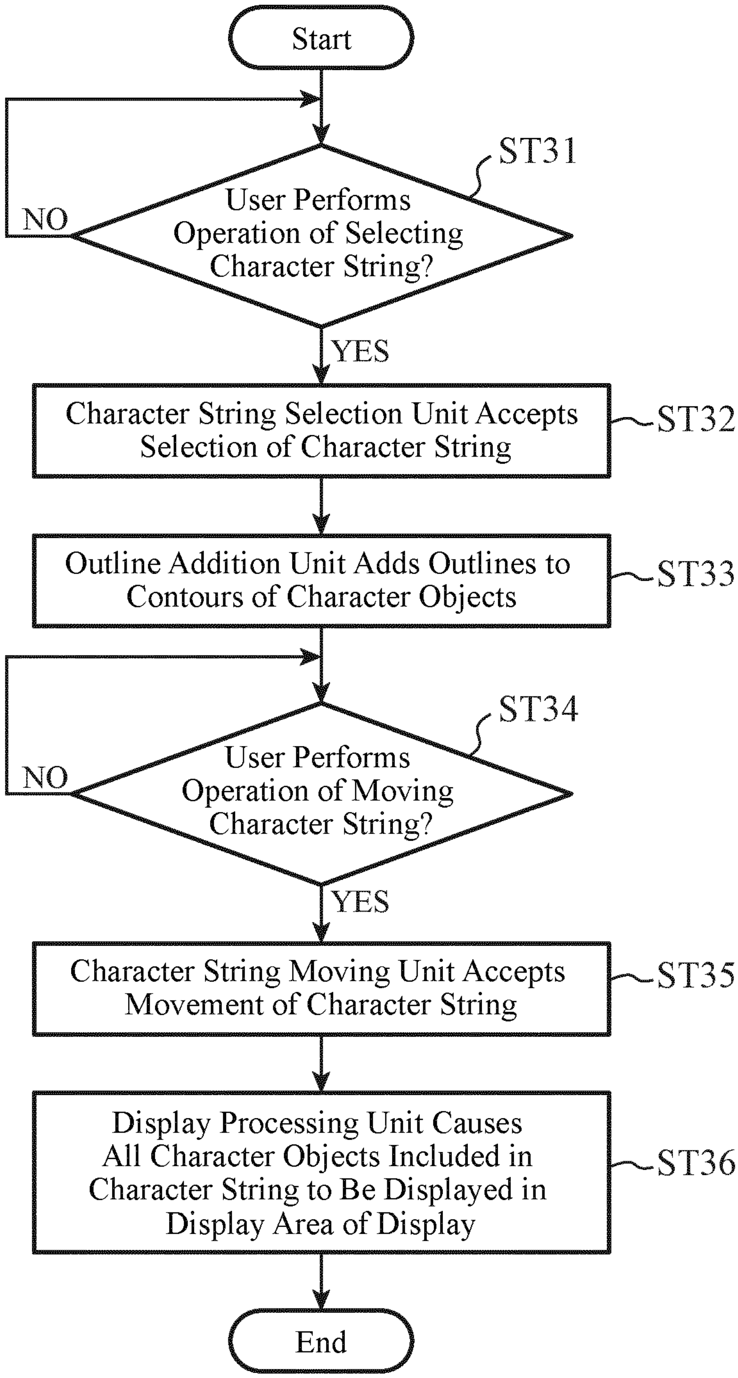
Start
ST31
User Performs Operation of Selecting Character String?
NO
YES
Character String Selection Unit Accepts Selection of Character String
ST32
Outline Addition Unit Adds Outlines to Contours of Character Objects
ST33
ST34
User Performs Operation of Moving Character String?
NO
YES
Character String Moving Unit Accepts Movement of Character String
ST35
Display Processing Unit Causes All Character Objects Included in Character String to Be Displayed in Display Area of Display
ST36
End

FIG. 18

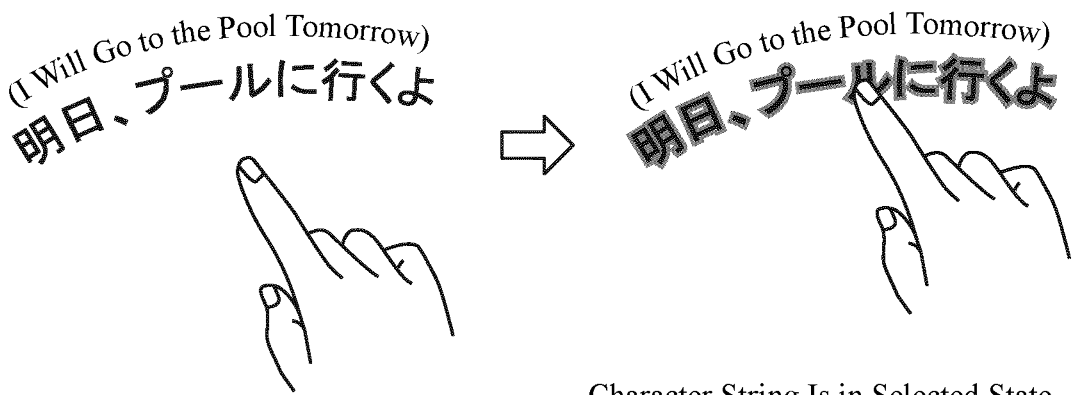


Character String Is in Selected State When Being Long-Pressed

Character String Becomes Outline Characters in Selected State

FIG. 19A

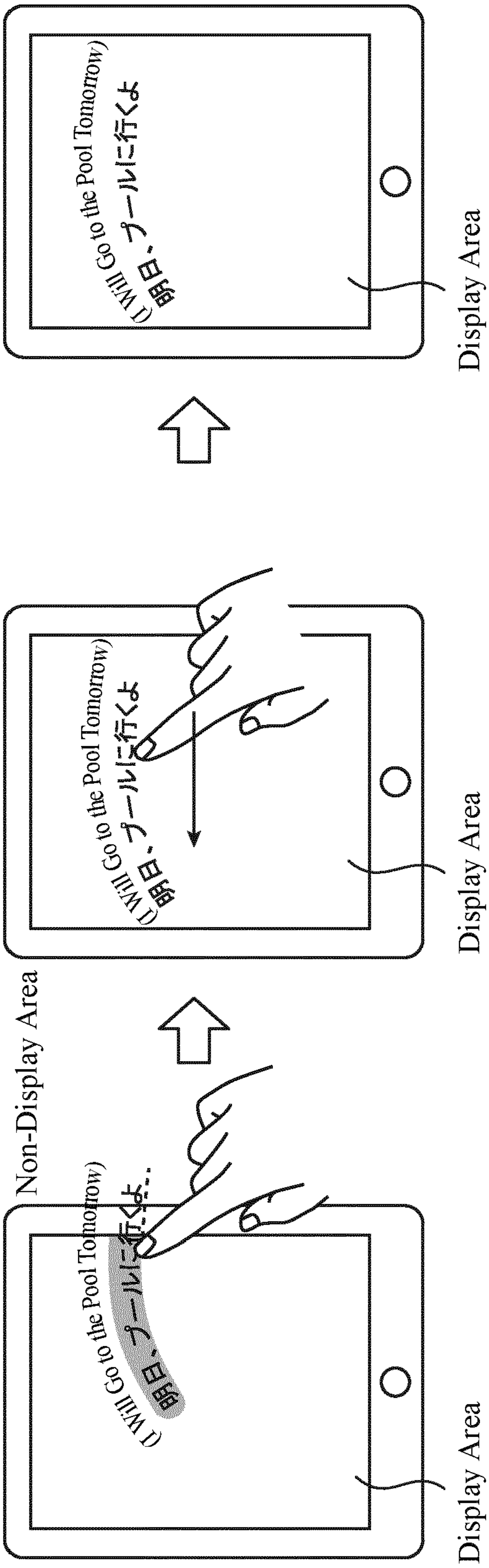


FIG. 19B

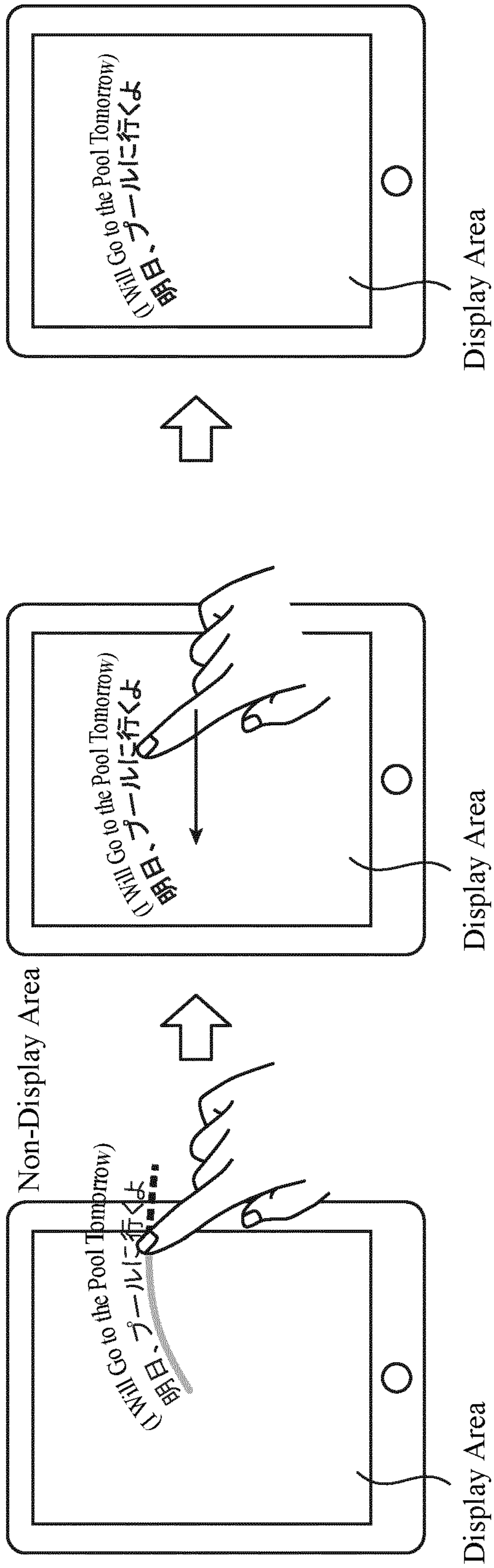

FIG. 20

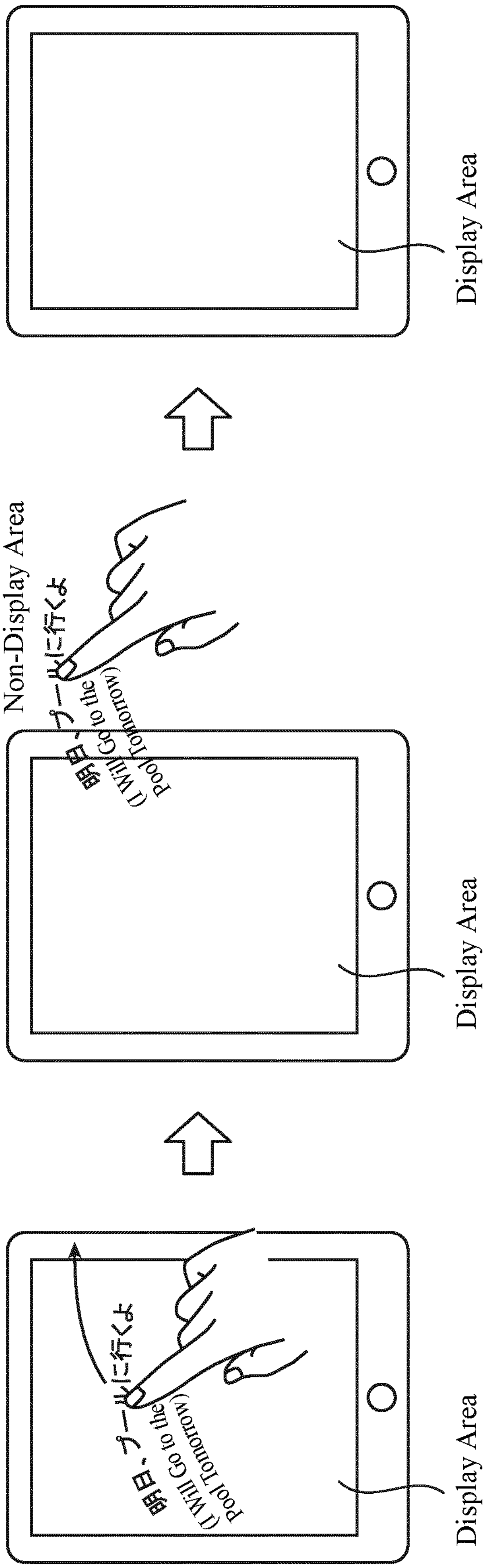
Display Area
明日、プールに行くよ
(I Will Go to the Pool Tomorrow)
Display Area
Non-Display Area
明日、プールに行くよ
(I Will Go to the Pool Tomorrow)
Display Area

FIG. 21

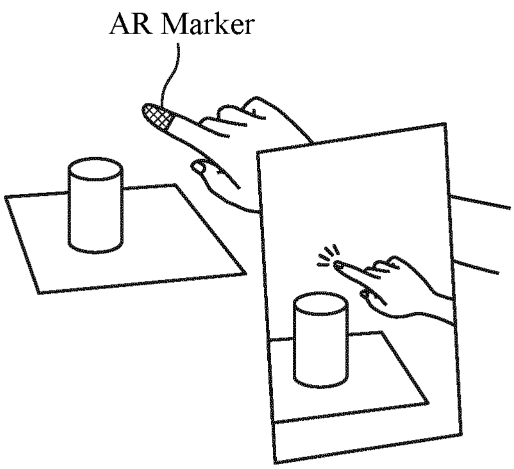

FIG. 22

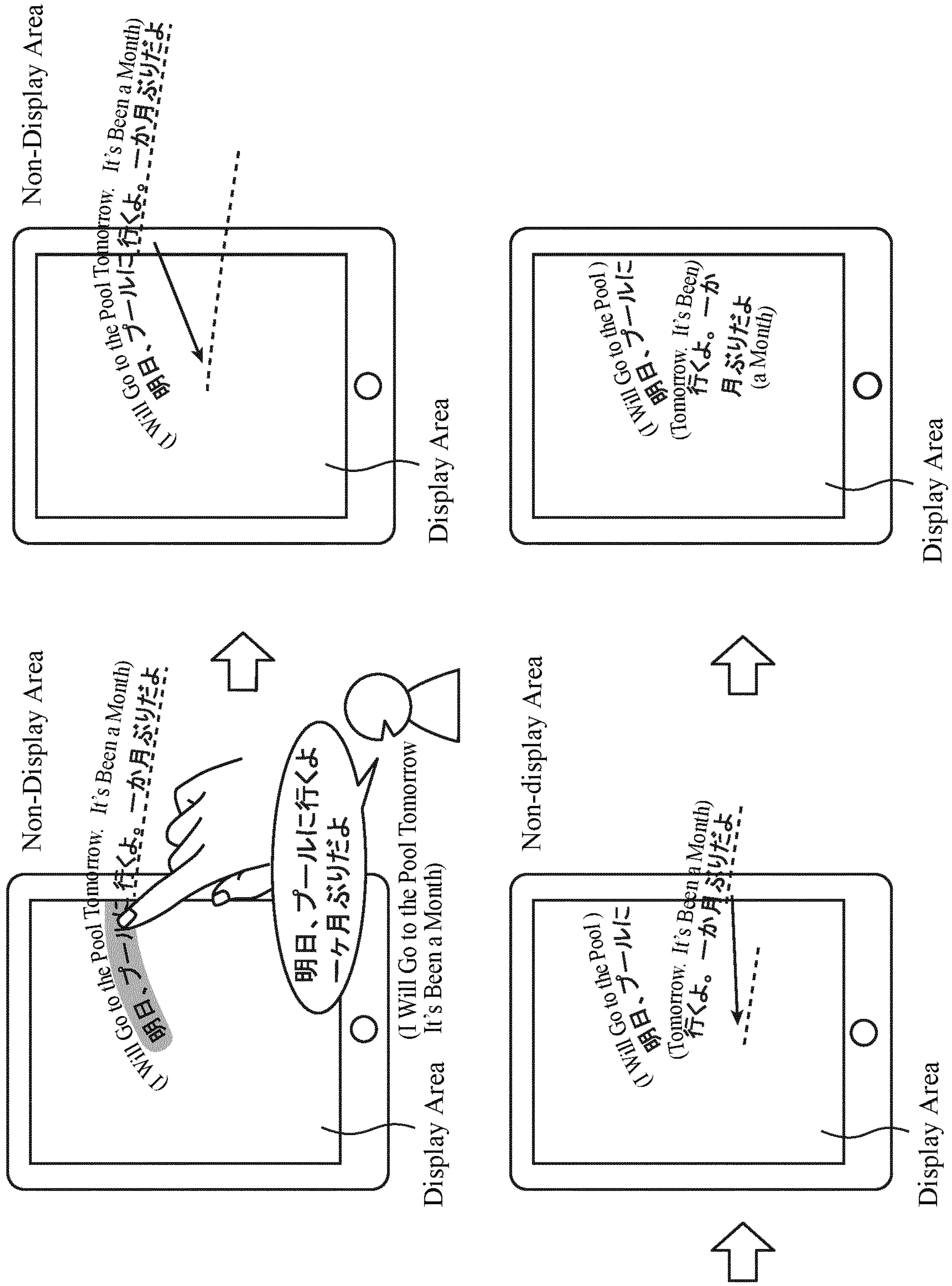
Non-Display Area
(I Will Go to the Pool Tomorrow. It's Been a Month)
明日、プールに行くよ。一か月ぶりだよ
明日、プールに行くよ
一ヶ月ぶりだよ
(I Will Go to the Pool Tomorrow
It's Been a Month)
Display Area
Non-Display Area
(I Will Go to the Pool Tomorrow. It's Been a Month)
明日、プールに行くよ。一か月ぶりだよ
Display Area
Non-display Area
(I Will Go to the Pool)
明日、プールに
(Tomorrow. It's Been a Month)
行くよ。一か月ぶりだよ
Display Area
(I Will Go to the Pool)
明日、プールに
(Tomorrow. It's Been)
行くよ。一か
月ぶりだよ
(a Month)
Display Area

FIG. 23

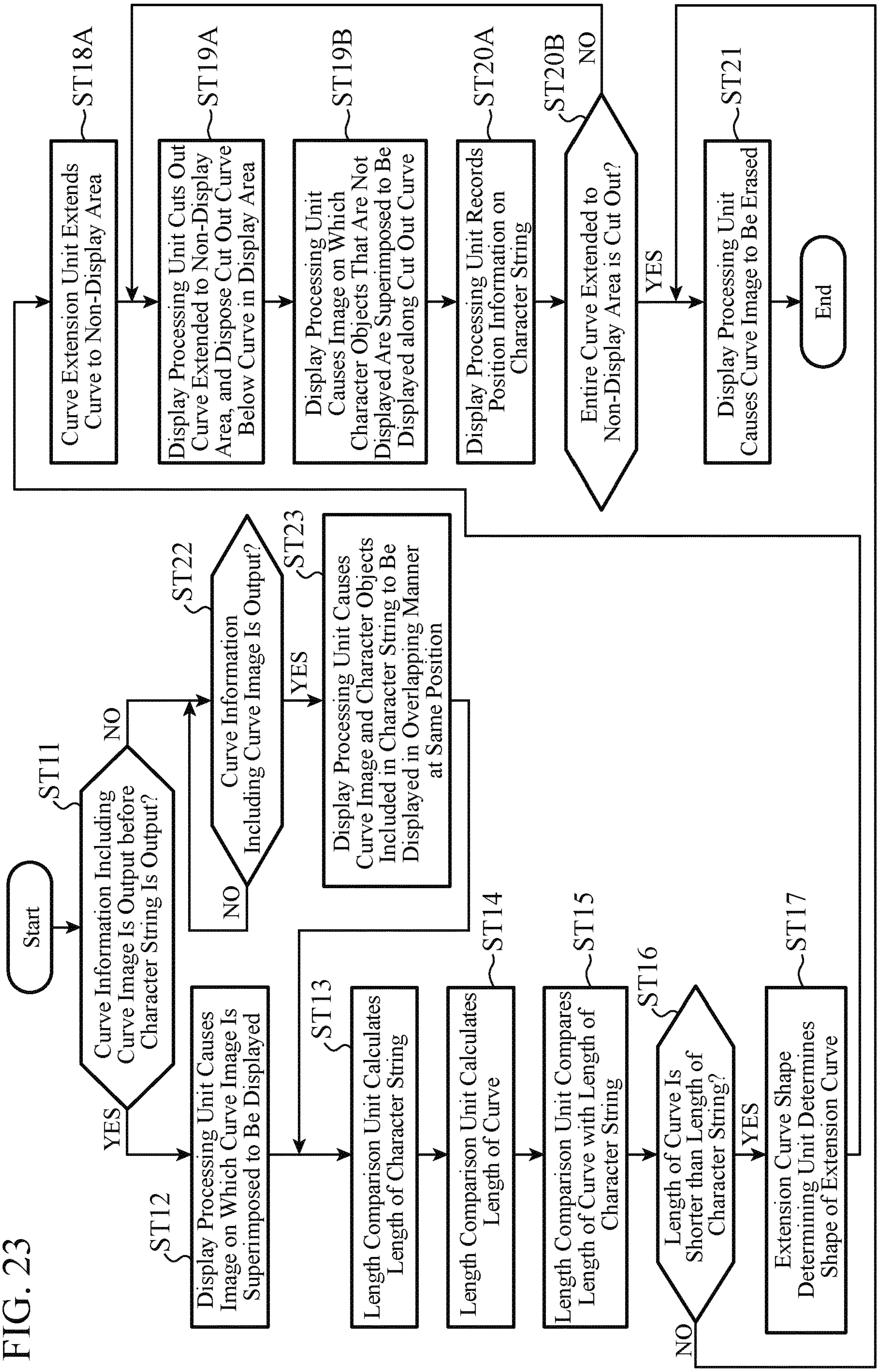
Start
Curve Information Including Curve Image Is Output before Character String Is Output?
ST11
YES
NO
Display Processing Unit Causes Image on Which Curve Image Is Superimposed to Be Displayed
ST12
Curve Information Including Curve Image Is Output?
ST22
YES
NO
Display Processing Unit Causes Curve Image and Character Objects Included in Character String to Be Displayed in Overlapping Manner at Same Position
ST23
Length Comparison Unit Calculates Length of Character String
ST13
Length Comparison Unit Calculates Length of Curve
ST14
Length Comparison Unit Compares Length of Curve with Length of Character String
ST15
Length of Curve Is Shorter than Length of Character String?
ST16
YES
NO
Extension Curve Shape Determining Unit Determines Shape of Extension Curve
ST17
Curve Extension Unit Extends Curve to Non-Display Area
ST18A
Display Processing Unit Cuts Out Curve Extended to Non-Display Area, and Dispose Cut Out Curve Below Curve in Display Area
ST19A
Display Processing Unit Causes Image on Which Character Objects That Are Not Displayed Are Superimposed to Be Displayed along Cut Out Curve
ST19B
Display Processing Unit Records Position Information on Character String
ST20A
Entire Curve Extended to Non-Display Area is Cut Out?
ST20B
YES
NO
Display Processing Unit Causes Curve Image to Be Erased
ST21
End

FIG. 24

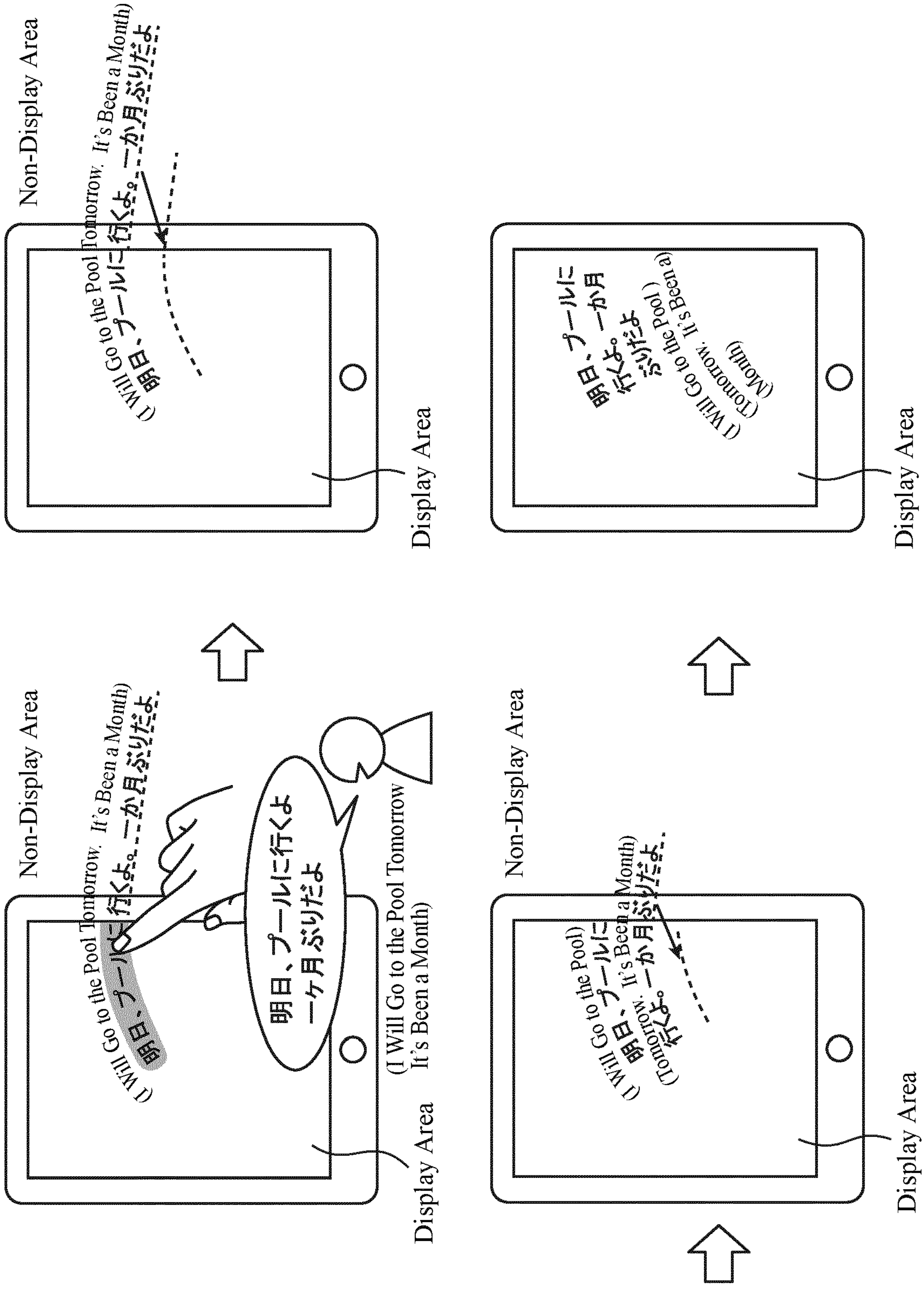

Non-Display Area
(I Will Go to the Pool Tomorrow. It's Been a Month)
明日、プールに行くよ。一か月ぶりだよ
明日、プールに行くよ
一ヶ月ぶりだよ
(I Will Go to the Pool Tomorrow
It's Been a Month)
Display Area
Non-Display Area
(I Will Go to the Pool Tomorrow. It's Been a Month)
明日、プールに行くよ。一か月ぶりだよ
Display Area
Non-Display Area
(I Will Go to the Pool)
明日、プールに
(Tomorrow. It's Been a Month)
行くよ。一か月ぶりだよ
Display Area
明日、プールに
行くよ。一か月
ぶりだよ
(I Will Go to the Pool)
(Tomorrow. It's Been a)
(Month)
Display Area

FIG. 25

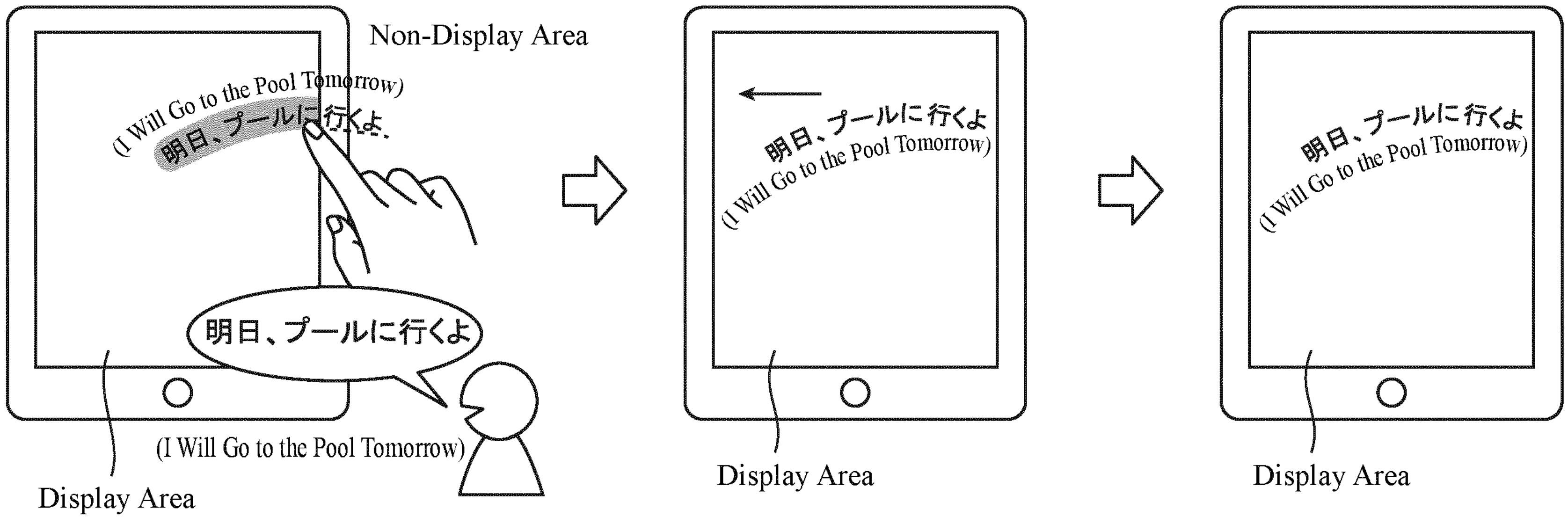
Non-Display Area
(I Will Go to the Pool Tomorrow)
明日、プールに行くよ
明日、プールに行くよ
(I Will Go to the Pool Tomorrow)
Display Area
明日、プールに行くよ
(I Will Go to the Pool Tomorrow)
Display Area
明日、プールに行くよ
(I Will Go to the Pool Tomorrow)
Display Area

FIG. 26

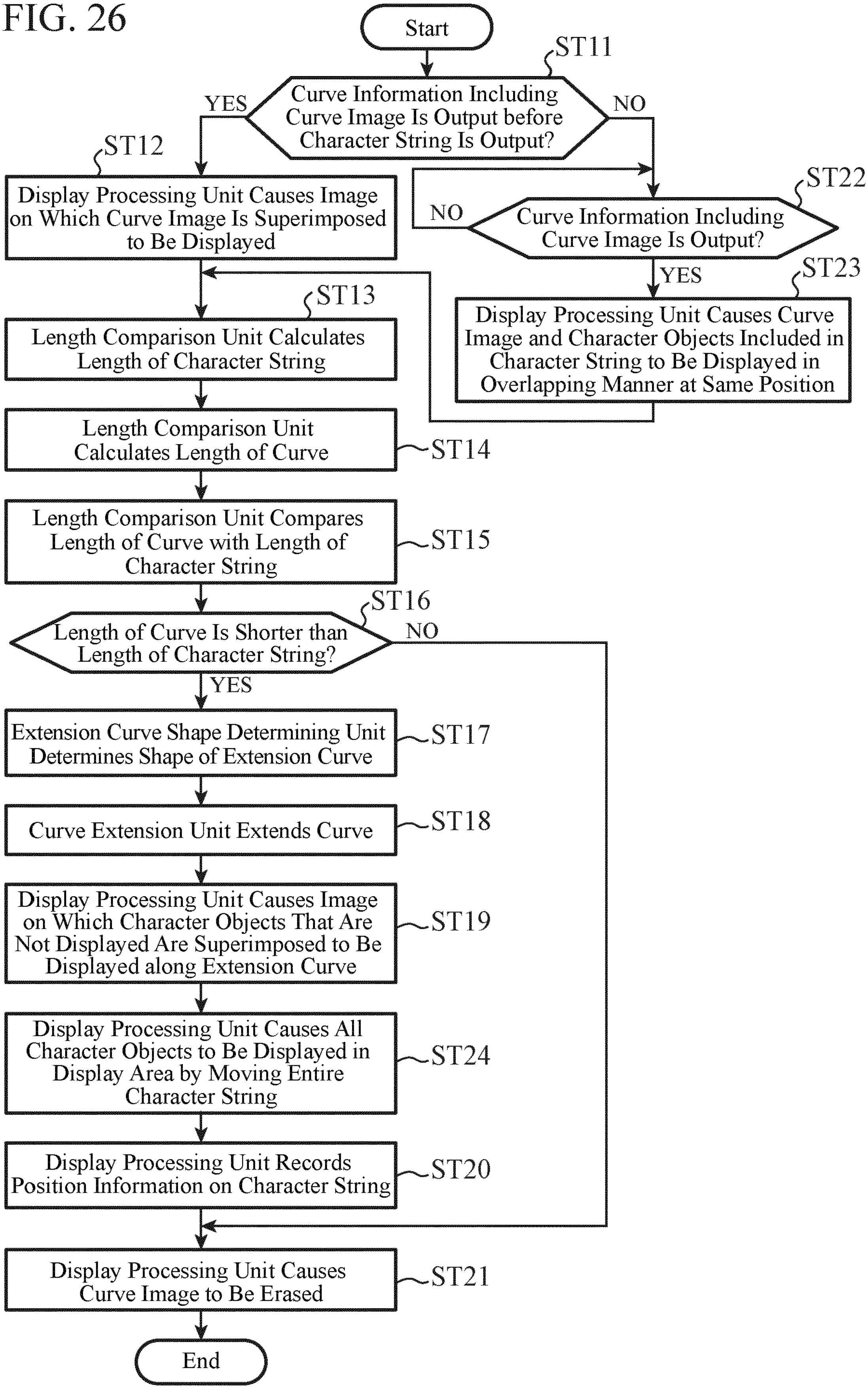
Start
ST11
Curve Information Including Curve Image Is Output before Character String Is Output?
YES
NO
ST12
Display Processing Unit Causes Image on Which Curve Image Is Superimposed to Be Displayed
ST22
NO
Curve Information Including Curve Image Is Output?
YES
ST23
Display Processing Unit Causes Curve Image and Character Objects Included in Character String to Be Displayed in Overlapping Manner at Same Position
ST13
Length Comparison Unit Calculates Length of Character String
Length Comparison Unit Calculates Length of Curve
ST14
Length Comparison Unit Compares Length of Curve with Length of Character String
ST15
ST16
Length of Curve Is Shorter than Length of Character String?
NO
YES
Extension Curve Shape Determining Unit Determines Shape of Extension Curve
ST17
Curve Extension Unit Extends Curve
ST18
Display Processing Unit Causes Image on Which Character Objects That Are Not Displayed Are Superimposed to Be Displayed along Extension Curve
ST19
Display Processing Unit Causes All Character Objects to Be Displayed in Display Area by Moving Entire Character String
ST24
Display Processing Unit Records Position Information on Character String
ST20
Display Processing Unit Causes Curve Image to Be Erased
ST21
End

FIG. 27

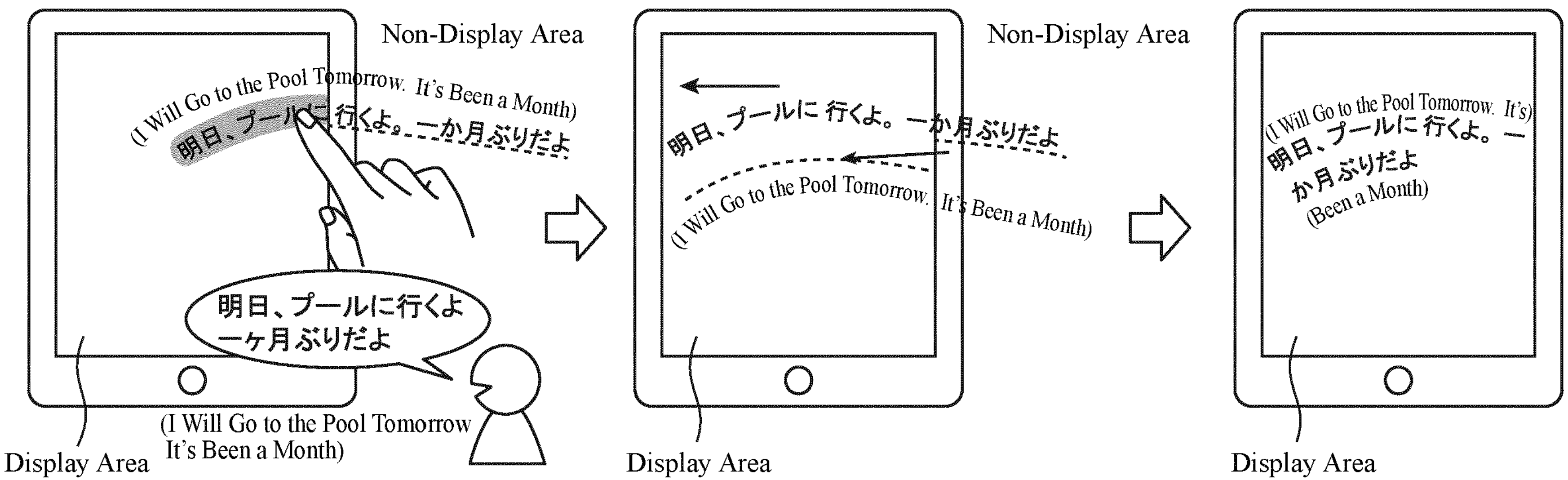
Non-Display Area
(I Will Go to the Pool Tomorrow. It's Been a Month)
明日、プールに行くよ。一か月ぶりだよ
明日、プールに行くよ
一ケ月ぶりだよ
(I Will Go to the Pool Tomorrow
It's Been a Month)
Display Area
Non-Display Area
明日、プールに 行くよ。一か月ぶりだよ
(I Will Go to the Pool Tomorrow. It's Been a Month)
Display Area
(I Will Go to the Pool Tomorrow. It's)
明日、プールに 行くよ。一
か月ぶりだよ
(Been a Month)
Display Area

FIG. 28

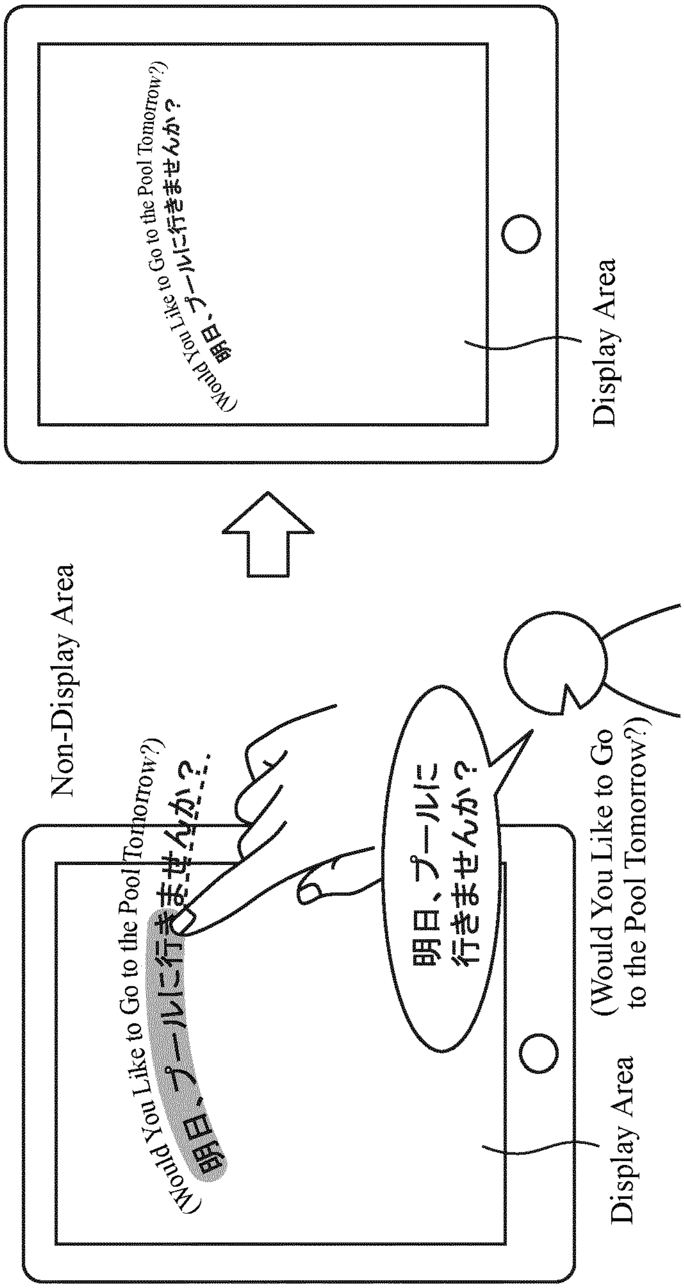
Non-Display Area
(Would You Like to Go to the Pool Tomorrow?)
明日、プールに行きませんか？
明日、プールに
行きませんか？
(Would You Like to Go
to the Pool Tomorrow?)
Display Area
(Would You Like to Go to the Pool Tomorrow?)
明日、プールに行きませんか？
Display Area

FIG. 29

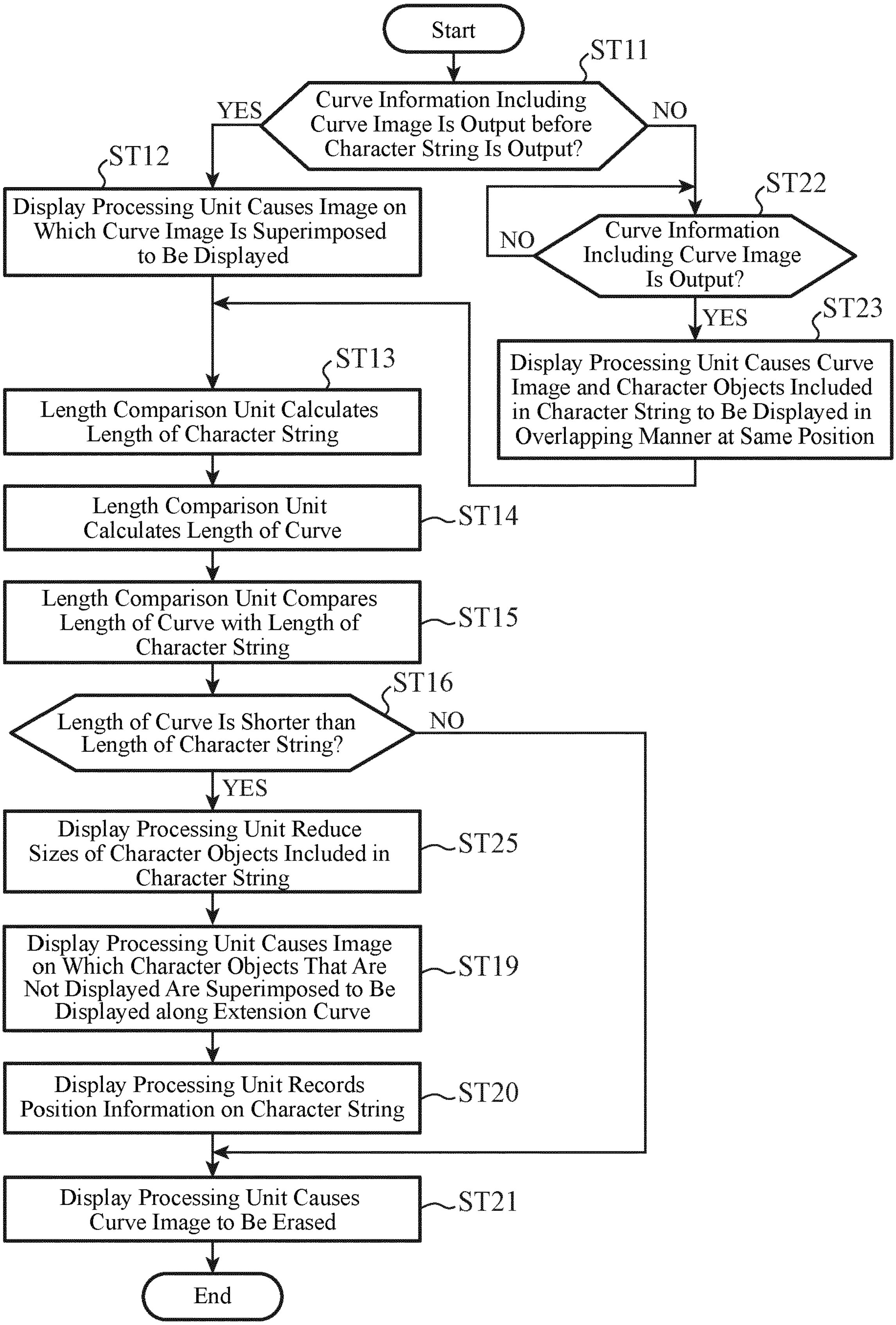
Start
ST11
Curve Information Including Curve Image Is Output before Character String Is Output?
YES
NO
ST12
Display Processing Unit Causes Image on Which Curve Image Is Superimposed to Be Displayed
ST22
NO
Curve Information Including Curve Image Is Output?
YES
ST23
Display Processing Unit Causes Curve Image and Character Objects Included in Character String to Be Displayed in Overlapping Manner at Same Position
ST13
Length Comparison Unit Calculates Length of Character String
Length Comparison Unit Calculates Length of Curve
ST14
Length Comparison Unit Compares Length of Curve with Length of Character String
ST15
ST16
Length of Curve Is Shorter than Length of Character String?
NO
YES
Display Processing Unit Reduce Sizes of Character Objects Included in Character String
ST25
Display Processing Unit Causes Image on Which Character Objects That Are Not Displayed Are Superimposed to Be Displayed along Extension Curve
ST19
Display Processing Unit Records Position Information on Character String
ST20
Display Processing Unit Causes Curve Image to Be Erased
ST21
End

FIG. 30

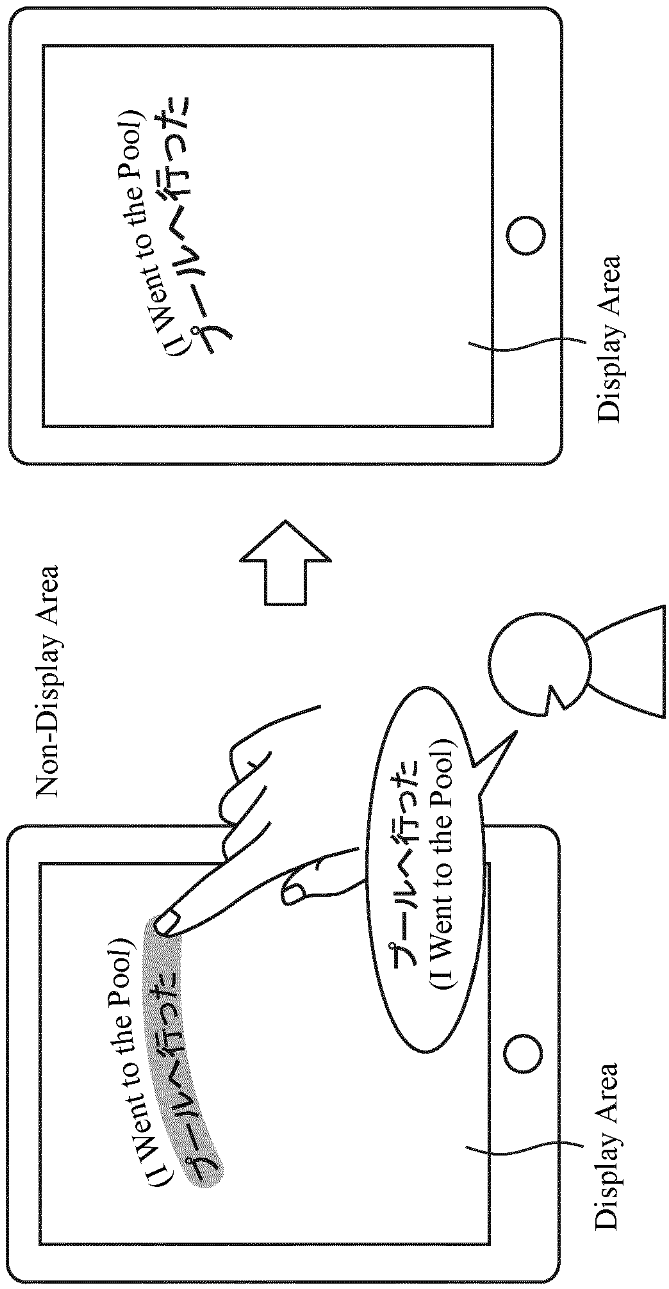
Non-Display Area
プールへ行った
(I Went to the Pool)
Display Area
プールへ行った
(I Went to the Pool)
プールへ行った
(I Went to the Pool)
Display Area

FIG. 31

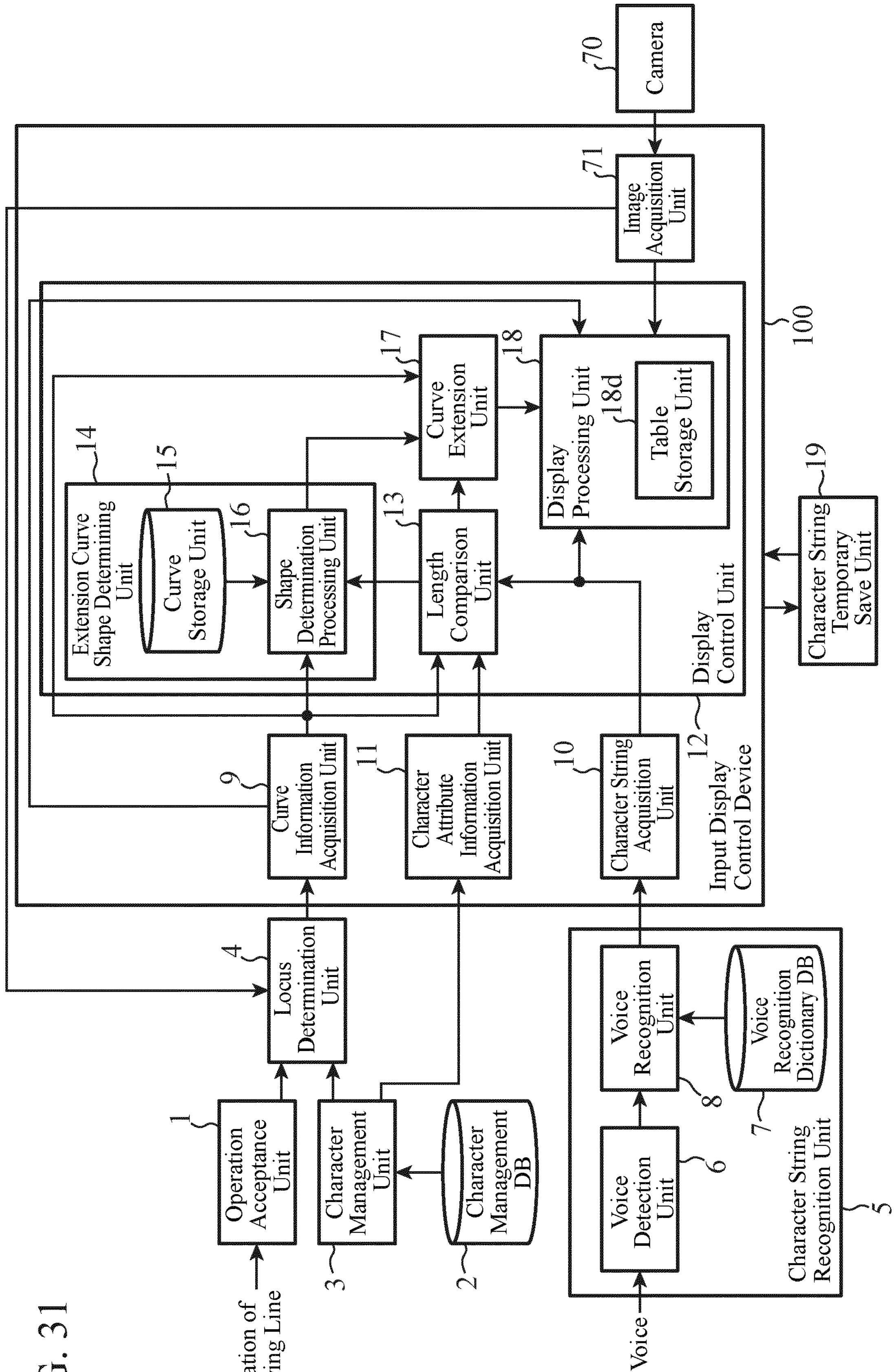

Camera
70
Image Acquisition Unit
71
100
Input Display Control Device
Display Control Unit
12
Extension Curve Shape Determining Unit
14
Curve Storage Unit
15
Shape Determination Processing Unit
16
Length Comparison Unit
13
Curve Extension Unit
17
Display Processing Unit
18
Table Storage Unit
18d
Character String Temporary Save Unit
19
Curve Information Acquisition Unit
9
Character Attribute Information Acquisition Unit
11
Character String Acquisition Unit
10
Locus Determination Unit
4
Operation Acceptance Unit
1
Operation of Drawing Line
Character Management Unit
3
Character Management DB
2
Voice Detection Unit
6
Voice Recognition Unit
8
Voice Recognition Dictionary DB
7
Character String Recognition Unit
5
Voice

FIG. 32

| Character String | Simplified Version |
|---|---|
| Went to Eat | Ate |
| Went Eating | |
| Ate | |
| Ramen | 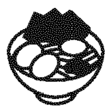 |

FIG. 33

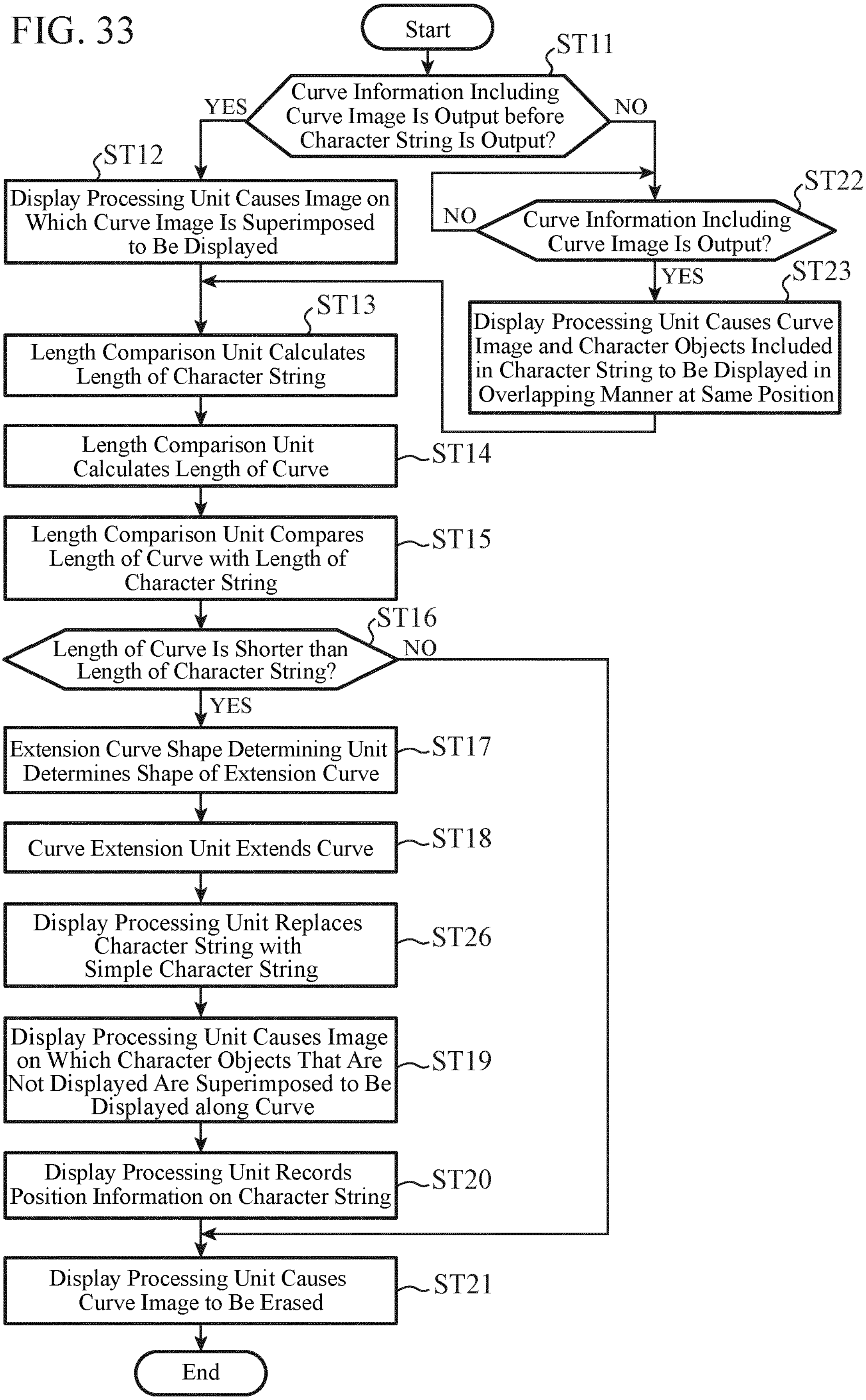
Start
ST11
Curve Information Including Curve Image Is Output before Character String Is Output?
YES
NO
ST12
Display Processing Unit Causes Image on Which Curve Image Is Superimposed to Be Displayed
ST22
NO
Curve Information Including Curve Image Is Output?
YES
ST23
Display Processing Unit Causes Curve Image and Character Objects Included in Character String to Be Displayed in Overlapping Manner at Same Position
ST13
Length Comparison Unit Calculates Length of Character String
Length Comparison Unit Calculates Length of Curve
ST14
Length Comparison Unit Compares Length of Curve with Length of Character String
ST15
ST16
Length of Curve Is Shorter than Length of Character String?
NO
YES
Extension Curve Shape Determining Unit Determines Shape of Extension Curve
ST17
Curve Extension Unit Extends Curve
ST18
Display Processing Unit Replaces Character String with Simple Character String
ST26
Display Processing Unit Causes Image on Which Character Objects That Are Not Displayed Are Superimposed to Be Displayed along Curve
ST19
Display Processing Unit Records Position Information on Character String
ST20
Display Processing Unit Causes Curve Image to Be Erased
ST21
End

# FIG. 34

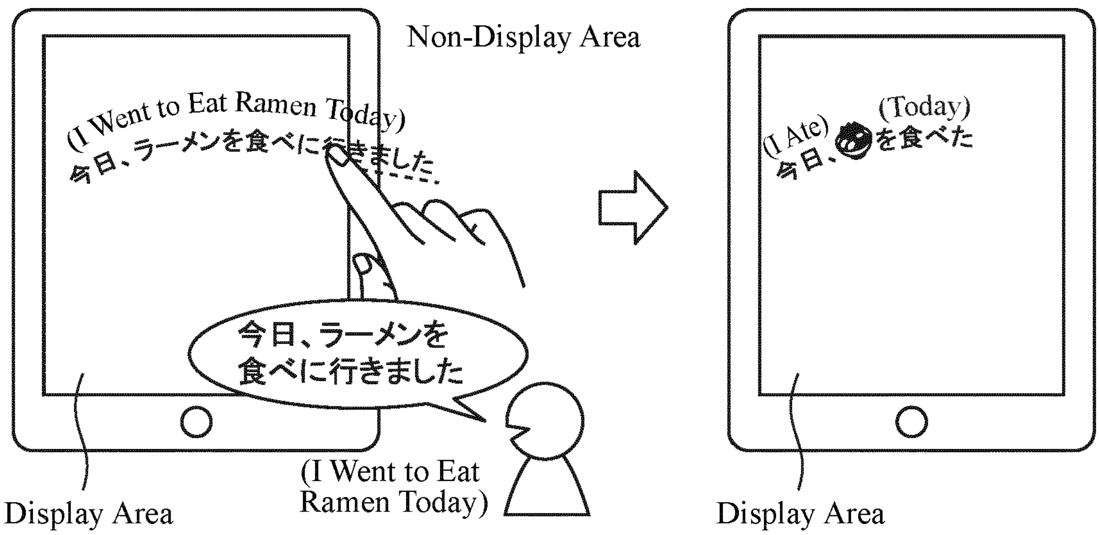
Non-Display Area
(I Went to Eat Ramen Today)
今日、ラーメンを食べに行きました
今日、ラーメンを食べに行きました
(I Went to Eat Ramen Today)
Display Area
(I Ate)
(Today)
今日、を食べた
Display Area

FIG. 35

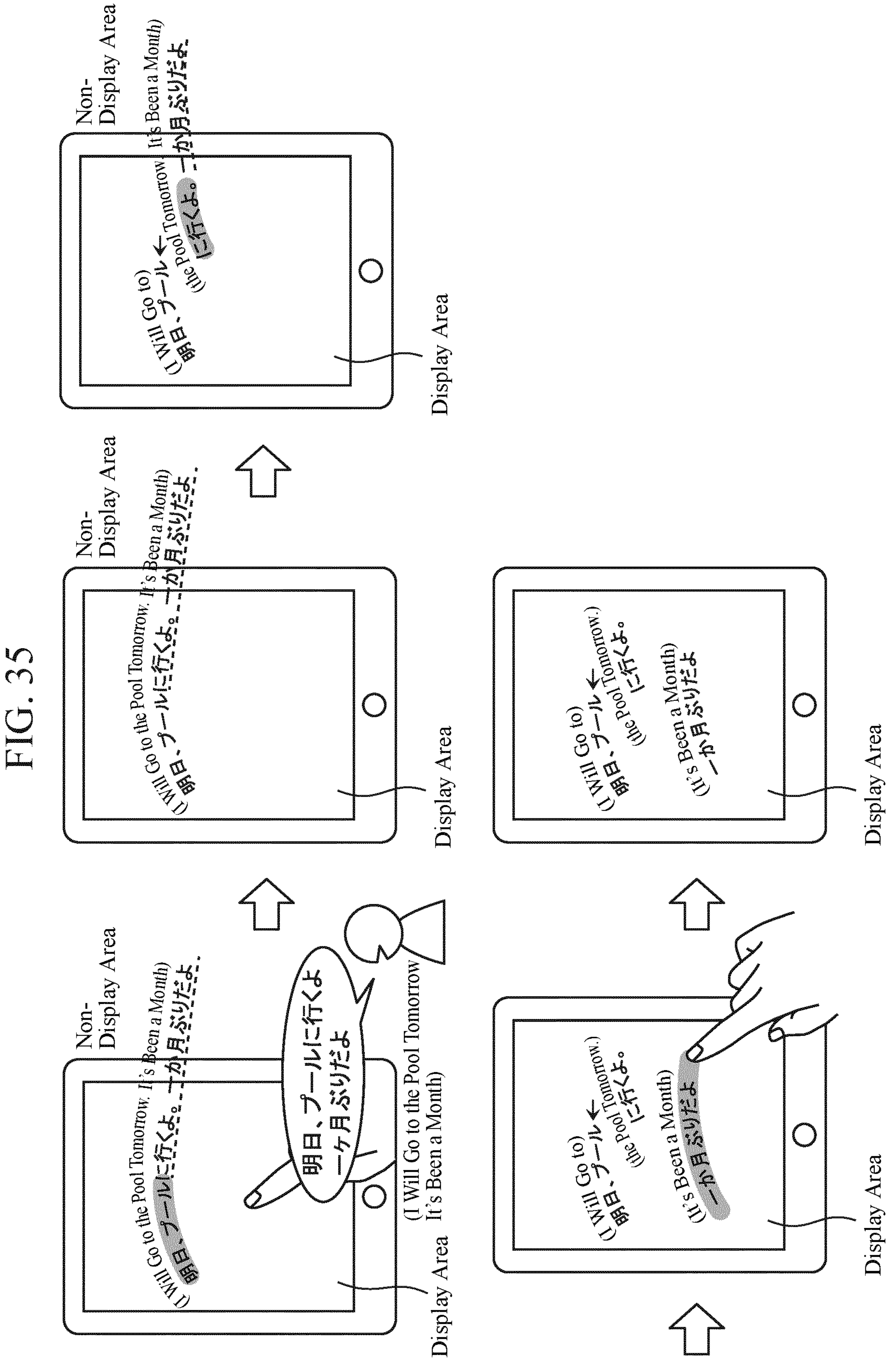
Non-Display Area
Display Area
(I Will Go to the Pool Tomorrow. It's Been a Month)
明日、プールに行くよ。一か月ぶりだよ
明日、プールに行くよ
一ヶ月ぶりだよ
(I Will Go to the Pool Tomorrow
It's Been a Month)
(I Will Go to)
明日、プール←
(the Pool Tomorrow)
に行くよ。
(It's Been a Month)
一か月ぶりだよ

FIG. 36

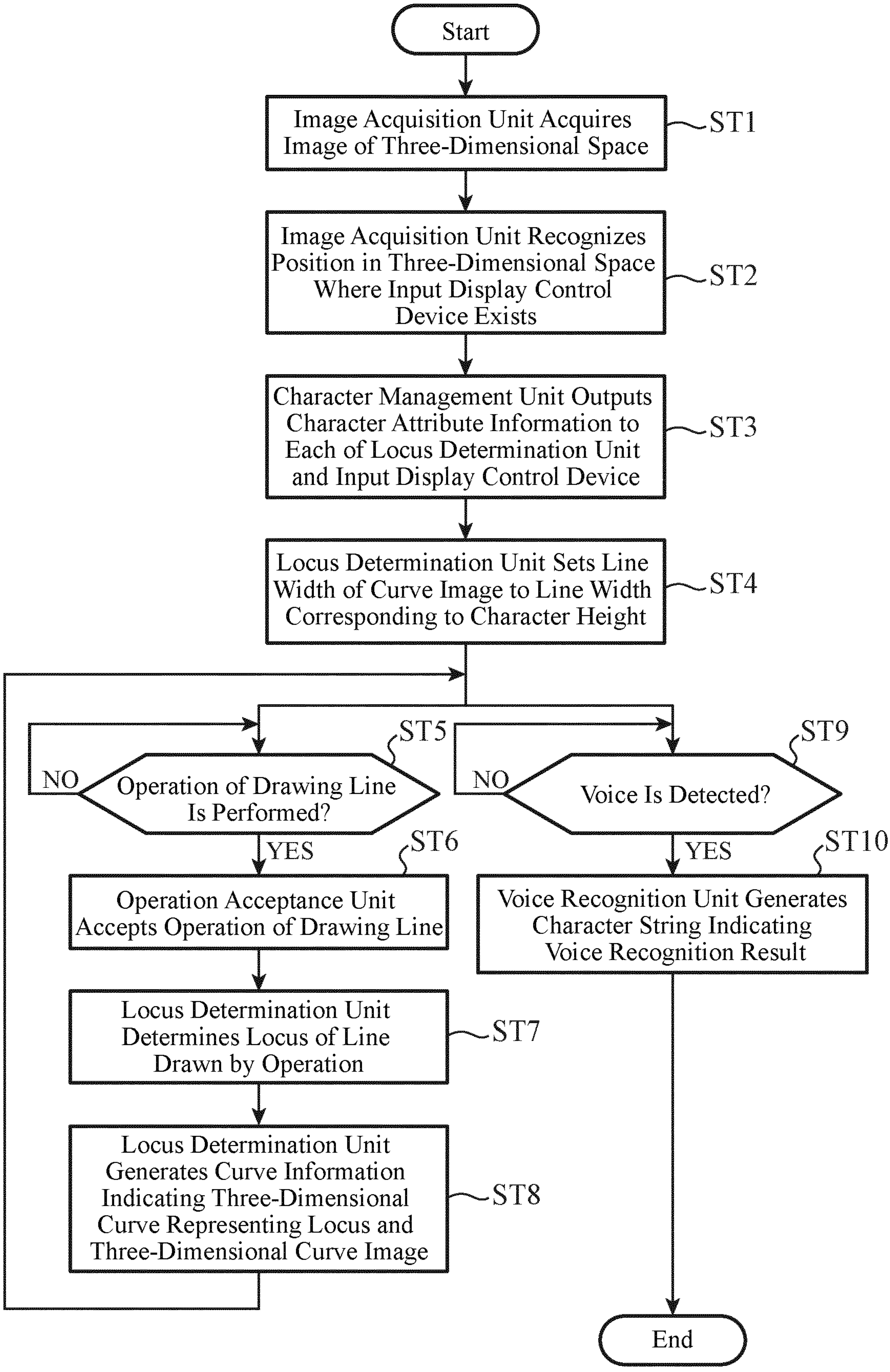
Start
Image Acquisition Unit Acquires Image of Three-Dimensional Space
ST1
Image Acquisition Unit Recognizes Position in Three-Dimensional Space Where Input Display Control Device Exists
ST2
Character Management Unit Outputs Character Attribute Information to Each of Locus Determination Unit and Input Display Control Device
ST3
Locus Determination Unit Sets Line Width of Curve Image to Line Width Corresponding to Character Height
ST4
ST5
Operation of Drawing Line Is Performed?
NO
YES
ST6
Operation Acceptance Unit Accepts Operation of Drawing Line
Locus Determination Unit Determines Locus of Line Drawn by Operation
ST7
Locus Determination Unit Generates Curve Information Indicating Three-Dimensional Curve Representing Locus and Three-Dimensional Curve Image
ST8
ST9
Voice Is Detected?
NO
YES
ST10
Voice Recognition Unit Generates Character String Indicating Voice Recognition Result
End

FIG. 37

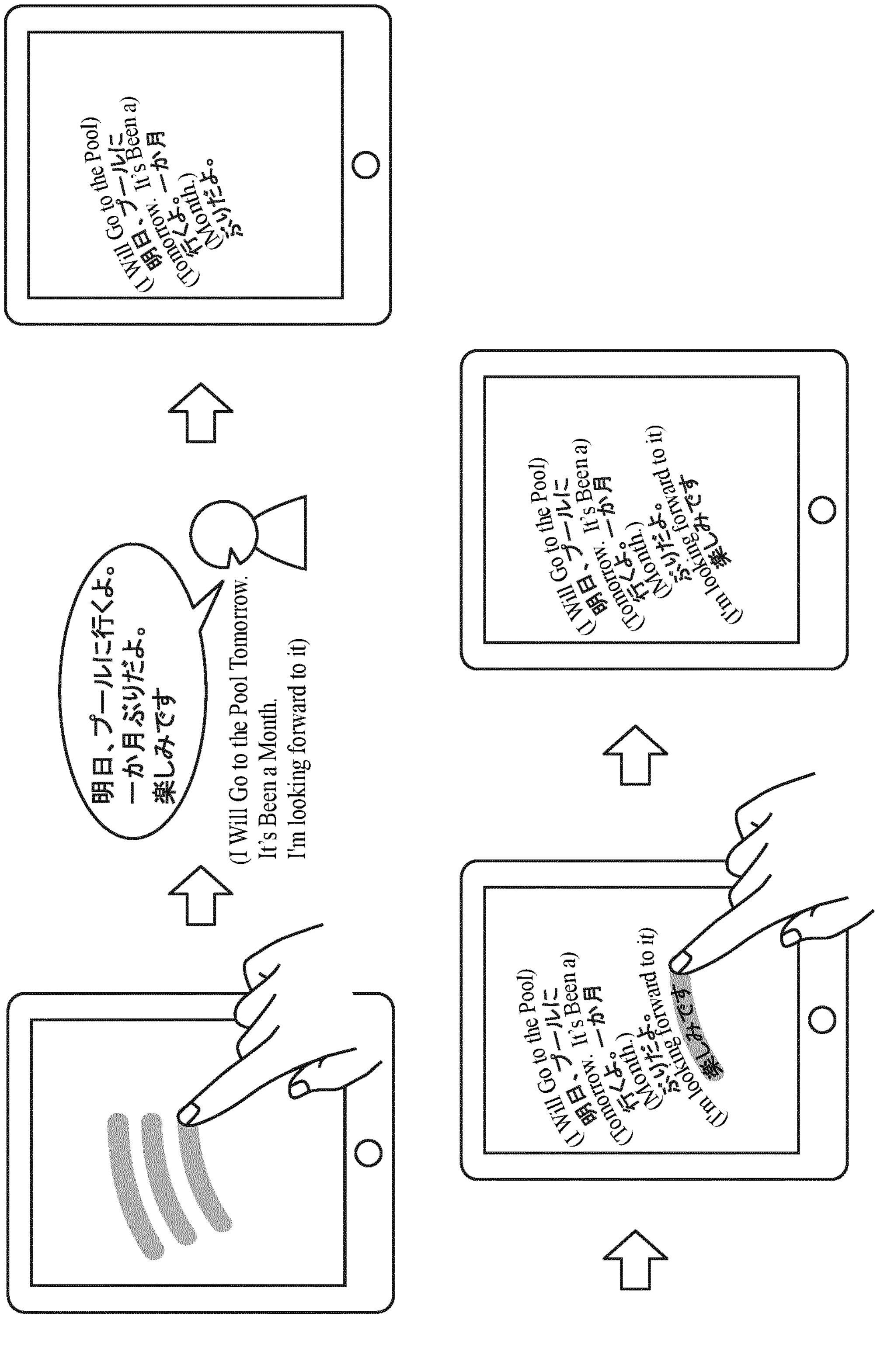
明日、プールに行くよ。
一か月ぶりだよ。
楽しみです
(I Will Go to the Pool Tomorrow.
It's Been a Month.
I'm looking forward to it)
明日、プールに
行くよ。一か月
ぶりだよ。
楽しみです
(I Will Go to the Pool)
(Tomorrow. It's Been a)
(Month.)
(I'm looking forward to it)

FIG. 38

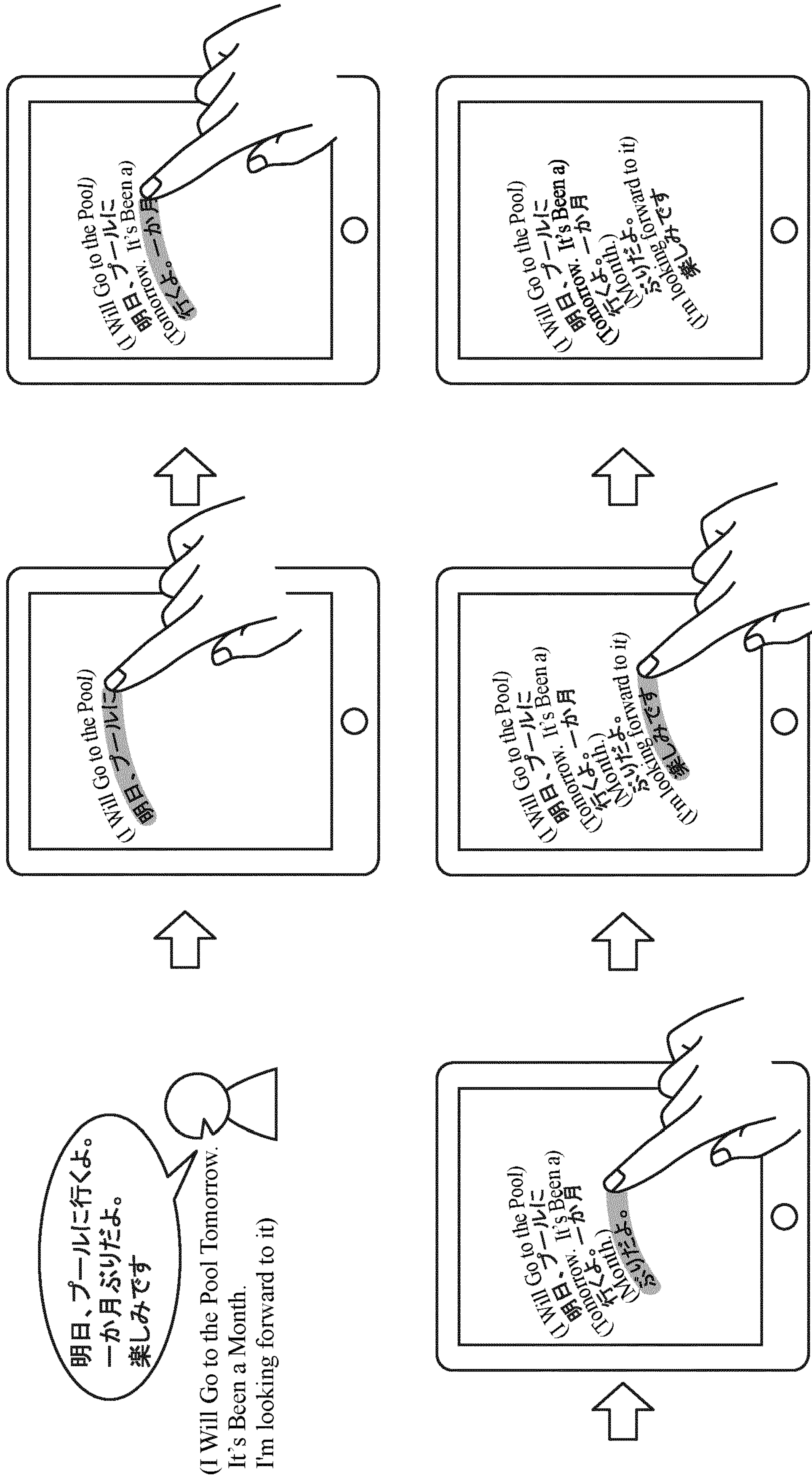
明日、プールに行くよ。
一か月ぶりだよ。
楽しみです
(I Will Go to the Pool Tomorrow.
It's Been a Month.
I'm looking forward to it)

FIG. 39

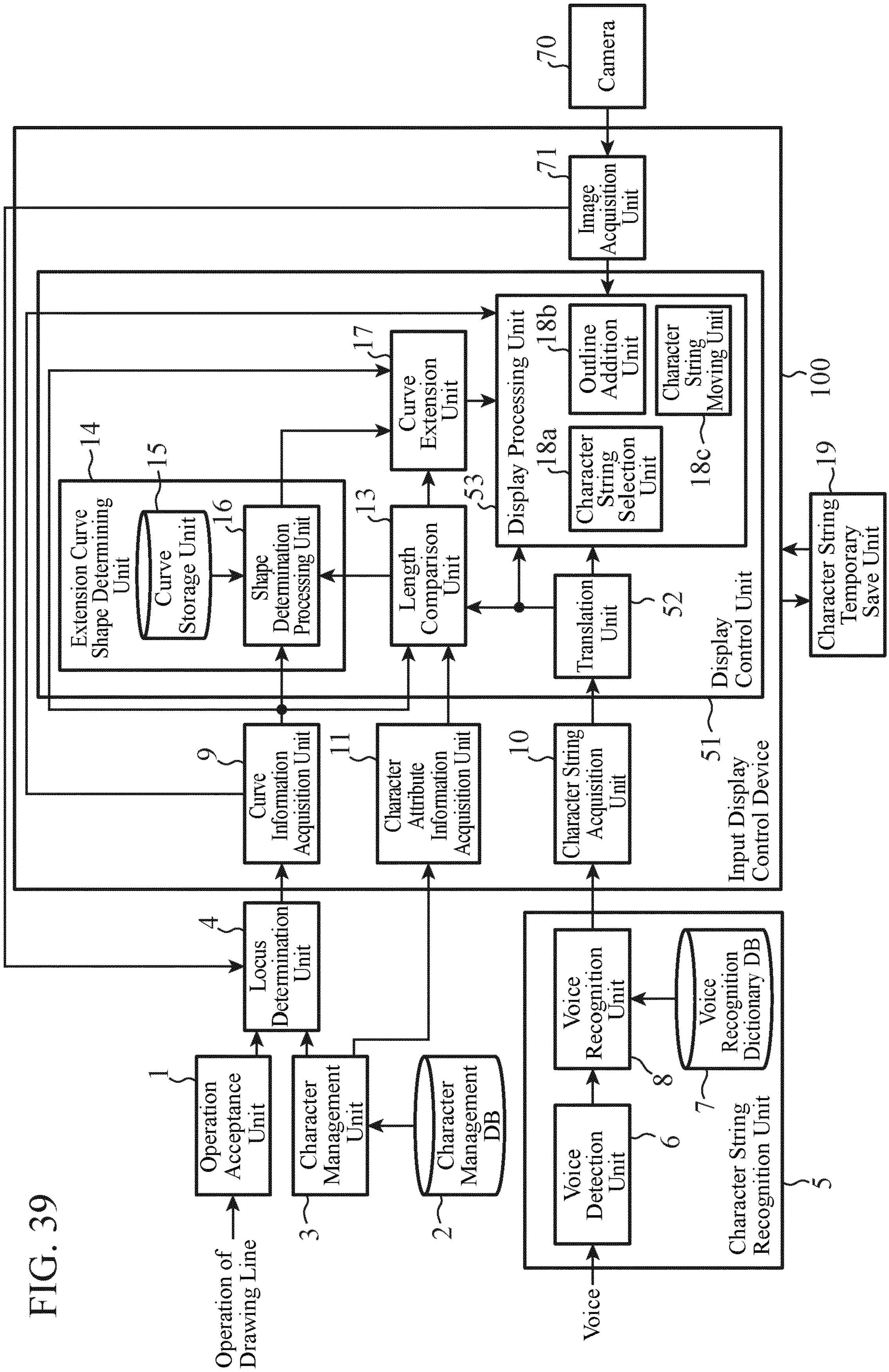
Operation of Drawing Line
Operation Acceptance Unit
1
Character Management Unit
3
Character Management DB
2
Locus Determination Unit
4
Voice
Voice Detection Unit
6
Voice Recognition Unit
8
Voice Recognition Dictionary DB
7
Character String Recognition Unit
5
Curve Information Acquisition Unit
9
Character Attribute Information Acquisition Unit
11
Character String Acquisition Unit
10
Input Display Control Device
51
Display Control Unit
Extension Curve Shape Determining Unit
14
Curve Storage Unit
15
Shape Determination Processing Unit
16
Length Comparison Unit
13
Curve Extension Unit
17
Translation Unit
52
Display Processing Unit
53
Character String Selection Unit
18a
Outline Addition Unit
18b
Character String Moving Unit
18c
Image Acquisition Unit
71
Camera
70
100
Character String Temporary Save Unit
19

FIG. 40

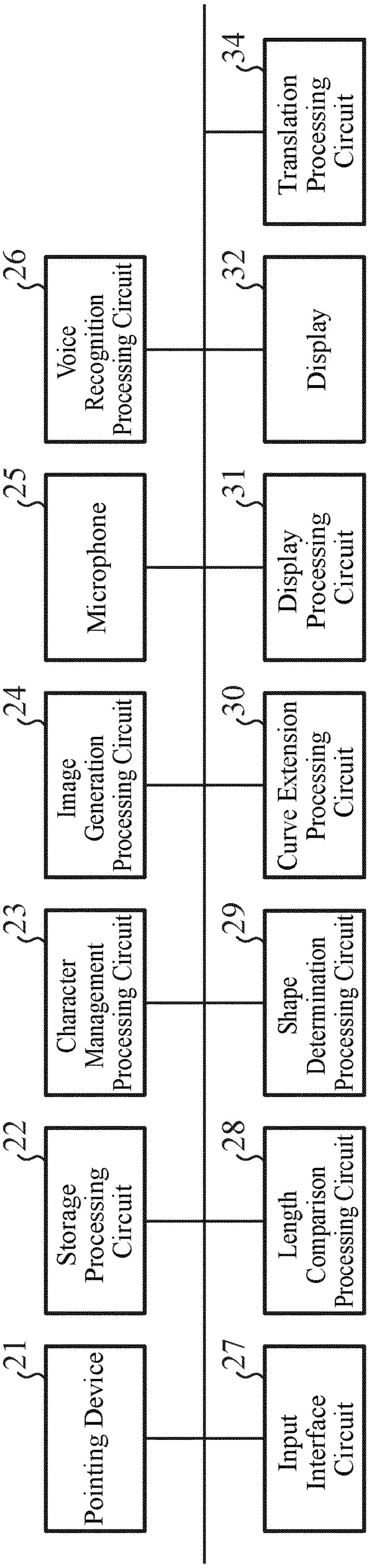
Pointing Device
21
Storage Processing Circuit
22
Character Management Processing Circuit
23
Image Generation Processing Circuit
24
Microphone
25
Voice Recognition Processing Circuit
26
Input Interface Circuit
27
Length Comparison Processing Circuit
28
Shape Determination Processing Circuit
29
Curve Extension Processing Circuit
30
Display Processing Circuit
31
Display
32
Translation Processing Circuit
34

FIG. 41

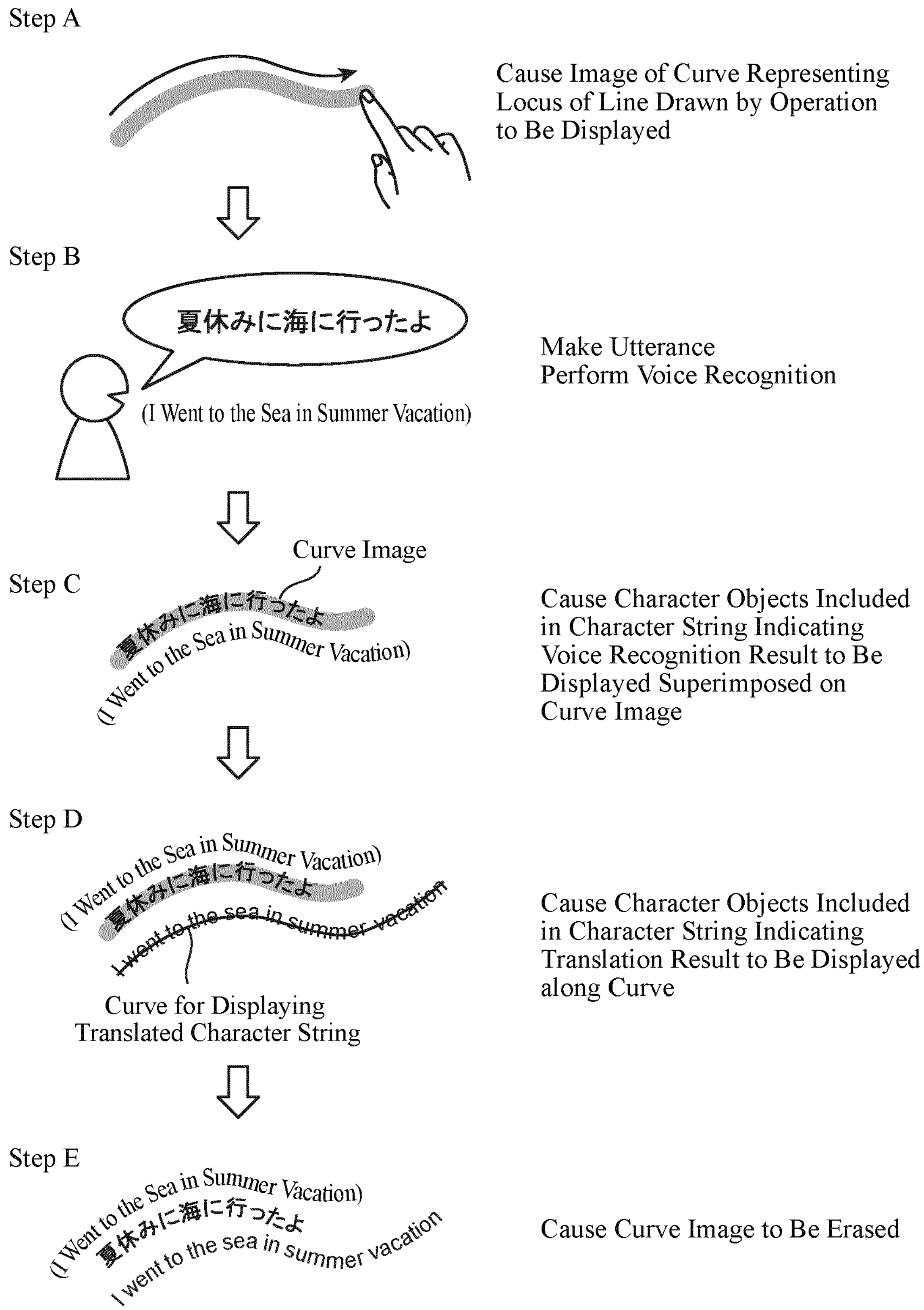
Step A
Cause Image of Curve Representing Locus of Line Drawn by Operation to Be Displayed
Step B
夏休みに海に行ったよ
(I Went to the Sea in Summer Vacation)
Make Utterance
Perform Voice Recognition
Curve Image
Step C
夏休みに海に行ったよ
(I Went to the Sea in Summer Vacation)
Cause Character Objects Included in Character String Indicating Voice Recognition Result to Be Displayed Superimposed on Curve Image
Step D
(I Went to the Sea in Summer Vacation)
夏休みに海に行ったよ
I went to the sea in summer vacation
Curve for Displaying Translated Character String
Cause Character Objects Included in Character String Indicating Translation Result to Be Displayed along Curve
Step E
(I Went to the Sea in Summer Vacation)
夏休みに海に行ったよ
I went to the sea in summer vacation
Cause Curve Image to Be Erased

FIG. 44

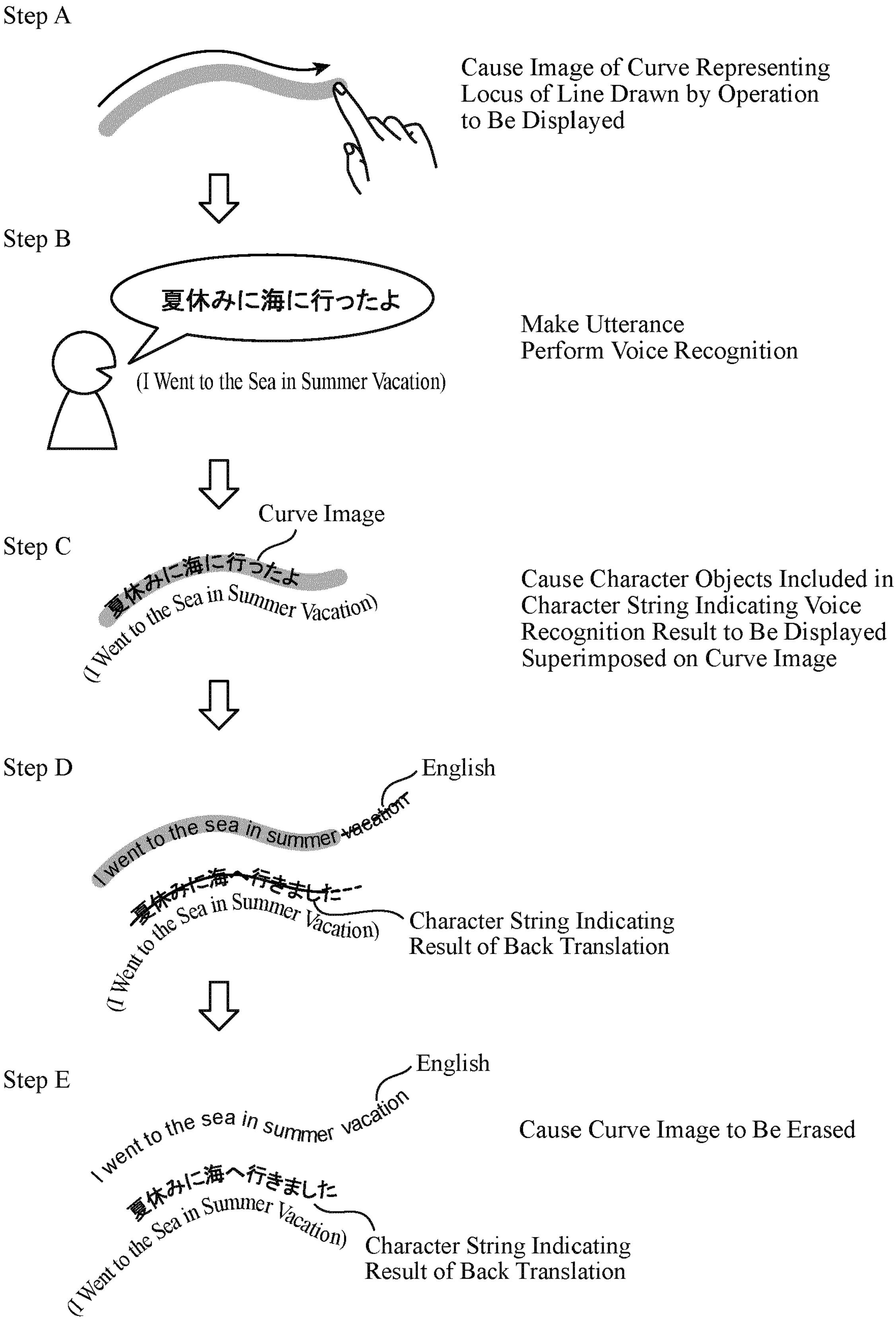
Step A
Cause Image of Curve Representing Locus of Line Drawn by Operation to Be Displayed
Step B
夏休みに海に行ったよ
(I Went to the Sea in Summer Vacation)
Make Utterance
Perform Voice Recognition
Step C
Curve Image
夏休みに海に行ったよ
(I Went to the Sea in Summer Vacation)
Cause Character Objects Included in Character String Indicating Voice Recognition Result to Be Displayed Superimposed on Curve Image
Step D
English
I went to the sea in summer vacation
夏休みに海へ行きました
(I Went to the Sea in Summer Vacation)
Character String Indicating Result of Back Translation
Step E
English
I went to the sea in summer vacation
Cause Curve Image to Be Erased
夏休みに海へ行きました
(I Went to the Sea in Summer Vacation)
Character String Indicating Result of Back Translation

FIG. 43

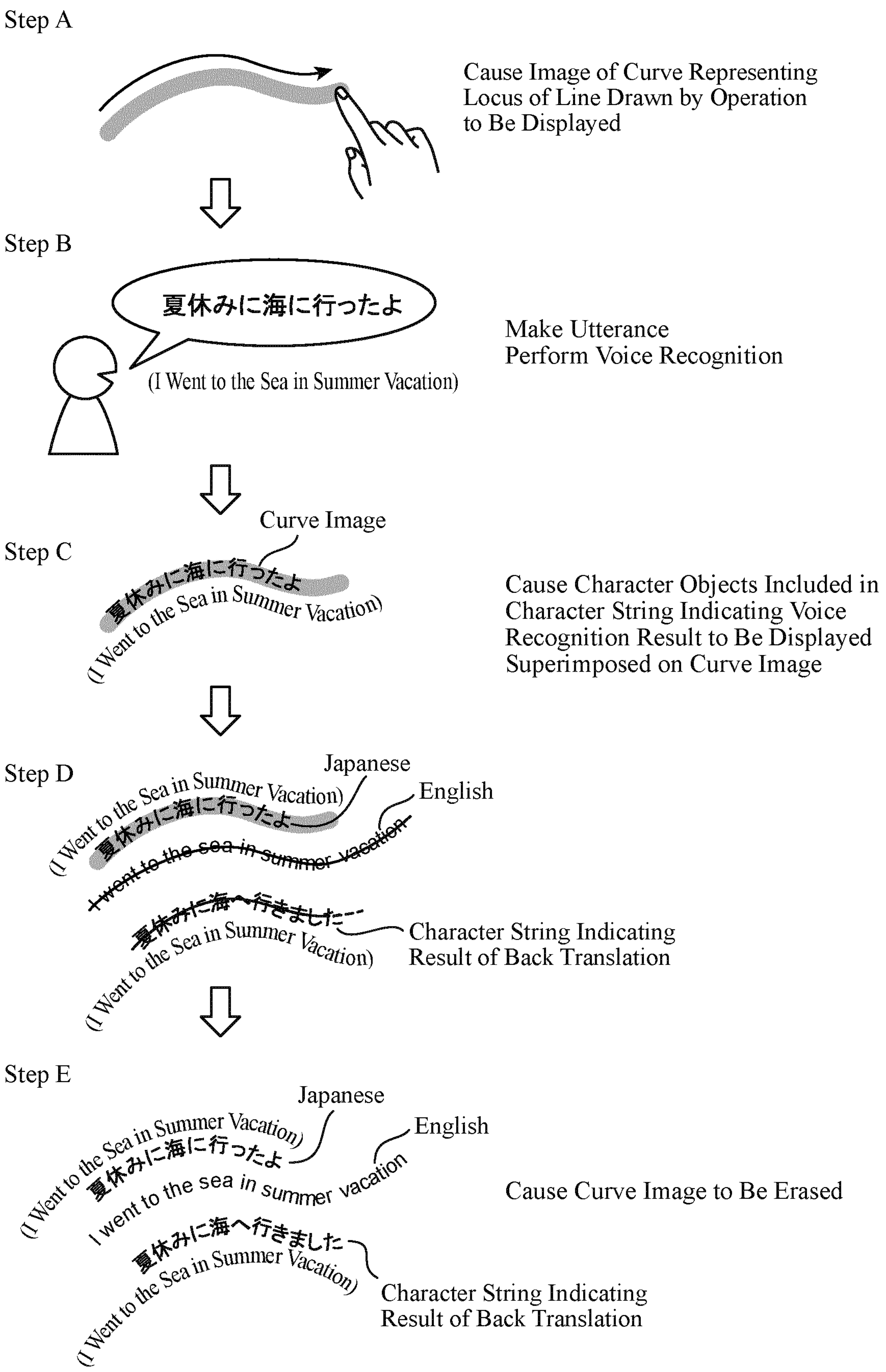
Step A
Cause Image of Curve Representing Locus of Line Drawn by Operation to Be Displayed
Step B
夏休みに海に行ったよ
(I Went to the Sea in Summer Vacation)
Make Utterance
Perform Voice Recognition
Step C
Curve Image
夏休みに海に行ったよ
(I Went to the Sea in Summer Vacation)
Cause Character Objects Included in Character String Indicating Voice Recognition Result to Be Displayed Superimposed on Curve Image
Step D
Japanese
English
(I Went to the Sea in Summer Vacation)
夏休みに海に行ったよ
I went to the sea in summer vacation
夏休みに海へ行きました
(I Went to the Sea in Summer Vacation)
Character String Indicating Result of Back Translation
Step E
Japanese
English
(I Went to the Sea in Summer Vacation)
夏休みに海に行ったよ
I went to the sea in summer vacation
夏休みに海へ行きました
(I Went to the Sea in Summer Vacation)
Cause Curve Image to Be Erased
Character String Indicating Result of Back Translation

FIG. 46

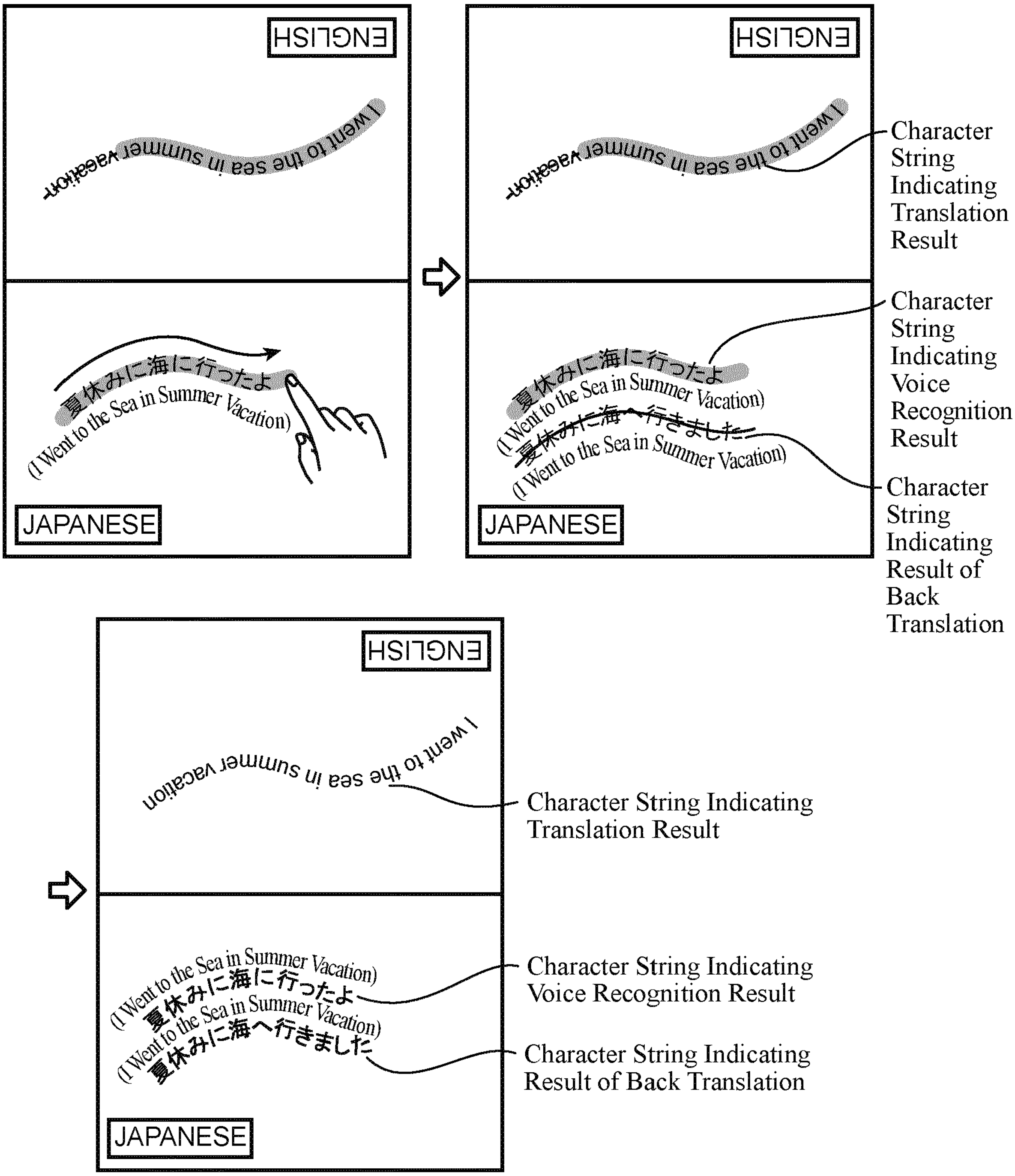
ENGLISH
I went to the sea in summer vacation
JAPANESE
夏休みに海に行ったよ
(I Went to the Sea in Summer Vacation)
夏休みに海へ行きました
Character String Indicating Translation Result
Character String Indicating Voice Recognition Result
Character String Indicating Result of Back Translation

FIG. 45

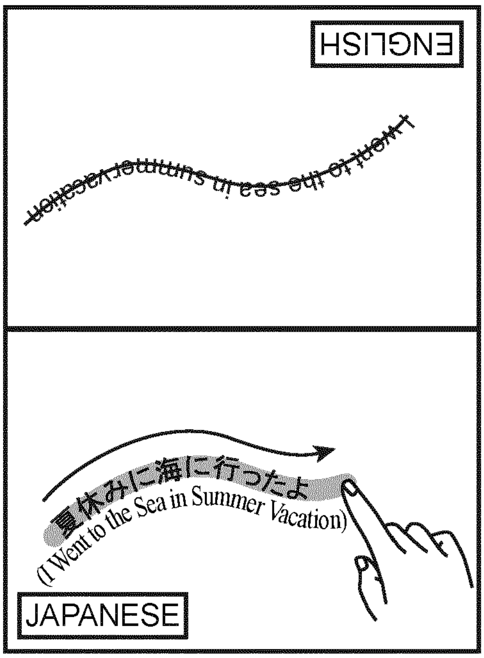
ENGLISH
I went to the sea in summer vacation
夏休みに海に行ったよ
(I Went to the Sea in Summer Vacation)
JAPANESE

FIG. 46

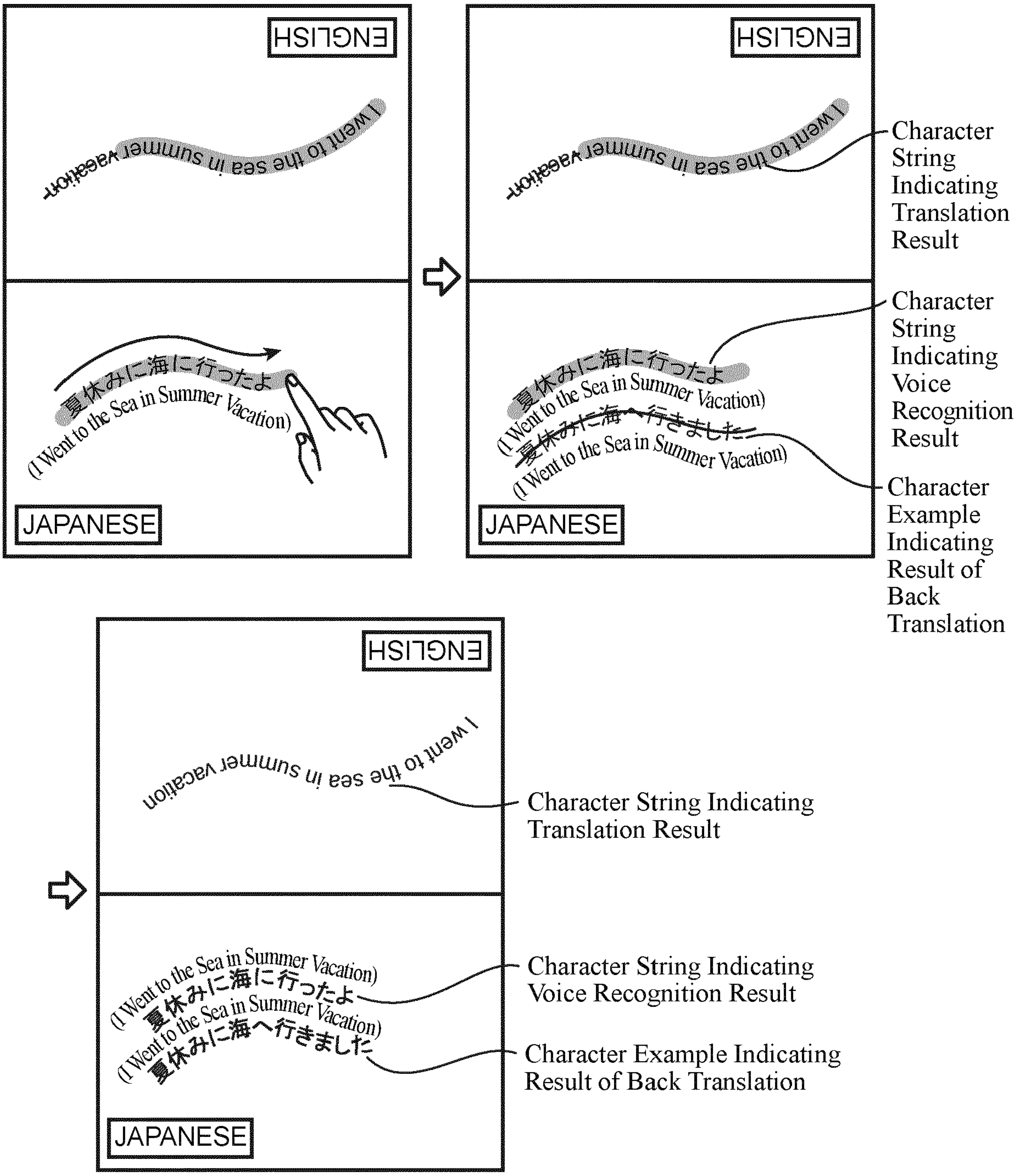
ENGLISH
I went to the sea in summer vacation
夏休みに海に行ったよ
(I Went to the Sea in Summer Vacation)
JAPANESE
Character String Indicating Translation Result
Character String Indicating Voice Recognition Result
夏休みに海へ行きました
Character Example Indicating Result of Back Translation

FIG. 47

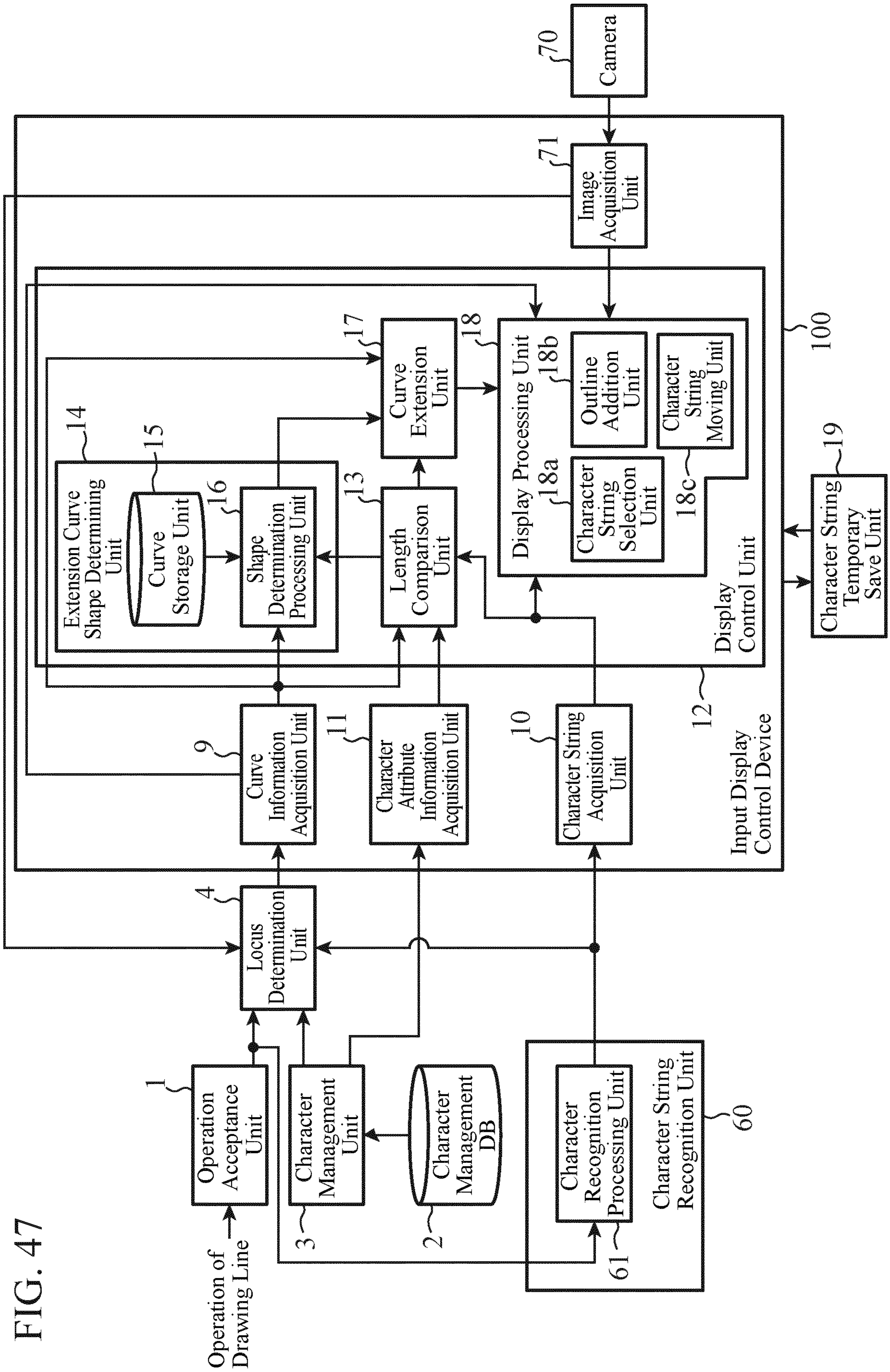
Operation of Drawing Line
1 Operation Acceptance Unit
2 Character Management DB
3 Character Management Unit
4 Locus Determination Unit
9 Curve Information Acquisition Unit
11 Character Attribute Information Acquisition Unit
10 Character String Acquisition Unit
12 Display Control Unit
13 Length Comparison Unit
14 Extension Curve Shape Determining Unit
15 Curve Storage Unit
16 Shape Determination Processing Unit
17 Curve Extension Unit
18 Display Processing Unit
18a Character String Selection Unit
18b Outline Addition Unit
18c Character String Moving Unit
19 Character String Temporary Save Unit
100 Input Display Control Device
60 Character String Recognition Unit
61 Character Recognition Processing Unit
70 Camera
71 Image Acquisition Unit

FIG. 48

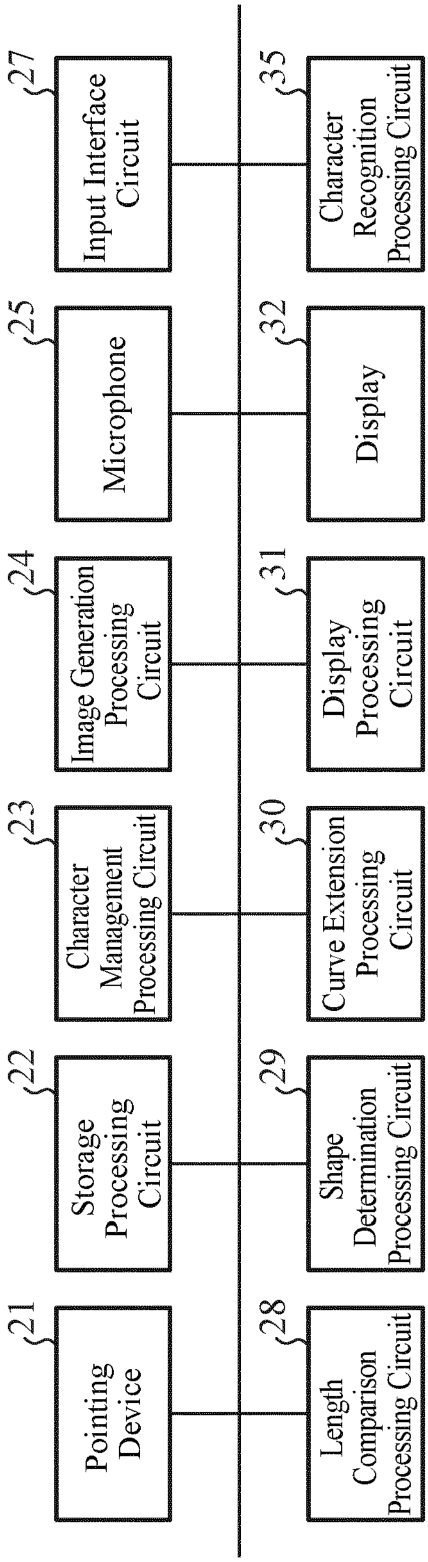

21
Pointing Device
22
Storage Processing Circuit
23
Character Management Processing Circuit
24
Image Generation Processing Circuit
25
Microphone
27
Input Interface Circuit
28
Length Comparison Processing Circuit
29
Shape Determination Processing Circuit
30
Curve Extension Processing Circuit
31
Display Processing Circuit
32
Display
35
Character Recognition Processing Circuit

FIG. 49

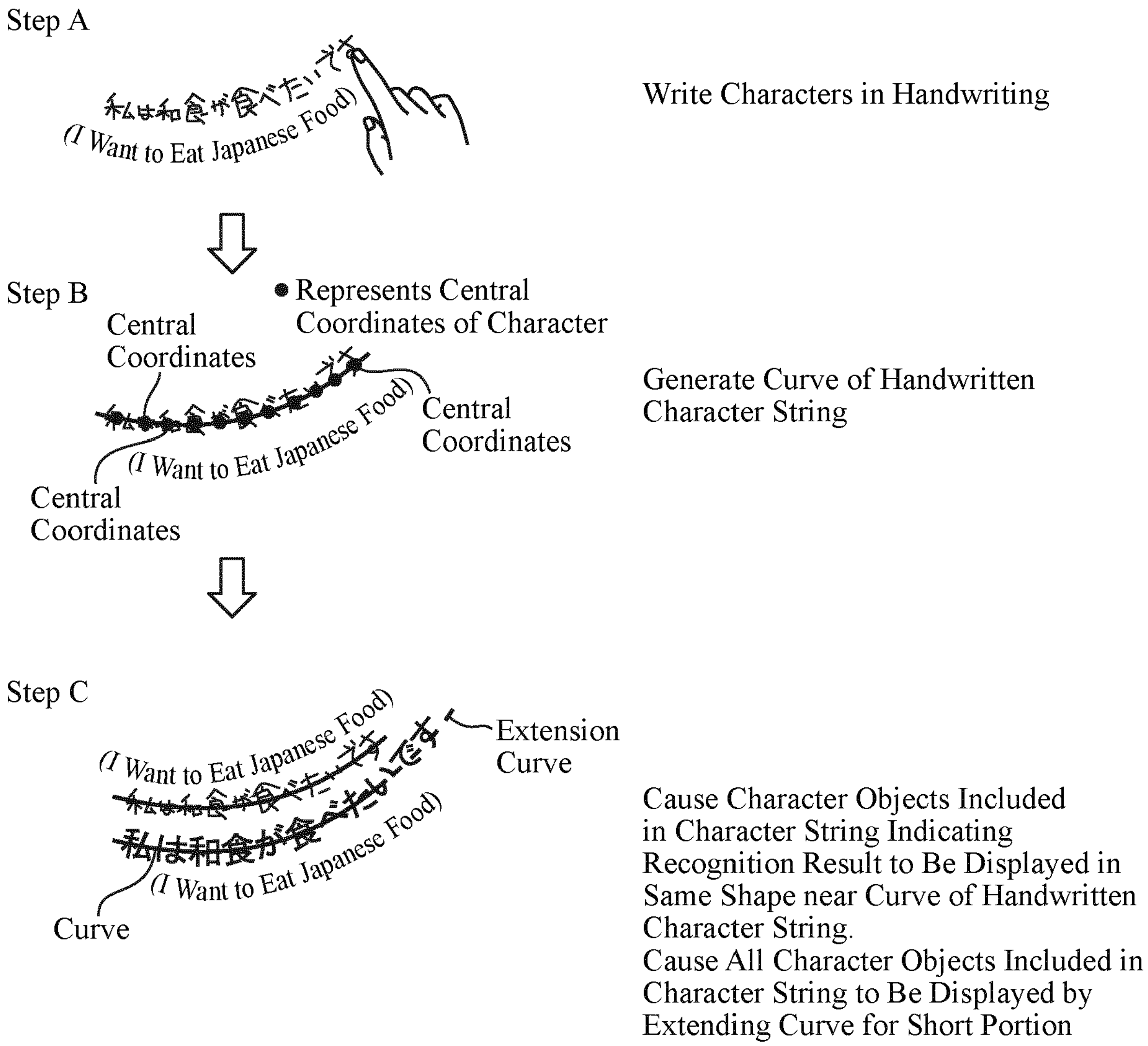
Step A
(I Want to Eat Japanese Food)
Write Characters in Handwriting
Step B
● Represents Central Coordinates of Character
Central Coordinates
Central Coordinates
(I Want to Eat Japanese Food)
Central Coordinates
Generate Curve of Handwritten Character String
Step C
(I Want to Eat Japanese Food)
Extension Curve
(I Want to Eat Japanese Food)
Curve
Cause Character Objects Included in Character String Indicating Recognition Result to Be Displayed in Same Shape near Curve of Handwritten Character String.
Cause All Character Objects Included in Character String to Be Displayed by Extending Curve for Short Portion

FIG. 50

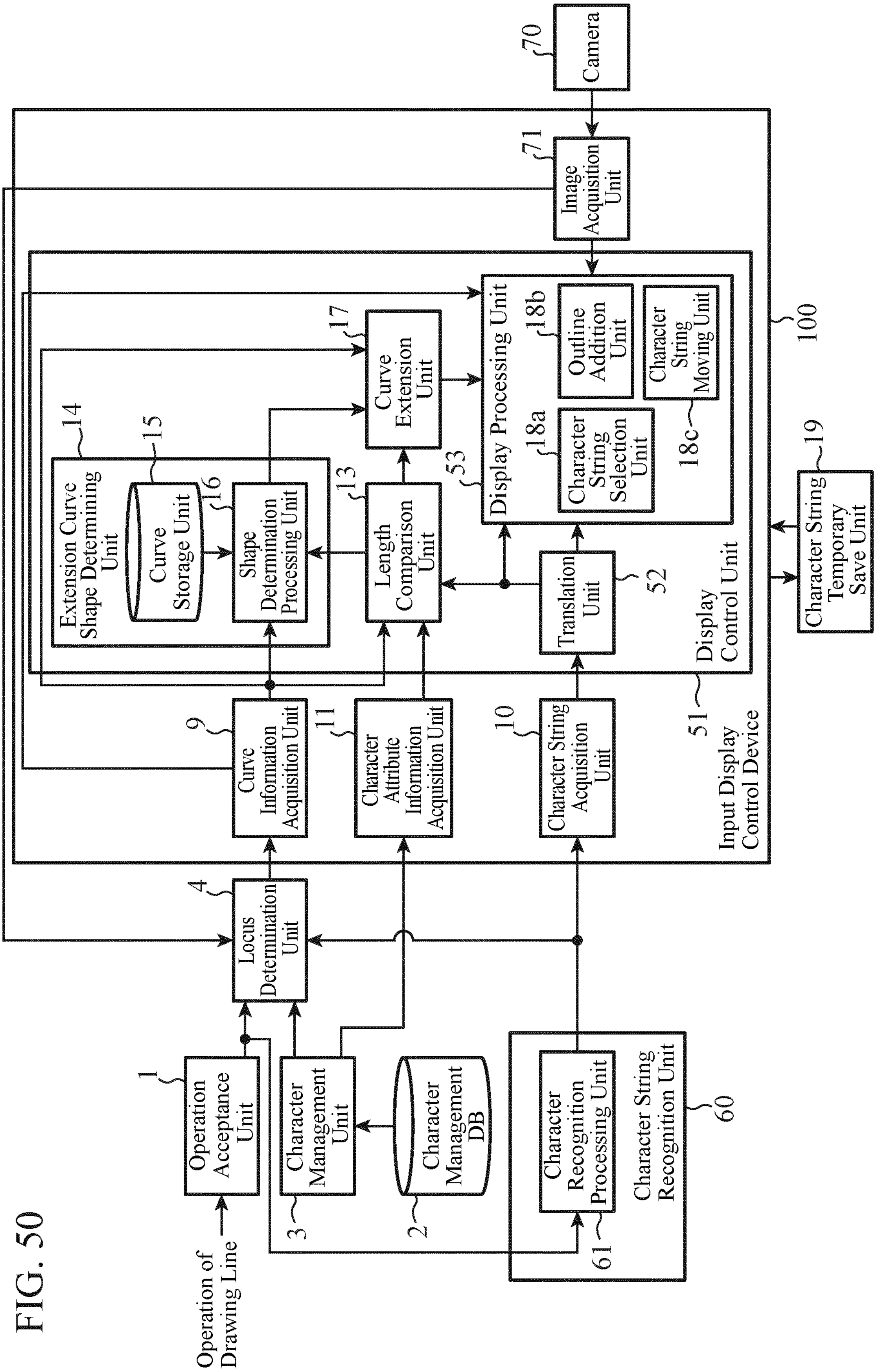
Operation of Drawing Line
Operation Acceptance Unit
1
Character Management Unit
3
Character Management DB
2
Locus Determination Unit
4
Character Recognition Processing Unit
61
Character String Recognition Unit
60
Curve Information Acquisition Unit
9
Character Attribute Information Acquisition Unit
11
Character String Acquisition Unit
10
Input Display Control Device
51
Display Control Unit
Extension Curve Shape Determining Unit
14
Curve Storage Unit
15
Shape Determination Processing Unit
16
Length Comparison Unit
13
Curve Extension Unit
17
Translation Unit
52
Display Processing Unit
53
Character String Selection Unit
18a
Outline Addition Unit
18b
Character String Moving Unit
18c
Image Acquisition Unit
71
Camera
70
100
Character String Temporary Save Unit
19

FIG. 51

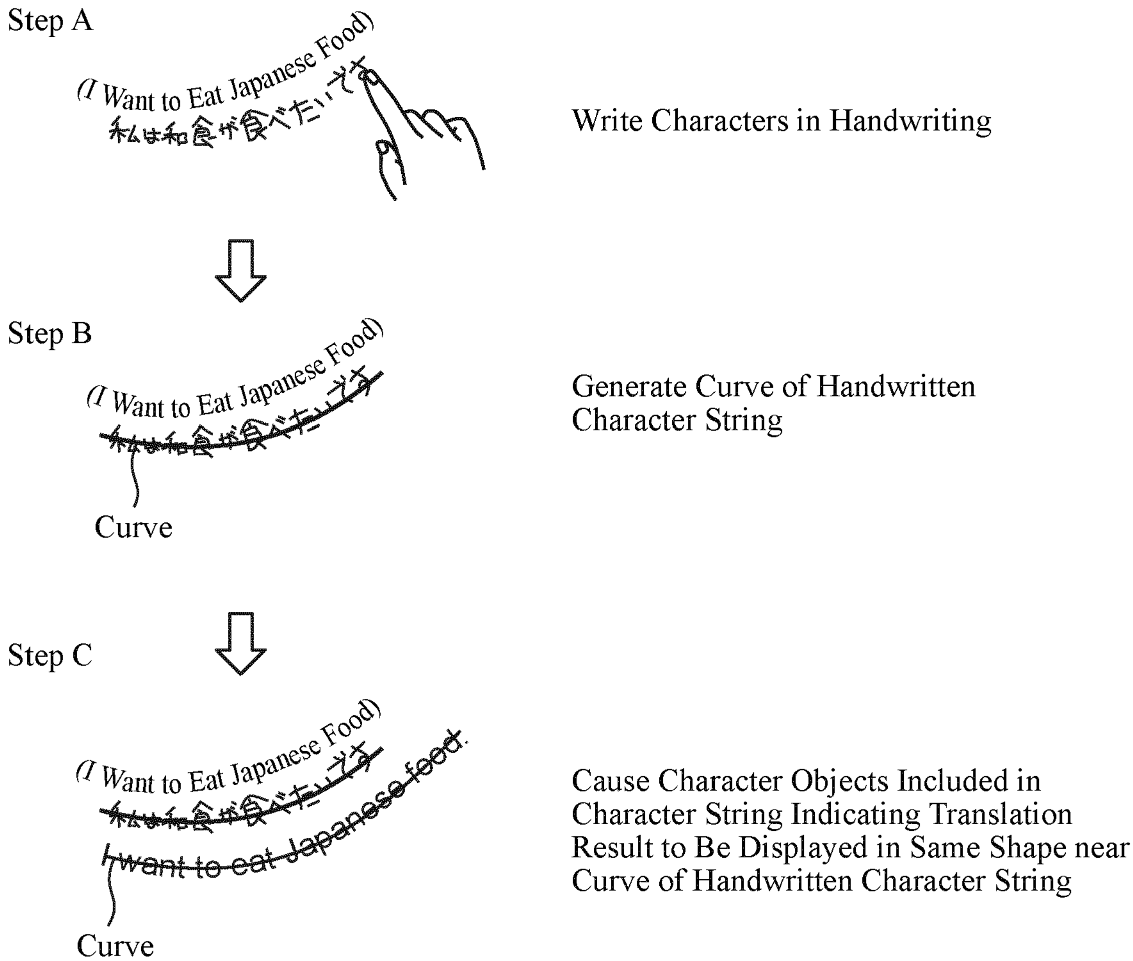
Step A
(I Want to Eat Japanese Food)
私は和食が食べたいです
Write Characters in Handwriting
Step B
(I Want to Eat Japanese Food)
私は和食が食べたいです
Curve
Generate Curve of Handwritten Character String
Step C
(I Want to Eat Japanese Food)
私は和食が食べたいです
I want to eat Japanese food.
Curve
Cause Character Objects Included in Character String Indicating Translation Result to Be Displayed in Same Shape near Curve of Handwritten Character String

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017138076 A
- EP 3407173 A1
- WO 2016203792 A1